# EUROPEAN PATENT SPECIFICATION

(11) **EP 1 882 607 B1**
(45) Date of publication and mention of the grant of the patent: **11.01.2012**
(21) Application number: 07014539.6
(22) Date of filing: 24.07.2007
(51) Int. Cl.: B60L 11/12

(54) **Straddle-type vehicle**
Grätschsitz-Fahrzeug
Véhicule avec une selle

(30) Priority: 25.07.2006 JP 2006201857; 10.08.2006 JP 2006217915; 11.08.2006 JP 2006219675
(43) Date of publication of application: 30.01.2008
(73) Proprietor: Yamaha Hatsudoki Kabushiki Kaisha, Shizuoka-ken Shizuoka 438-8501 (JP)
(72) Inventor: Tanaka, Hiroshi, Iwata-shi, Shizuoka-ken 438-8501 (JP); Shirazawa, Hideki, Iwata-shi, Shizuoka-ken 438-8501 (JP); Suzuki, Hideaki, Iwata-shi, Shizuoka-ken 438-8501 (JP)
(74) Representative: Grünecker, Kinkeldey, Stockmair & Schwanhäusser

(56) References cited:
- EP-A- 1 342 610
- EP-A- 1 529 672
- US-A1- 2001 020 789

## Description

The present invention relates to a straddle-type vehicle, and in particular to a hybrid motorcycle, run by power from an engine and auxiliary power from a motor and provided with an automatic centrifugal clutch interposed in a power transmission system between the engine and a driving wheel, and to a method to operate such vehicle.

A conventional hybrid vehicle run by power from an engine and auxiliary power from an electric motor is disclosed in, for example, Patent Document 1. The (electric) motor of the vehicle disclosed in Patent Document 1 is connected to a crankshaft of the engine, and the operation of the motor is controlled by a control device. The auxiliary power from the (electric) motor and the power from the engine are added at the crankshaft, and transmitted to a driving wheel as a resultant force. A power transmission system between the engine and the driving wheel includes a manually operable clutch.

The vehicle disclosed in Patent Document 1 is run primarily by the power from the engine, to which the power from the motor is added, when the vehicle starts running, in order to increase the driving force. The control device for controlling the operation of the motor rotates the motor to generate a predetermined torque when predetermined starting conditions are satisfied. One of the starting conditions for this vehicle is that the clutch mentioned above is engaged.

This vehicle uses a clutch switch to detect whether or not the clutch is engaged. In general, in vehicles such as automobiles, a clutch is disengaged when the operator presses a clutch pedal, and the clutch switch detects displacement of the clutch pedal, or a detection element integrated with the clutch pedal.
Patent Document 1: JP-A-2000-287306

There might be provided a scooter-type hybrid motorcycle utilizing the conventional technique for hybrid vehicles described above.

However, the scooter-type motorcycle is provided with an automatic centrifugal clutch, rather than a manually operable clutch, in the power transmission system between the engine and the rear wheel, and thus it has not been easy to realize a scooter-type hybrid motorcycle.

Different from the engine, the (electric) motor generates a large torque at relatively low speed. Thus, if the clutch is not completely engaged when applying auxiliary power from the motor when the motorcycle starts running, transmission of this large torque causes friction members in the clutch to slip, which makes it impossible for the motorcycle to start running. That is, if it is not possible to accurately detect the timing at which the automatic centrifugal clutch is completely engaged, that would be a problem in realizing a scooter-type hybrid motorcycle.

The clutch switch used in Patent Document 1 mentioned above merely detects displacement of a manually operable member, and thus cannot detect the timing when the automatic centrifugal clutch is completely engaged. Even if the clutch switch could detect the engagement completion timing of the automatic centrifugal clutch, providing such a clutch switch would increase the cost, and if the clutch switch broke down, auxiliary power could not even be generated.

Prior art document US 2001/020789 A1 teaches a parallel hybrid vehicle employing a parallel hybrid system using both an internal combustion engine and an electric motor/generator for propulsion, wherein a direct-coupling clutch is provided via which the engine and the motor/generator are coupled with each other. Said direct-coupling clutch is part of a differential system used to provide connection to the input side of a transmission of the vehicle. In order to control said clutch, pressurized oil produced by an oil pump is supplied via a hydraulic pressure line to the differential clutch in order to engage or disengage the direct-coupling clutch. The motor/generator and the direct-coupling clutch are controlled based on engine speed of the internal combustion engine, the motor/generator speed, and a throttle opening amount of the throttle valve of the internal combustion engine. Hence, the motor/generator and the direct-coupling clutch are controlled in parallel with regard to a signal which correlates with an acceleration request of the vehicle.

The further prior art documents EP 1 342 610 A2 teaches a vehicle powertrain that includes an internal combustion engine being adapted to drive main drive wheels and an electric motor provided to drive sub-drive wheels so that a four-wheel drive mode can be provided. Said electric motor can be connected to the sub-drive wheels by means of a clutch being controlled with regard to several operating parameters. Obviously, said further prior art document does not teach an electric motor connected to a crankshaft of the engine and also does not teach an automatic centrifugal clutch. Furthermore, said prior art document is completely silent about a straddle-type vehicle like that of the present invention. Hence, said further prior art document cannot given any additional hint in view of the subject matter of the independent claims as on file.

The present invention has been made to solve the foregoing problems, and therefore has an object to provide a straddle-type vehicle, in particular a hybrid motorcycle, run by power from an engine and auxiliary power from a motor and provided with an automatic centrifugal clutch interposed in a power transmission system between the engine and a driving wheel and a method to operate such vehicle with excellent start and acceleration performance, in spite of including an automatic centrifugal clutch, and to provide an improved method to operate such vehicle.

For the apparatus aspect, this objective is solved in an inventive manner by a straddle-type vehicle having hybrid drive system, in particular hybrid motorcycle, with internal combustion engine for generating power to drive the vehicle, an electric motor connected to a crankshaft of the engine and generating auxiliary power, with an automatic centrifugal clutch interposed in a power transmission system between the engine and a driving wheel, and with an acceleration data acquisition means configured to acquire an accelerator operation amount, wherein a motor control means is configured to supply the motor at a timing and with a magnitude of electricity in accordance with the detected accelerator operation amount such that the auxiliary power from the motor is applied to the automatic centrifugal clutch only with the clutch completely engaged.

Preferably, the electric motor for generating auxiliary power connected to a crankshaft of the engine has a power generation function and also is supplied with electricity from a battery to rotate.

Further, preferably the accelerator data acquisition means is configured for acquiring as acceleration data at least the accelerator operation amount of an accelerator operating element, and wherein a delay time setting means is provided for setting a delay time, by which start of operation of the motor is delayed, according to the acceleration data acquired by the acceleration data acquisition means, and wherein the motor control means is configured for supplying the motor with a magnitude of electricity in accordance with the acceleration data after the delay time has elapsed from a moment when the accelerator operating element in an idling state was operated.

Still further, preferably the acceleration data acquisition means acquires the accelerator operation amount and an accelerator operation speed as the acceleration data, and the delay time setting means is configured to use a longer one of a first delay time and a second delay time, the first delay time being obtained based on the accelerator operation amount acquired by the acceleration data acquisition means, and the second delay time being obtained based on the accelerator operation speed acquired by the acceleration data acquisition means.

Yet further still, preferably the acceleration data acquisition means is configured for acquiring as acceleration data at least an accelerator operation amount of an accelerator operating element, and wherein a rotational speed detection means is provided for detecting a rotational speed of the crankshaft or a rotary body for rotation in sync with the crankshaft, and wherein a rotational speed estimation means is provided for estimating an engagement completion rotational speed, which is a rotational speed at which the automatic centrifugal clutch is completely engaged, according to the acceleration data acquired by the acceleration data acquisition means, and wherein the motor control means is configured for supplying the motor with a magnitude of electricity in accordance with the acceleration data when the rotational speed detected by the rotational speed detection means has reached the engagement completion rotational speed estimated by the rotational speed estimation means.

Preferably, the acceleration data acquisition means is configured to acquire the accelerator operation amount and an accelerator operation speed as the acceleration data, and the rotational speed estimation means is configured to estimate the engagement completion rotational speed based on a higher one of a first rotational speed and a second rotational speed, the first rotational speed being obtained based on the accelerator operation amount acquired by the acceleration data acquisition means, and the second rotational speed being obtained based on the accelerator operation speed acquired by the acceleration data acquisition means.

Further, preferably the accelerator operation amount detection means is configured for detecting an accelerator operation amount of an accelerator operating element, and wherein an input side rotational speed detection means is provided for detecting as input side rotational speed a rotational speed of an input side rotary body of the clutch or a rotary body for rotation in sync with the input side rotary body, and wherein an output side rotational speed detection means is provided for detecting as output side rotational speed a rotational speed of an output side rotary body of the clutch or a rotary body for rotation in sync with the output side rotary body, and wherein the motor control means is configured for supplying the motor with a magnitude of electricity in accordance with the accelerator operation amount detected by the accelerator operation amount detection means while the accelerator operating element is operated to start the hybrid motorcycle to run and after the input side rotational speed detected by the input side rotational speed detection means has agreed with the output side rotational speed detected by the output side rotational speed detection means.

Still further, preferably the motor control means includes a delay means for delaying supplying the motor with electricity from the moment when the input side rotational speed has agreed with the output side rotational speed, by a delay time in accordance with a rotational speed, and the delay time is set to be longer as an engagement rotational speed is lower, the engagement rotational speed being defined as a rotational speed at which the input side rotational speed has agreed with the output side rotational speed.

According to another preferred embodiment, the straddle-type vehicle further comprises an electricity supply restriction means for continuing supply of electricity to the motor for a predetermined electricity supply time and discontinuing the supply of electricity to the motor after the electricity supply time has elapsed.

According to yet another preferred embodiment, the straddle-type vehicle further comprises a charge level detection means for detecting a charge level of the battery, wherein the electricity supply restriction means shortens the electricity supply time as the charge level detected by the charge level detection means becomes lower.

According to still yet another preferred embodiment, the straddle-type vehicle further comprises a charging means for causing the motor to generate electricity after the electricity supply time has elapsed and charging the battery with the generated electricity.

Preferably, the motor control means comprises a prerotation means for rotating the motor in conjunction with rotation of the engine after an engine start and in an operating state in which power from the motor is not applied to the crankshaft.

Further, preferably a rotation start timing, at which the prerotation means rotates the motor in conjunction with rotation of the engine, is set to a timing after an engine start and when an engine speed is lower than an idling speed.

According to another preferred embodiment, the straddle-type vehicle further comprises a charge level determination means for determining whether or not the charge level of the battery is lower than a predetermined minimum charge level, and a precharging means for causing the motor to generate electricity and charging the battery with the generated electricity after an engine start and in an operating state in which power from the motor is not applied to the crankshaft, if the charge level determination means determines that the charge level of the battery is lower than the minimum charge level.

Preferably, the automatic centrifugal clutch is a friction clutch interposed in the power transmission system between the engine and the driving wheel.

For the method aspect, this objective is solved by a method for operating a straddle-type vehicle having hybrid drive system, in particular hybrid motorcycle, with internal combustion engine for generating power to drive the vehicle, an electric motor connected to a crankshaft of the engine and generating auxiliary power, with an automatic centrifugal clutch interposed in a power transmission system between the engine and a driving wheel, wherein an acceleration data acquisition means acquires an accelerator operation amount, and wherein the motor is supplied with electricity at a timing and with a magnitude of electricity in accordance with the detected accelerator operation amount such that the auxiliary power from the motor is applied to the automatic centrifugal clutch only with the clutch completely engaged.

In the following, the present invention is explained in greater detail with respect to several embodiments thereof in conjunction with the accompanying drawings, wherein:
- FIG. 1: is a side view of a hybrid motorcycle according to an embodiment,
- FIG. 2: is a horizontal cross sectional view of a power unit,
- FIG. 3: is a block diagram showing the configuration of a control system of the hybrid motorcycle according to the embodiment,
- FIG. 4: is a block diagram showing the configuration of a motor/generator control section,
- FIG. 5: shows graphs for explaining how to set the delay time,
- FIG. 6: is a graph showing the relation between the APS angle and the driving current for a motor,
- FIG. 7: is a graph showing the relation between the charge level of a battery and the electricity supply time to the motor,
- FIG. 8: is a graph as a map for obtaining the charge level of the battery based on the open circuit voltage of the battery,
- FIG. 9: is a graph as a map for obtaining the charge level of the battery based on the battery current and the battery voltage,
- FIG. 10: is a graph as a map for setting the charge current and the discharge current for a charge level of the battery,
- FIG. 11: is a flowchart for explaining the operation of the hybrid motorcycle according to the embodiment,
- FIG. 12: is a flowchart for explaining the operation of a control device after an engine start until auxiliary power is generated by the driving of the motor,
- FIG. 13: is a time chart for explaining the operation of the hybrid motorcycle according to the embodiment,
- FIG. 14: is a time chart for explaining the operation of the hybrid motorcycle according to the embodiment,
- FIG. 15: is a side view of a hybrid motorcycle according to a further embodiment,
- FIG. 16: is a horizontal cross sectional view of a power unit,
- FIG. 17: is a block diagram showing the configuration of a control system of the hybrid motorcycle according to the further embodiment of Fig. 15,
- FIG. 18: is a block diagram showing the configuration of a motor/generator control section,
- FIG. 19: shows graphs for explaining how to set the engagement completion rotational speed,
- FIG. 20: is a graph showing the relation between the APS angle and the driving current for a motor,
- FIG. 21: is a graph showing the relation between the charge level of a battery and the electricity supply time to the motor,
- FIG. 22: is a graph as a map for obtaining the charge level of the battery based on the open circuit voltage of the battery,
- FIG. 23: is a graph as a map for obtaining the charge level of the battery based on the battery current and the battery voltage,
- FIG. 24: is a graph as a map for setting the charge current and the discharge current for a charge level of the battery,
- FIG. 25: is a flowchart for explaining the operation of the hybrid motorcycle according to the further embodiment of Fig. 15,
- FIG. 26: is a flowchart for explaining the operation of a control device after an engine start until auxiliary power is generated by the driving of the motor,
- FIG. 27: is a time chart for explaining the operation of the hybrid motorcycle according to the further embodiment of Fig. 15,
- FIG. 28: is a time chart for explaining the operation of the hybrid motorcycle according to the further embodiment of Fig. 15,
- FIG. 29: is a side view of a hybrid motorcycle according to a further embodiment,
- FIG. 30: is a horizontal cross sectional view of a power unit,
- FIG. 31: is a block diagram showing the configuration of a control system of the hybrid motorcycle according to the embodiment of Fig. 29,
- FIG. 32: is a block diagram showing the configuration of a motor/generator control section,
- FIG. 33: is a graph showing the relation between the rotational speed of an engine and the input side rotational speed of an automatic centrifugal clutch,
- FIG. 34: is a graph showing the relation between the rotational speed of the engine and the output side rotational speed of the automatic centrifugal clutch,
- FIG. 35: is a graph showing the relation between the APS angle and the driving current for a motor,
- FIG. 36: is a graph showing the relation between the charge level of a battery and the electricity supply time to the motor,
- FIG. 37: is a graph as a map for obtaining the charge level of the battery based on the open circuit voltage of the battery,
- FIG. 38: is a graph as a map for obtaining the charge level of the battery based on the battery current and the battery voltage,
- FIG. 39: is a graph as a map for setting the charge current and the discharge current for a charge level of the battery,
- FIG. 40: is a flowchart for explaining the operation of the hybrid motorcycle according to the embodiment of Fig. 29,
- FIG. 41: is a flowchart for explaining the operation of a control device after an engine start until auxiliary power is generated by the driving of the motor, and
- FIG. 42: is a time chart for explaining the operation of the hybrid motorcycle according to the embodiment of Fig. 29.

### Description of Reference Numerals:

2: engine
5: rear wheel
19: accelerator grip
11: accelerator operation amount detector
13: motor
16: automatic centrifugal clutch
71: acceleration data acquisition means
72: delay time setting means
73: motor control means
74: charge level detection means
75: charging means
76: charge level determination means
77: precharging means
81: electricity supply restriction means
83: electricity supply time setting means
82: prerotation means
102: engine
105: rear wheel
119: accelerator grip
111: accelerator operation amount detector
113: motor
116: automatic centrifugal clutch
171: acceleration data acquisition means
172: rotational speed detection means
173: rotational speed estimation means
174: motor control means
175: charge level detection means
176: charging means
177: charge level determination means
178: precharging means
181: electricity supply restriction means
182: prerotation means
183: electricity supply time setting means
202: engine
205: rear wheel
219: accelerator grip
211: accelerator operation amount detector
213: motor
216: automatic centrifugal clutch
271: accelerator operation amount detection means
272: input side rotational speed detection means
273: output side rotational speed detection means
274: motor control means
275: charge level detection means
276: charging means
277: charge level determination means
278: precharging means
284: electricity supply restriction means
285: prerotation means
286: electricity supply time setting means

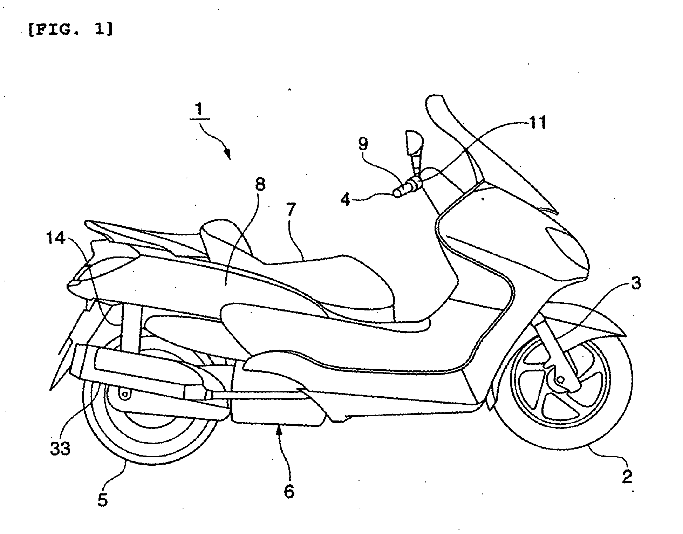

A description will hereinafter be made of an embodiment of the hybrid motorcycle according to the present teaching with reference to FIGs. 1 to 14.

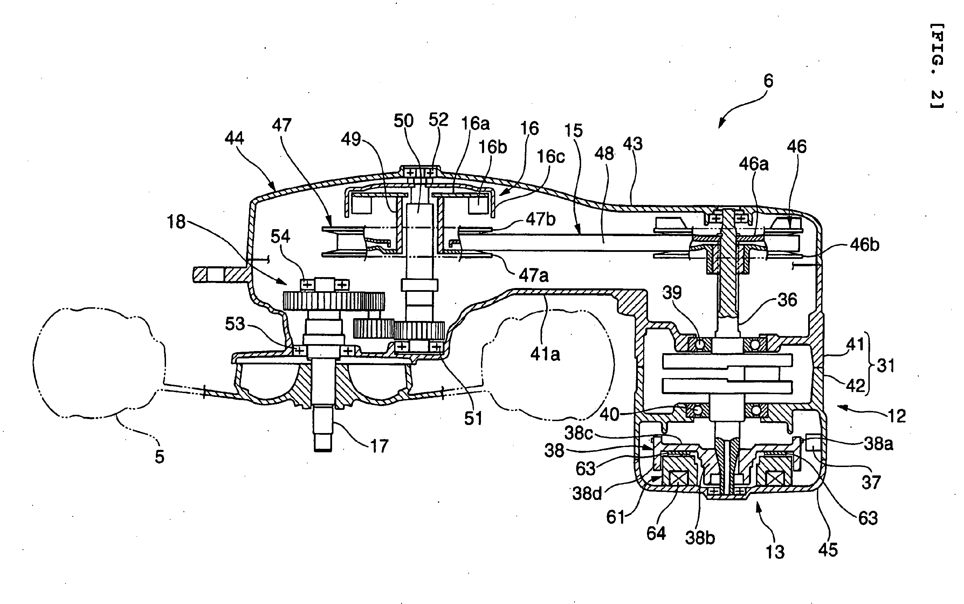

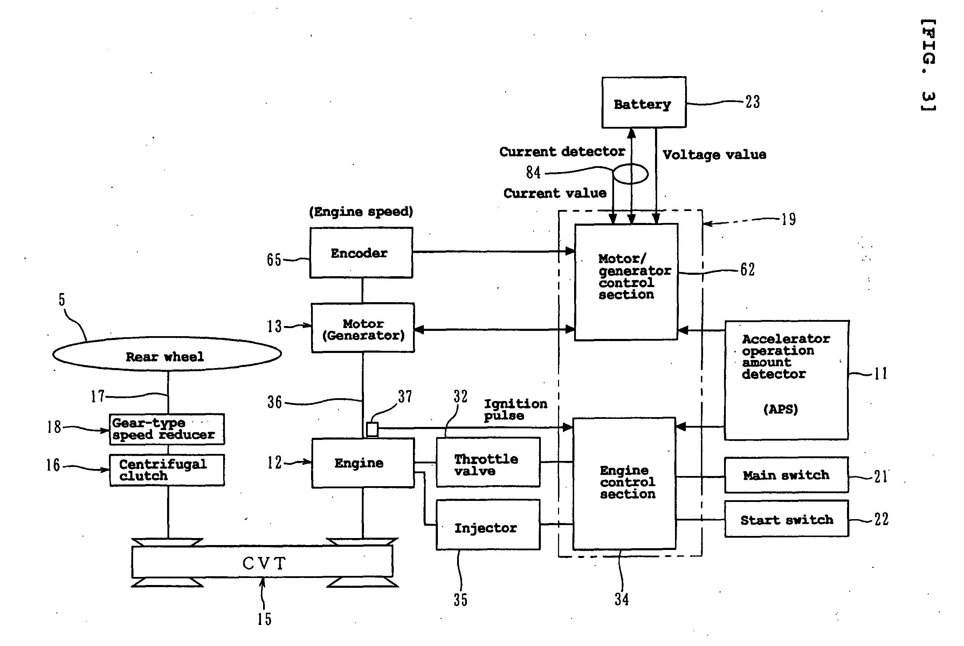

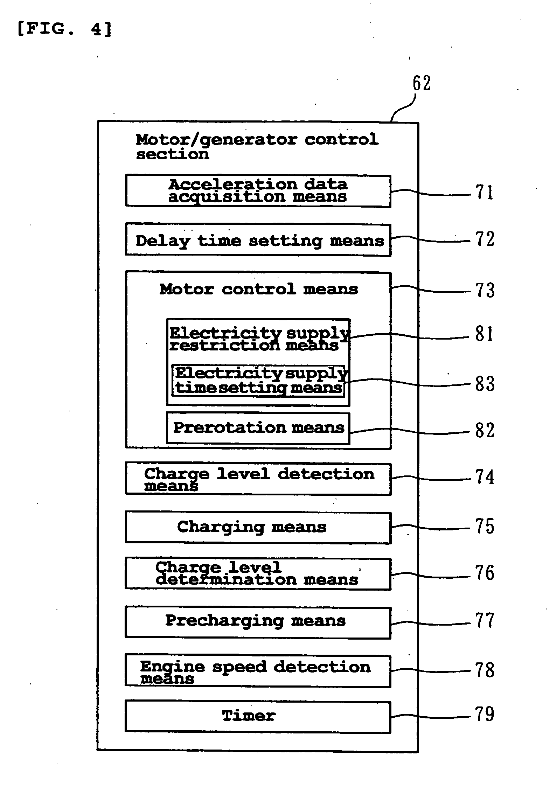

FIG. 1 is a side view of the hybrid motorcycle according to the present teaching. FIG. 2 is a horizontal cross sectional view of a power unit. FIG. 3 is a block diagram showing the configuration of a control system of the hybrid motorcycle according to the present teaching. FIG. 4 is a block diagram showing the configuration of a motor/generator control section.

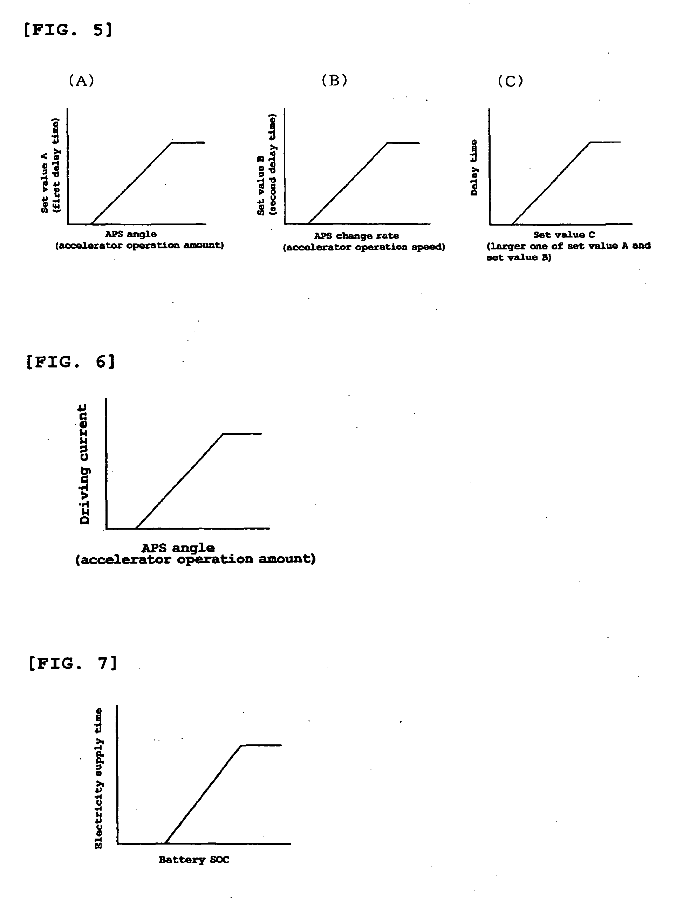

FIG. 5 shows graphs for explaining how to set the delay time, in which FIG. 5(A) is a graph as a map for obtaining a first delay time based on the APS angle, FIG. 5(B) is a graph as a map for obtaining a second delay time based on the APS change rate, and FIG. 5(C) is a graph showing changes in actual delay time based on the first delay time and the second delay time.

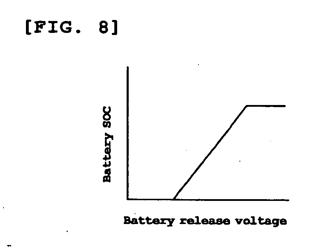

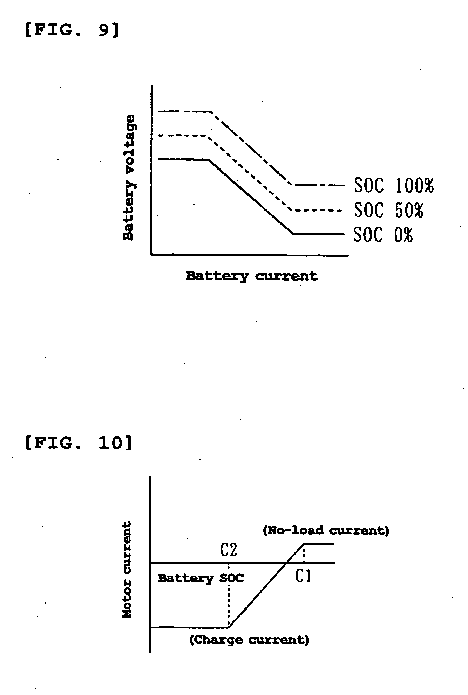

FIG. 6 is a graph showing the relation between the APS angle and the driving current for a motor. FIG. 7 is a graph showing the relation between the charge level of a battery and the electricity supply time to the motor. FIG. 8 is a graph as a map for obtaining the charge level of the battery based on the open circuit voltage of the battery. FIG. 9 is a graph as a map for obtaining the charge level of the battery based on the battery current and the battery voltage. FIG. 10 is a graph as a map for setting the charge current and the discharge current for a charge level of the battery.

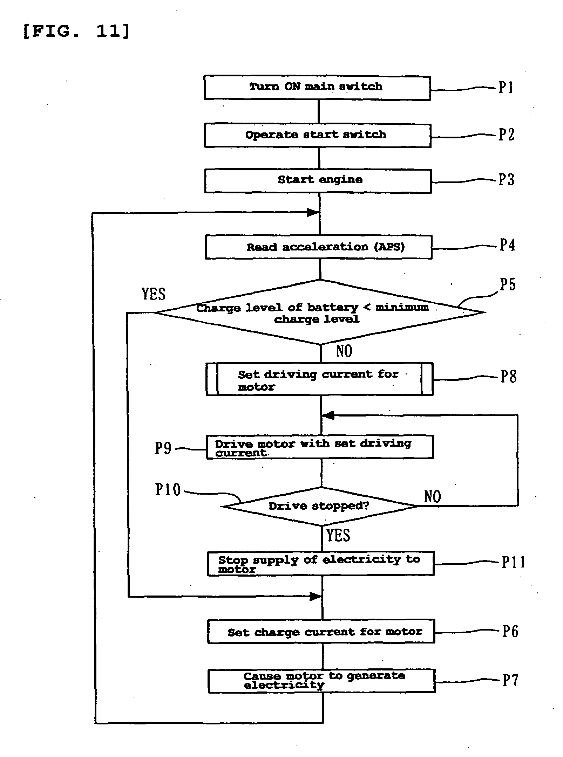

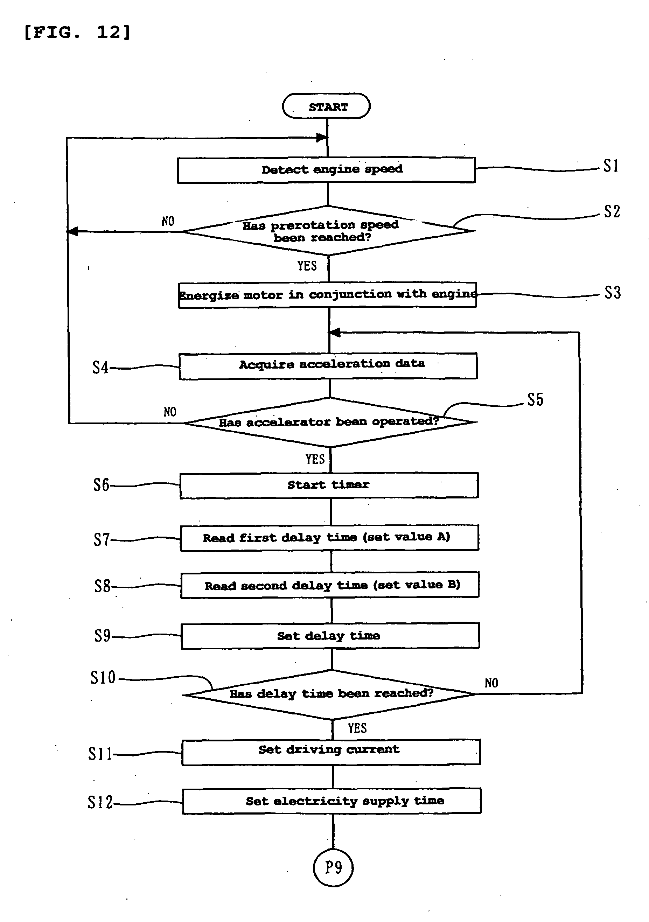

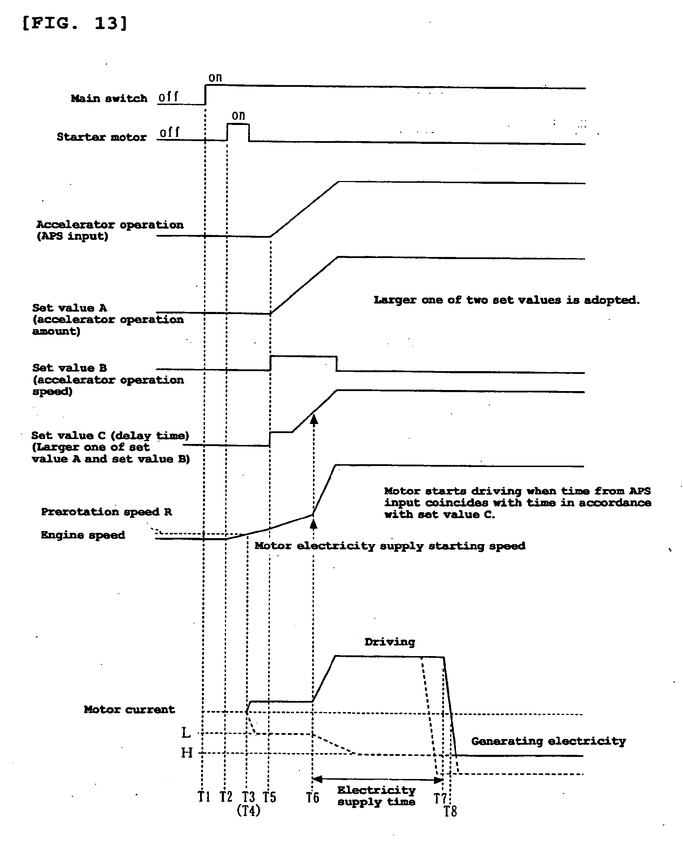

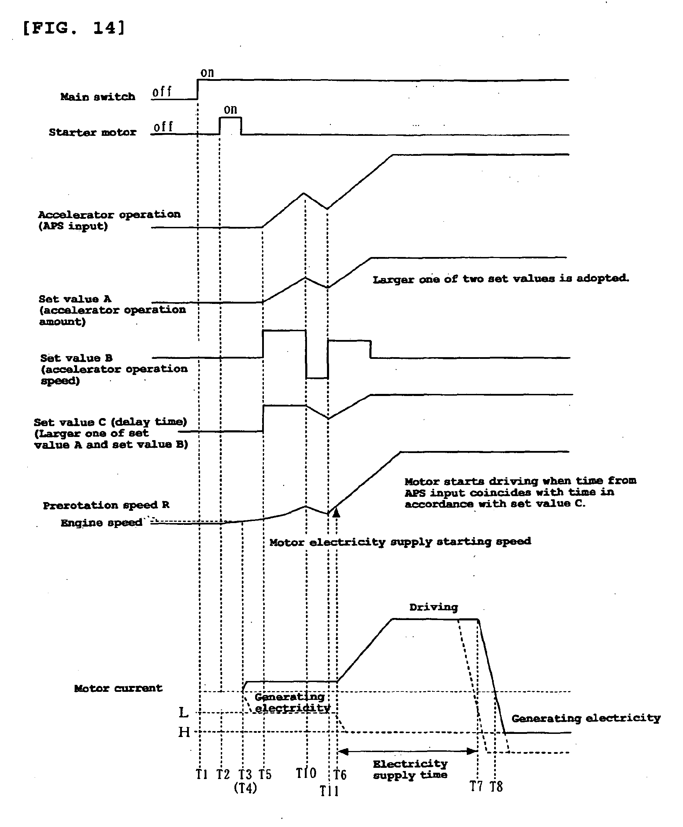

FIG. 11 is a flowchart for explaining the operation of the hybrid motorcycle according to the present teaching. FIG. 12 is a flowchart for explaining the operation of a control device after an engine start until the motor generates auxiliary power. FIGs. 13 and 14 are each a time chart for explaining the operation of the hybrid motorcycle according to the present teaching. FIG. 13 corresponds to the case where an accelerator is operated such that the accelerator operation amount increases generally in proportion to the time from start to end of the operation. FIG. 14 corresponds to the case where the accelerator is once reversed slightly at the middle of the starting operation and then the starting operation is performed again.

In the drawings, reference numeral 1 denotes a hybrid motorcycle according to this embodiment. Reference numeral 2 denotes a front wheel of the motorcycle 1, 3 a front fork, 4 steering handlebars, 5 a rear wheel as the driving wheel, 6 a power unit for driving the rear wheel 5, 7 a seat, and 8 a body cover.

The front wheel 2 can be steered to the left and right by rotationally moving the steering handlebars 4. An accelerator grip 9 for increasing and decreasing the driving force of the power unit 6 and a front wheel brake lever (not shown) are provided at an end of the steering handlebars 4 on the right side of the vehicle body. The accelerator grip 9 constitutes the accelerator operating element of the present teaching.

As shown in FIG. 2, the accelerator grip 9 is supported for free rotational movement on the steering handlebars 4, although not shown. The accelerator grip 9 is provided with an accelerator operation amount detector 11 (hereinafter simply referred to as "APS" (accelerator position sensor)) for detecting the operation amount (rotational angle relative to the handlebars) of the accelerator grip 9.

The rear wheel 5 is supported for free rotation at the rear end of the power unit 6 to be discussed later, in order to be rotated by the power from an engine 12 and the auxiliary power from a motor 13 provided in the power unit 6.

The power unit 6 is a unit swing type, and supported for free vertical swinging movement on a body frame by a link mechanism (not shown) coupled to the front end. As shown in FIG. 1, a cushion unit 14 is interposed between the rear end of the power unit 6 and the body frame (not shown).

As shown in FIG. 2, the power unit 6 is made up of an engine 12 and a motor 13 provided at its end on the front side of the vehicle (on the right side in FIG. 2), a belt-type continuously variable transmission 15 (hereinafter simply referred to as "CVT") extending longitudinally on the left side of the vehicle body, an automatic centrifugal clutch 16 provided at the rear end of the CVT 15, a gear-type speed reducer 18 provided between the automatic centrifugal clutch 16 and an axle 17 of the rear wheel 5, a control device 19 (see FIG. 3) for controlling the operation of the engine 12 and the motor 13, etc.

A main switch 21, a start switch 22, a battery 23, etc., are connected to the control device 19. The start switch 22 is intended to start the engine 12, and in this embodiment uses the motor 13 to start the engine 12. At the time of starting, the motor 13 substantially functions as a starter motor. Alternatively, a dedicated starter motor may be used to start the engine 12, as in the case with common conventional motorcycles.

The engine 12 is a 4-cycle engine including a crankcase 31 shown in FIG. 2, and a cylinder (not shown) provided in front of the crankcase 31 and extending upward. An intake system having a throttle valve 32 (see FIG. 3) and an exhaust system having a muffler 33 (see FIG. 1) are connected to the cylinder.

The throttle valve 32 is connected to the accelerator grip 9 via a wire (not shown), and opens and closes through operation of the accelerator grip 9. The throttle valve 32 is provided with a throttle valve opening sensor (not shown) for detecting the opening of the throttle valve 32. The throttle valve opening sensor is connected to an engine control section 34 of the control device 19 shown in FIG. 3 and to be discussed later, and sends to the engine control section 34 the opening of the throttle valve 32 as detected data.

The engine 12 is arranged in such that the fuel injector 35 (see FIG. 3) injects fuel into an intake passage. The fuel injection amount from the fuel injector 35 is set by the engine control section 34 according to the opening of the throttle valve 32 and the speed of the engine 12. The speed of the engine 12 is calculated utilizing the number of ignition pulses generated by an ignition system having an ignition plug (not shown). The ignition timing of the engine 12 is set by the engine control section 34 based on the rotational angle of the crankshaft 36.

The rotational angle of the crankshaft 36 is detected by an electromagnetic pickup 37 (see FIG. 2) attached to the crankcase 31. The electromagnetic pickup 37 is positioned to face a tooth 38a provided to a rotor 38 (see FIG. 2) of the motor 13 to be discussed later, and sends a detection signal to the engine control section 34 when it has detected the tooth 38a magnetically.

As shown in FIG. 2, the crankshaft 36 of the engine 12 is supported on the crankcase 31 by bearings 39, 40 for free rotation. The crankcase 31 is made up of a left half 41 and a right half 42. The left half 41 is formed integrally with a longitudinally extending portion 41 a extending longitudinally on the left side of the rear wheel 5, to which a transmission case cover 43 is attached.

The left half 41 of the crankcase 31 and the transmission case cover 43 constitute a transmission case 44 housing and also supporting the CVT 15, the automatic centrifugal clutch 16, the gear-type speed reducer 18, etc.

A motor housing 45 for the motor 13 to be discussed later is attached to the right half 42 of the crankcase 31.

As shown in FIG. 2, a driving pulley 46 of the CVT 15 is mounted to an end of the crankshaft 36 on the left side of the vehicle body. The driving pulley 46 is made up of a fixed sheave half 46a fixed to the crankshaft 36, a movable sheave half 46b supported on the crankshaft 36 so as to move freely axially thereof but not to rotate relative thereto, and a drive mechanism (not shown) for moving the movable sheave half 46b axially on the crankshaft 36.

The CVT 15 is made up of the above driving pulley 46, a driven pulley 47 positioned on the rear side of the vehicle body, and a V-belt 48 wrapped around both the pulleys 46, 47. As conventionally well known, the CVT 15 continuously varies the rotation of the crankshaft 36 for transmission to a rotary shaft 49 of the driven pulley 47. The driven pulley 47 is made up of a fixed sheave half 47a fixed to the rotary shaft 49, and a movable sheave half 47b supported on the rotary shaft 49 so as to be movable axially thereof and also be urged toward the fixed sheave half 47a by a compression coil spring (not shown).

The rotary shaft 49 is formed in the shape of a cylinder, and supported for free rotation through a bearing (not shown) on an intermediate shaft 50 passing through the hollow part of the rotary shaft 49. The intermediate shaft 50 is supported for free rotation on the transmission case 44 through bearings 51, 52. An input part 16a of the automatic centrifugal clutch 16 is connected to an end of the rotary shaft 49 on the left side of the vehicle body.

The automatic centrifugal clutch 16 is made up of the above input part 16a having a clutch shoe 16b, and a clutch outer 16c housing the input part 16a. The clutch outer 16c is fixed to an end of the intermediate shaft 50 on the left side of the vehicle body.

An end of the intermediate shaft 50 on the right side of the vehicle body is connected to the axle 17 of the rear wheel 5 via the gear-type speed reducer 18, which is a two-staged type. The axle 17 of the rear wheel 5 is supported for free rotation on the transmission case 44 through bearings 53, 54.

With the thus constructed power unit 6, rotation of the crankshaft 36 is transmitted from the driving pulley 46 via the V-belt 48 to the driven pulley 47 of the CVT 15, and then from the rotary shaft 49 to the input part 16a of the automatic centrifugal clutch 16. As the rotation of the crankshaft 36 increases, the rotation of the input part 16a increases. Then, a centrifugal force increases the diameter of the clutch shoe 16b, which causes the clutch shoe 16b to engage with the clutch outer 16c. This in turn causes the clutch outer 16c to rotate. This rotation is transmitted from the intermediate shaft 50 via the gear-type speed reducer 18 to the axle 17 (rear wheel 5).

As shown in FIG. 2, a rotor 38 of the motor 13 to be discussed later is mounted to an end of the crankshaft 36 on the right side of the vehicle body.

The motor 13 is intended to apply auxiliary power to the crankshaft 36, and has a function to generate electricity by being driven by the engine 12. The motor 13 includes the above rotor 38 and a stator 61 fixed to the motor housing 45, and as shown in FIG. 3, is connected to a motor/generator control section 62 of the control device 19.

The rotor 38 is made up of a boss 38b fixed to the crankshaft 36, a disk 38c extending radially from an end of the boss 38b on the left side of the vehicle body, a cylinder 38d housing the disk 38c, and a permanent magnet 63 secured to an end surface of the disk 38c on the right side of the vehicle body. The tooth 38a to be detected by the electromagnetic pickup 37 is formed on the outer periphery of the cylinder 38d. The motor 13 directly drives the crankshaft 36.

The stator 61 incorporates a coil 64, and is fixed to the motor housing 45 in such a manner as to be partially inserted into the cylinder 38d and face the permanent magnet 63. The stator 61 is provided on a circumference centered on the axis of the crankshaft 36.

The stator 61 of the motor 13 also incorporates an encoder 65 (see FIG. 3) for detecting the speed of the rotor 38 (speed of the crankshaft 36).

The motor/generator control section 62 is intended to control the timing for supplying the motor 13 with electricity and the magnitude of the electricity, and also switch the motor 13 to function as a generator. As shown in FIG. 4, the motor/generator control section 62 includes an acceleration data acquisition means 71, a delay time setting means 72, a motor control means 73, a charge level detection means 74, a charging means 75, a charge level determination means 76, a precharging means 77, an engine speed detection means 78 and a timer 79.

The acceleration data acquisition means 71 acquires the accelerator operation amount (operation angle of the accelerator grip 9) detected by the APS 11 and the accelerator operation speed (speed at the time when the accelerator grip 9 is operated) as acceleration data.

The delay time setting means 72 sets the delay time, which is a period from the moment when the accelerator operation is started to the moment when the driving by the motor 13 is started, in a method discussed later. The delay time is set to a length necessary for the automatic centrifugal clutch 16 to be completely engaged from the moment when the accelerator operation is started.

For example, in the case where the accelerator grip 9 is operated greatly and rapidly, the power from the engine 12 to be applied to the automatic centrifugal clutch 16 is relatively increased, which requires a relatively long time for the automatic centrifugal clutch 16 to be completely engaged. Thus, the delay time is set to be relatively long. If the delay time is not set, auxiliary power is generated by the driving of the motor 13 right at the start of the accelerator operation, and too large a torque is applied before the automatic centrifugal clutch 16 has been completely engaged. Thus, the clutch shoe 16b may slip to prevent the vehicle from starting running.

The delay time setting means 72 selects a longer one of a provisional delay time set based on the accelerator operation amount (hereinafter referred to as "first delay time") and a provisional delay time set based on the accelerator operation speed (hereinafter referred to as "second delay time"), and sets the selected one as final delay time.

Now, a detailed description will be made of how to set the delay time. The delay time setting means 72 according to this embodiment sets the final delay time using the maps shown in FIGs. 5(A) to 5(C). FIG. 5(A) is a graph as a map for obtaining a set value A, which is equivalent to the first delay time in accordance with the accelerator operation amount. FIG. 5(B) is a graph as a map for obtaining a set value B, which is equivalent to the second delay time in accordance with the accelerator operation speed. FIG. 5(C) is a graph as a map for obtaining the final delay time based on the set value A and the set value B.

As shown in FIG. 5(A), the set value A is set such that the delay time becomes longer as the accelerator operation amount becomes larger until the accelerator operation amount reaches a predetermined upper limit, and such that the delay time maintains a constant maximum time, even if the accelerator operation amount increases, after the accelerator operation amount has reached the upper limit.

As shown in FIG. 5(B), the set value B is set such that the delay time becomes longer as the accelerator operation speed becomes higher until the accelerator operation speed reaches a predetermined upper limit, and such that the delay time maintains a constant maximum time, even if the accelerator operation speed increases, after the accelerator operation speed has reached the upper limit.

The delay time setting means 72 reads a set value A in accordance with the accelerator operation amount acquired by the acceleration data acquisition means 71, from the map shown in FIG. 5(A). The delay time setting means 72 also reads a set value B in accordance with the accelerator operation speed acquired by the acceleration data acquisition means 71, from the map shown in FIG. 5(B). The delay time setting means 72 then compares the set value A and the set value B, applies the larger one of the set values A, B to the map shown in FIG. 5(C) as a set value C, and reads the final delay time in accordance with the set value C from the drawing.

The motor control means 73 includes an electricity supply restriction means 81 and a prerotation means 82 to be discussed later, and supplies the motor 13 with a magnitude of electricity in accordance with the accelerator operation amount after the delay time has elapsed from the moment when the accelerator grip 9 in an idling state was operated.

Whether or not the accelerator grip 9 is in an idling state is detected using the accelerator operation amount acquired by the acceleration data acquisition means 71.

That is, the accelerator grip 9 is determined to be in an idling state if the accelerator operation amount is 0.

Whether or not the accelerator grip 9 has been operated is detected by determining whether or not the accelerator operation amount has changed from 0. The timer 79 measures the time from the start of an accelerator operation until the delay time elapses.

In supplying the motor 13 with a magnitude of electricity in accordance with the accelerator operation amount, the motor control means 73 reads a magnitude of driving current in accordance with the accelerator operation amount, from the map shown in FIG. 6, and controls the voltage such that the magnitude of driving current flows through the motor 13. The motor control means 73 supplies the motor 13 with electricity only when the charge level of the battery 23 is above a minimum charge level to be discussed later.

The electricity supply restriction means 81 restricts the length of time for the motor control means 73 to supply the motor 13 with electricity, to a predetermined electricity supply time. The electricity supply time is set by an electricity supply time setting means 83 to be discussed later. That is, the electricity supply restriction means 81 continues the supply of electricity to the motor 13 for the electricity supply time, and discontinues the supply of electricity to the motor 13 after the electricity supply time has elapsed.

The electricity supply time setting means 83 changes the electricity supply time according to the charge level of the battery 23 detected by the charge level detection means 74 to be discussed later. In changing the electricity supply time, the electricity supply time setting means 83 uses the map shown in FIG. 7. FIG. 7 is a graph showing the driving time for a charge level of the battery 23 (battery SOC). As shown in the graph, the electricity supply time is set to be shorter as the charge level of the battery 23 becomes lower. The electricity supply time setting means 83 reads an electricity supply time in accordance with the present charge level of the battery 23, from the map shown in FIG. 7, and sends the electricity supply time to the electricity supply restriction means 81. That is, the electricity supply restriction means 81 shortens the electricity supply time as the charge level detected by the electricity supply time setting means 83 becomes lower.

The prerotation means 82 is intended to prevent the motor 13 not generating auxiliary power from serving as a load on the engine 12, and arranged to start energization in order to rotate the motor 13 when the speed of the engine 12 has reached a predetermined prerotation speed. In this embodiment, the prerotation speed is set to be lower than the speed of the engine 12 in an idling state (idling speed).

That is, in the hybrid motorcycle 1 according to this embodiment, the prerotation means 82 rotates the motor 13 in conjunction with the rotation of the engine 12 after an engine start and when the engine speed has reached the prerotation speed lower than the idling speed. The speed of the engine 12 is detected by the engine speed detection means 78. The engine speed detection means 78 is arranged to obtain the speed of the crankshaft 36 using the encoder 65.

The charge level detection means 74 obtains a charge level (SOC) of the battery 23 in accordance with the release voltage of the battery 23 using a map as the graph shown in FIG. 8, and then adds, to this charge level, the current amount while the battery 23 is charging and the current amount while the battery 23 is discharging to obtain the present charge level. The battery release voltage is detected by the charge level detection means 74 while electricity in the battery 23 is not consumed or while the battery 23 is not charged, for example when the engine is stopped. The battery 23 is charged by the charging means 75 to be discussed later. The current while charging and the current while the battery 23 is discharging are measured by a current detector 84 (see FIG. 3) provided in the circuit connecting the battery 23 and the motor/generator control section 62.

Instead of measuring and adding the charge current and the discharge current each time as discussed above, a map as shown in FIG. 9 may be used to detect the charge level of the battery 23 during engine operation. In the map shown in FIG. 9, the charge level (SOC) of the battery 23 is defined by the battery current and the battery voltage. The map shows the relation between the voltage between the terminals of the battery 23 and the current flowing through the battery 23 at each charge level from 0% to 100%. In the case of using this map to obtain the charge level of the battery 23, the charge level detection means 74 detects the present values of the current flowing through the battery 23 and the voltage between the terminals of the battery 23, and reads a charge level (SOC) in accordance with these current and voltage values from the map.

The charging means 75 causes the motor 13 to function as a generator and to generate electricity after the above electricity supply time has elapsed, and charges the battery 23 with the generated electricity. The charging means 75 also changes the amount of electricity to be generated according to the charge level detected by the charge level detection means 74. That is, the charging means 75 reduces the charge current when the charge level of the battery 23 is relatively high, and increases the charge current when the charge level of the battery 23 is relatively low.

The charge level determination means 76 compares the charge level of the battery 23 detected by the charge level detection means 74 and the predetermined minimum charge level if auxiliary power is not generated by the driving of the motor 13. The charge level determination means 76 also sends a control signal to the prerotation means 82 to discontinue the supply of electricity to the motor 13, and sends a control signal to the precharging means 77 to be discussed later to start charging, when the charge level of the battery 23 is lower than the minimum charge level. On receiving the control signal, the prerotation means 82 stops the supply of electricity to the motor 13.

When the control signal is sent from the charge level determination means 76, the precharging means 77 causes the motor 13 to function as a generator and to generate electricity if auxiliary power is not generated by the driving of the motor 13. The charge current while generating electricity is read from the map shown in FIG. 10 and set. The map shows the charge current and the discharge current of the battery 23 for a charge level (SOC) of the battery 23.

As can be understood from this map, the precharging means 77 according to this embodiment increases the charge current as the charge level of the battery 23 becomes lower when the charge level is between the minimum charge level C1 and a limit value C2 lower than that. Also, the precharging means 77 performs charging at a constant maximum charge current when the charge level is lower than the limit value C2. When the motor 13 is caused to function as a generator while the engine 12 in low-speed operation, the engine control section 34 of the hybrid motorcycle 1 increases the fuel injection amount from the injector 35 so as to stabilize the rotation of the engine 12.

At this time, for example when the accelerator grip 9 is in an idling position, the fuel injection amount is controlled such that the engine speed reaches the idling speed during normal operation. When the accelerator operation amount is increased from the idling state, the engine control section 34 increases the fuel injection amount according to the increase in accelerator operation amount. Thus, since the fuel injection amount is increased according to an increase in load due to electricity generation by the motor 13, the engine 12 can be prevented from stalling because of such an increase in load due to electricity generation.

Now, a description will be made of the operation of the motor/generator control section 62 constructed as described above using the flowcharts shown in FIGs. 11 and 12 and the time chart shown in FIG. 13.

The engine 12 is started by turning ON the main switch 21 and then turning ON the start switch 22 in steps P1 to P3 of the flowchart shown in FIG. 11.

The timing of turning ON the main switch 21 is indicated as time T1 in FIG. 13, and the timing of turning ON the start switch 22 is indicated as time T2 in FIG. 13.

After an engine start, the acceleration data acquisition means 71 acquires acceleration data (accelerator operation amount and accelerator operation speed) in step P4, and the charge level determination means 76 determines in step P5 whether or not the charge level of the battery 23 is lower than the minimum charge amount.

If the charge level of the battery 23 is equal to minimum charge level or lower, the precharging means 77 reads a charge current for the motor 13 from the map shown in FIG. 10 in step P6, and causes the motor 13 to function as a generator and to generate electricity so as to obtain the charge current in step P7. Then, the process returns to step P4 to repeat the above processes. The timing of starting electricity generation in step P7 is indicated as time T3 in FIG. 13.

On the other hand, if it is determined in step P5 that the charge level of the battery 23 is higher than the minimum charge level, the process proceeds to step P8, where the driving current for the motor 13 is set. Here, the operation performed in step P8 is described with reference to the flowchart shown in FIG. 12.

First of all, the speed of the engine 12 is detected in step S1 of the flowchart shown in FIG. 12, and energization is started to rotate the motor 13 when the engine speed has reached the prerotation speed as shown in steps S2 to S3. The prerotation speed is indicated as symbol R in FIG. 13. Also, the timing at which the motor 13 rotates in conjunction with the rotation of the engine 12 is indicated as time T4 in FIG. 13.

Subsequently, acceleration data are acquired again in step S4, and it is determined in step S5 whether or not an accelerator operation has been performed. If an accelerator operation has not been performed, the process returns to step S1. If an accelerator operation has been performed, the timer 79 starts counting the time in step S6. The timing at which the accelerator operation has been performed is indicated as time T5 in FIG. 13.

Then, a set value A (first delay time) in accordance with the accelerator operation amount at that time is read from the map shown in FIG. 5(A) in step S7, and a set value B (second delay time) in accordance with the accelerator operation speed at that time is read from the map shown in FIG. 5(B) in step S8. Then, the larger one of the set value A and the set value B (the one that brings about a longer delay time) is set as a set value C and used to read the final delay time from the map shown in FIG. 5(C) in step S9.

After the delay time is set in this way, it is determined in step S10 whether or not the delay time has elapsed from the moment when a first throttle operation was performed (time T5). If the delay time has not elapsed, the process returns to step S4. If the delay time has elapsed, the driving current for the motor 13 is read from the map shown in FIG. 6 in step S11, and the electricity supply time is read from the map shown in FIG. 7 in step S12. The electricity supply time becomes shorter as the charge level of the battery 23 becomes lower. When the delay time has elapsed, the timer 79 is stopped and reset.

After preparations have been made to cause the motor 13 to generate auxiliary power, the driving current is passed to the motor 13 to generate auxiliary power by the driving of the motor 13 in step P9 of the flowchart shown in FIG. 11. The timing of generating auxiliary power is indicated as time T6 in FIG. 13. At this time, the timer 79 starts counting the time.

At this time, the delay time has elapsed from the start of the accelerator operation (T5), and the automatic centrifugal clutch 16 has completely been engaged. Thus, the resultant force of the power from the engine 12 and the auxiliary power from the motor 13 is transmitted from the automatic centrifugal clutch 16 via the gear-type speed reducer 18 and the axle 17 to the rear wheel 5.

As a result, the acceleration at which this vehicle starts running is large compared to common motorcycles that run only on the power from the engine 12. Meanwhile, when the charge level of the battery 23 is lower than the minimum charge level, the electricity generation amount is increased from an electricity generation amount for idling L to an electricity generation amount for running H after the delay time has elapsed, as shown in FIG. 13.

After auxiliary power is generated by the driving of the motor 13 as discussed above, it is determined in step P10 whether or not the electricity supply time has elapsed from the start of the driving of the motor 13. If the electricity supply time has not elapsed, the process returns to step P9. If the electricity supply time has elapsed, the supply of electricity to the motor 13 is discontinued in step P11. The timing of stopping the supply of electricity is indicated as time T7 in FIG. 13.

After the supply of electricity to the motor 13 is discontinued, the motor 13 is caused to function as a generator and to generate electricity in steps P6, P7. The timing of starting the generation of electricity is indicated as time T8 in FIG. 13. The amount of electricity generated at this time is also increased and decreased according to the charge level of the battery 23.

Aside from when the vehicle starts running as discussed above, the motor 13 is also caused to generate auxiliary power for example when the accelerator grip 9 is returned to an idling position while the vehicle is running and then operated to increase the running speed from a coasting state. Thus, also at this time, the automatic centrifugal clutch 16 does not slip and high acceleration performance can be achieved by the auxiliary power by the driving of the motor 13.

In the operation example shown in FIG. 13, the operation amount of the accelerator grip 9 is continuously increased from the start of the operation until the vehicle starts running. In the case where the accelerator is operated irregularly, an operation similar to the above example where only the delay time is different is performed. For example, in the case where the accelerator grip 9 is once reversed slightly at the middle of the starting operation and then the starting operation is performed again, the operation as shown in FIG. 14 is performed.

In FIG. 14, the timing of starting the reversing operation of the accelerator grip 9 at the middle of the starting operation is indicated as time T10, and the timing at which the accelerator grip 9 is completely reversed and the starting operation is started again is indicated as time T11.

As shown in FIG. 14, the set value C, which represents the delay time, is reduced by reversing the accelerator grip 9, and increased by operating the accelerator grip 9 again.

Also in this case, the motor 13 is caused to generate auxiliary power when the delay time has elapsed (T6) from the start of the accelerator operation (T5).

In the hybrid motorcycle 1 constructed as described above, the auxiliary power from the motor 13 is applied to the automatic centrifugal clutch 16 with the automatic centrifugal clutch 16 completely engaged. Thus, the resultant force of the power from the engine 12 and the auxiliary power from the motor 13 can be efficiently transmitted from the automatic centrifugal clutch 16 to the rear wheel 5 side without any loss of power in the automatic centrifugal clutch 16.

Therefore, according to this embodiment, a hybrid motorcycle 1 with excellent start and acceleration performance can be manufactured.

Also, in this embodiment, an existing APS 11 for use to control the rotation of the engine 12 is used to detect the operation amount and the operation speed of the accelerator grip 9. Thus, it is not necessary to provide a new member for detection purposes, such as sensor or switch, in order to manufacture the hybrid motorcycle 1, which contributes to cost reduction.

In the hybrid motorcycle 1 according to this embodiment, a sensor or a switch for detecting the completion of engagement of the automatic centrifugal clutch 16 is not exclusively used. Thus, according to the hybrid motorcycle 1, the operation to apply auxiliary power can be performed with high reliability compared to the case where a dedicated sensor or switch is used to detect the completion of engagement of the automatic centrifugal clutch.

In the hybrid motorcycle 1 according to this embodiment, the supply of electricity to the motor 13 is discontinued after the vehicle starts running or accelerates and when a predetermined electricity supply time has elapsed. Thus, the consumption of electricity in the battery 23 can be reduced compared to the case where the supply of electricity to the motor 13 is continued after the vehicle starts running or accelerates.

In the hybrid motorcycle 1 according to this embodiment, the electricity supply time becomes shorter as the charge level of the battery 23 becomes lower. Thus, the charge level of the battery 23 is not lowered excessively. Therefore, according to the hybrid motorcycle 1, it is possible to secure electricity for use to cause the motor 13 to generate auxiliary power next time.

In the hybrid motorcycle 1 according to this embodiment, the motor 13 generates electricity after the electricity supply time has elapsed, and the battery 23 is charged with the generated electricity In this way, according to the hybrid motorcycle 1, the battery 23 can be charged after electricity in the battery 23 has been consumed. Thus, it is possible to secure sufficient electricity to be supplied to the motor 13 next time.

The hybrid motorcycle 1 according to this embodiment is arranged to use a longer one of the first delay time obtained based on the accelerator operation amount and the second delay time obtained based on the accelerator operation speed. Thus, according to the hybrid motorcycle 1, the power from the motor 13 can be applied to the automatic centrifugal clutch 16 at an appropriate timing in accordance with the accelerator operation speed, even if the accelerator grip 9 is operated to fully open the throttle valve 32 in order for the vehicle to start running or accelerate. As a result, in the hybrid motorcycle 1, the power from the engine 12 and the auxiliary power from the motor 13 can be more reliably transmitted to the rear wheel 5.

The hybrid motorcycle 1 according to this embodiment is arranged to rotate the motor 13 in conjunction with the rotation of the engine 12 after an engine start and in an operating state where the power from the motor 13 is not applied to the crankshaft 36. Thus, according to the hybrid motorcycle 1, it is possible to prevent the motor 13 not generating auxiliary power from serving as a load on the engine 12, which stabilizes the rotation of the engine 12 in an idling state.

In the hybrid motorcycle 1 according to this embodiment, the motor 13 is rotated after the start of the engine 12 and before the speed of the engine 12 reaches an idling speed, which reduces a load on the engine 12. Thus, the engine 12 shifts to an idling state while rotating stably after an engine start, even if the motor 13 is connected to the crankshaft 36. As a result, according to the hybrid motorcycle 1, the series of operations, including starting the engine 12 and the vehicle starting running and accelerating, can be performed smoothly.

In the hybrid motorcycle 1 according to this embodiment, if the charge level of the battery 23 is low, the battery 23 can be charged when auxiliary power from the motor 13 is not necessary, for example when the vehicle is at a halt. Thus, according to the hybrid motorcycle 1, the battery 23 can be prevented from being over-discharged, and it is possible to secure electricity for use to cause the motor 13 to generate auxiliary power next time.

In the above embodiment, the rotor 38 of the motor 13 is mounted on the crankshaft 36. However, the motor 13 may be formed separately from the engine 12. In such a case, the rotary shaft of the motor 13 and the crankshaft 36 may be connected directly or via a transmission means that can maintain the ratio between the speeds of both the shafts to a constant value.

In the above embodiment, both the accelerator operation amount and the accelerator operation speed are used to set the delay time. However, only the accelerator operation amount may be used to set the delay time. Also, in the above embodiment, the driving current supplied to the motor 13 in order to cause the motor 13 to generate auxiliary power is increased and decreased in proportion to the accelerator operation amount. However, the driving current may be increased and decreased in consideration of the accelerator operation speed as well.

In the above embodiment, the present teaching is applied to a scooter. However, the present teaching is not limited thereto, and may be applied to other types of motorcycle.

The description above discloses, in order to solve the above problems, according to a first aspect, an embodiment of a hybrid motorcycle having an automatic centrifugal clutch interposed in a power transmission system between an engine and a driving wheel, and a motor for auxiliary power connected to a crankshaft of the engine, the motor having a power generation function and also being supplied with electricity from a battery to rotate, the hybrid motorcycle including: an acceleration data acquisition means for acquiring as acceleration data at least an accelerator operation amount of an accelerator operating element, of accelerator operation amount and accelerator operation speed thereof; a delay time setting means for setting a delay time by which start of operation of the motor is delayed, according to the acceleration data acquired by the acceleration data acquisition means; and a motor control means for supplying the motor with a magnitude of electricity in accordance with the acceleration data after the delay time has elapsed from a moment when the accelerator operating element in an idling state was operated.

Further, according to a second aspect, there is disclosed an embodiment of the hybrid motorcycle according to the first aspect, further including: an electricity supply restriction means for continuing supply of electricity to the motor for a predetermined electricity supply time and discontinuing the supply of electricity to the motor after the electricity supply time has elapsed.

Further, according to a third aspect, there is disclosed an embodiment of the hybrid motorcycle according to the second aspect, further including: a charge level detection means for detecting a charge level of the battery, in which the electricity supply restriction means shortens the electricity supply time as the charge level detected by the charge level detection means becomes lower.

Further, according to a fourth aspect, there is disclosed an embodiment of the hybrid motorcycle according to the second or third aspect, further including: a charging means for causing the motor to generate electricity after the electricity supply time has elapsed and charging the battery with the generated electricity.

Further, according to a fifth aspect, there is disclosed an embodiment of the hybrid motorcycle according to any one of the first to fourth aspects, in which the acceleration data acquisition means acquires the accelerator operation amount and the accelerator operation speed as the acceleration data, and the delay time setting means uses a longer one of a first delay time and a second delay time, the first delay time being obtained based on the accelerator operation amount acquired by the acceleration data acquisition means, and the second delay time being obtained based on the accelerator operation speed acquired by the acceleration data acquisition means.

Further, according to a sixth aspect, there is disclosed an embodiment of the hybrid motorcycle according to any one of the first to fifth aspects, in which the motor control means includes a prerotation means for rotating the motor in conjunction with rotation of the engine after an engine start and in an operating state in which power from the motor is not applied to the crankshaft.

Further, according to a seventh aspect, there is disclosed an embodiment of the hybrid motorcycle according to the sixth aspect, in which a rotation start timing, at which the prerotation means rotates the motor in conjunction with rotation of the engine, is set to a timing after an engine start and when an engine speed is lower than an idling speed.

Further, according to an eighth aspect, there is disclosed an embodiment of the hybrid motorcycle according to the sixth or seventh aspect, further including: a charge level determination means for determining whether or not the charge level of the battery is lower than a predetermined minimum charge level; and a precharging means for causing the motor to generate electricity and charging the battery with the generated electricity after an engine start and in an operating state in which power from the motor is not applied to the crankshaft, if the charge level determination means determines that the charge level of the battery is lower than the minimum charge level.

### Effect of these Aspects:

According to the embodiment of the first aspect, a delay time in accordance with the acceleration data (operation amount of the accelerator operating element, accelerator operation speed) is set by the delay time setting means when the accelerator operating element is operated from an idling state to the acceleration side. The motor is supplied with electricity to generate power when the delay time has elapsed from the moment when the accelerator operating element was operated.

Meanwhile, the length of time from the start of an accelerator operation to the completion of engagement of the automatic centrifugal clutch (hereinafter simply referred to as "clutch engagement time") changes according to the accelerator operation amount (magnitude of the output torque from the engine). That is, as the accelerator operation amount becomes larger, the output torque becomes larger and hence the clutch engagement time becomes longer.

According to the embodiment, according to the first aspect, a delay time in accordance with the clutch engagement time is set, and the motor is caused to operate after a throttle operation is started and after the delay time has elapsed. Thus, the auxiliary power from the motor can be applied to the automatic centrifugal clutch with the clutch completely engaged.

Therefore, the embodiment, according to the first aspect, can provide a hybrid motorcycle with excellent start and acceleration performance, in which the power from the engine and the auxiliary power from the motor can be efficiently transmitted via the automatic centrifugal clutch to the driving wheel.

An existing sensor for use to control the rotation of the engine can be used to detect the operation amount and the operation speed of the accelerator operating element. Thus, it is not necessary to provide a new member for detection purposes, such as sensor or switch, in order to implement the present invention. In this way, the present invention can be implemented while reducing the cost.

The hybrid motorcycle 1 according to the embodiment, according to first aspect, does not include a sensor or a switch exclusively for detecting the completion of engagement of the automatic centrifugal clutch. Thus, according to the hybrid motorcycle, the operation to apply auxiliary power can be performed with high reliability compared to the case where a dedicated sensor or switch is used to detect the completion of engagement of the clutch.

According to the embodiment of the second aspect, the supply of electricity to the motor is discontinued after the vehicle starts running or accelerates. Thus, the consumption of electricity in the battery can be reduced compared to the case where the supply of electricity to the motor is continued after the vehicle starts running or accelerates.

According to the embodiment of the third aspect, the charge level of the battery is not lowered excessively. Thus, it is possible to secure electricity for use to cause the motor to generate auxiliary power next time.

According to the embodiment of the fourth aspect, the battery can be charged after electricity in the battery has been consumed. Thus, it is possible to secure sufficient electricity to be supplied to the motor 13 next time.

According to the embodiment of the fifth aspect, the delay time can be set to be longer as the accelerator operation speed is higher, even if the accelerator operation amount is constant. Thus, the power from the motor can be applied to the automatic centrifugal clutch at an appropriate timing in accordance with the accelerator operation speed, even in the case of a motorcycle which is often caused to start running or accelerate with the accelerator fully open, such as motorcycle incorporating a small-displacement engine.

Therefore, according to the embodiment of the fifth aspect, the power from the engine and the auxiliary power from the motor can be more reliably transmitted to the rear wheel.

According to the embodiment of the sixth aspect, it is possible to prevent the motor, which is not driving to generate auxiliary power, from serving as a load on the engine, which can stabilize the rotation of the engine in an idling state.

According to the embodiment of the seventh aspect, the motor is rotated after an engine start and before the engine speed reaches an idling speed, which reduces a load on the engine. Thus, the engine shifts to an idling state while rotating stably after an engine start, even if the motor is connected to the crankshaft. Therefore, the present invention can provide a hybrid motorcycle in which the series of operations, including starting the engine and the vehicle starting running and accelerating, can be performed smoothly.

According to the embodiment of the eighth aspect, if the charge level of the battery is low, the battery can be charged when auxiliary power from the motor is not necessary, for example when the vehicle is at a halt. Thus, according to the present invention, the battery can be prevented from being over-discharged, and it is possible to secure electricity for use to cause the motor to generate auxiliary power next time.

As a particularly preferred embodiment, there is provided, in order to provide a hybrid motorcycle with excellent start and acceleration performance in spite of including an automatic centrifugal clutch, an embodiment in which an automatic centrifugal clutch 16 is interposed in a power transmission system between an engine 12 and a driving wheel; a motor 13, which has a function to generate electricity and also is supplied with electricity from a battery 23 to generate auxiliary power, is connected to a crankshaft 36 of the engine 12; an acceleration data acquisition means is provided for acquiring the accelerator operation amount and the accelerator operation speed; a delay time setting means is provided for setting the delay time according to the acceleration data; and a motor control means is provided for supplying the motor 13 with a magnitude of electricity in accordance with the acceleration operation amount after the delay time has elapsed from the moment when an accelerator grip was operated.

Thus, the embodiment of the first aspect provides a hybrid motorcycle having an automatic centrifugal clutch interposed in a power transmission system between an engine and a driving wheel, and a motor for auxiliary power connected to a crankshaft of the engine, the motor having a power generation function and also being supplied with electricity from a battery to rotate, the hybrid motorcycle comprising: an acceleration data acquisition means for acquiring as acceleration data at least an accelerator operation amount of an accelerator operating element, of accelerator operation amount and accelerator operation speed thereof; a delay time setting means for setting a delay time by which start of operation of the motor is delayed, according to the acceleration data acquired by the acceleration data acquisition means; and a motor control means for supplying the motor with a magnitude of electricity in accordance with the acceleration data after the delay time has elapsed from a moment when the accelerator operating element in an idling state was operated.

Further, the embodiment of the second aspect provides a hybrid motorcycle further comprising: an electricity supply restriction means for continuing supply of electricity to the motor for a predetermined electricity supply time and discontinuing the supply of electricity to the motor after the electricity supply time has elapsed.

Further, the embodiment of the third aspect provides a hybrid motorcycle further comprising: a charge level detection means for detecting a charge level of the battery, wherein the electricity supply restriction means shortens the electricity supply time as the charge level detected by the charge level detection means becomes lower.

Further, the embodiment of the fourth aspect provides a hybrid motorcycle further comprising: a charging means for causing the motor to generate electricity after the electricity supply time has elapsed and charging the battery with the generated electricity.

Further, the embodiment of the fifth aspect provides a hybrid motorcycle, wherein the acceleration data acquisition means acquires the accelerator operation amount and the accelerator operation speed as the acceleration data, and the delay time setting means uses a longer one of a first delay time and a second delay time, the first delay time being obtained based on the accelerator operation amount acquired by the acceleration data acquisition means, and the second delay time being obtained based on the accelerator operation speed acquired by the acceleration data acquisition means.

Further, the embodiment of the sixth aspect provides a hybrid motorcycle, wherein the motor control means comprises a prerotation means for rotating the motor in conjunction with rotation of the engine after an engine start and in an operating state in which power from the motor is not applied to the crankshaft.

Further, the embodiment of the seventh aspect provides a hybrid motorcycle, wherein a rotation start timing, at which the prerotation means rotates the motor in conjunction with rotation of the engine, is set to a timing after an engine start and when an engine speed is lower than an idling speed.

Further, the embodiment of the eighth aspect provides a hybrid motorcycle further comprising: a charge level determination means for determining whether or not the charge level of the battery is lower than a predetermined minimum charge level; and a precharging means for causing the motor to generate electricity and charging the battery with the generated electricity after an engine start and in an operating state in which power from the motor is not applied to the crankshaft, if the charge level determination means determines that the charge level of the battery is lower than the minimum charge level.

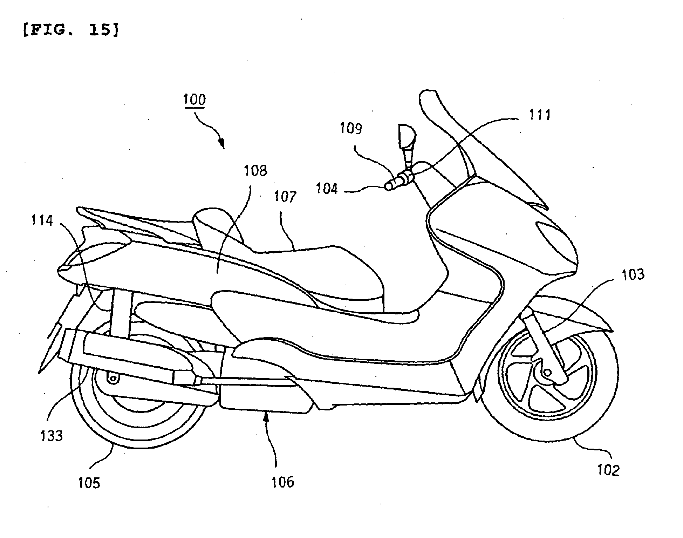

A description will hereinafter be made of a further embodiment of the hybrid motorcycle with reference to FIGs. 15 to 28.

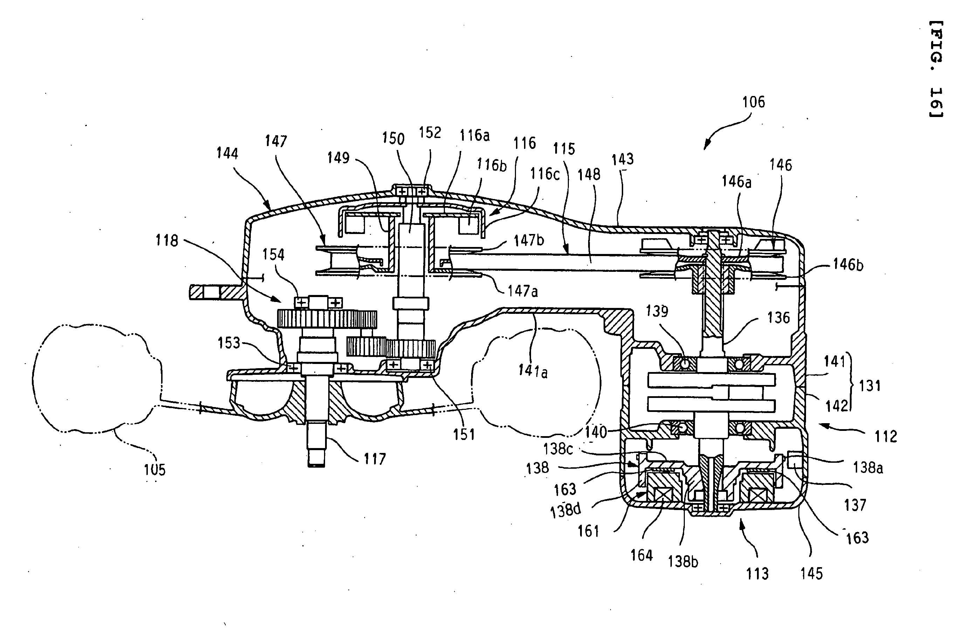

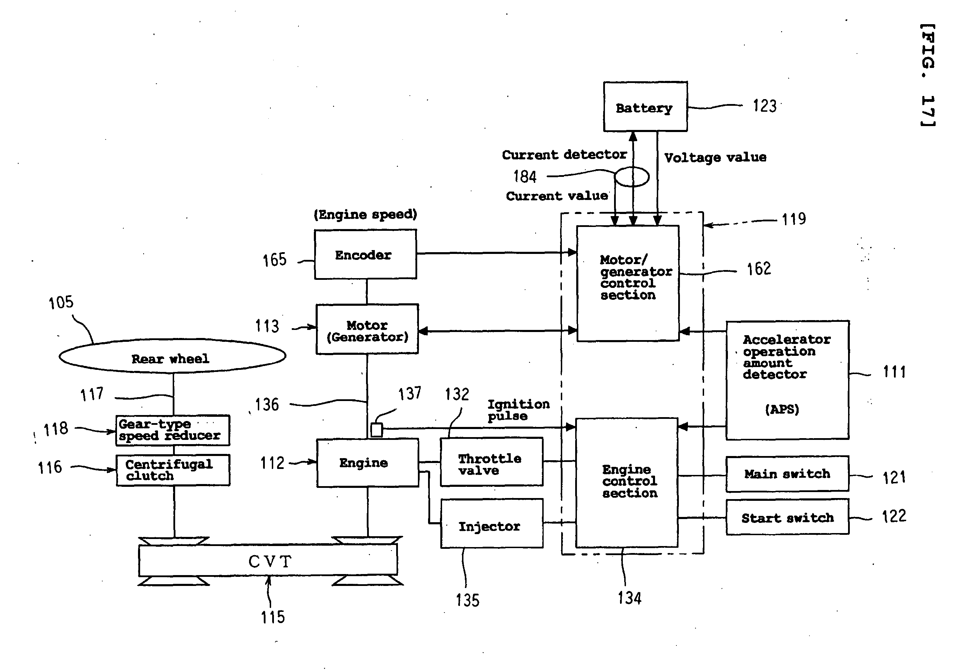

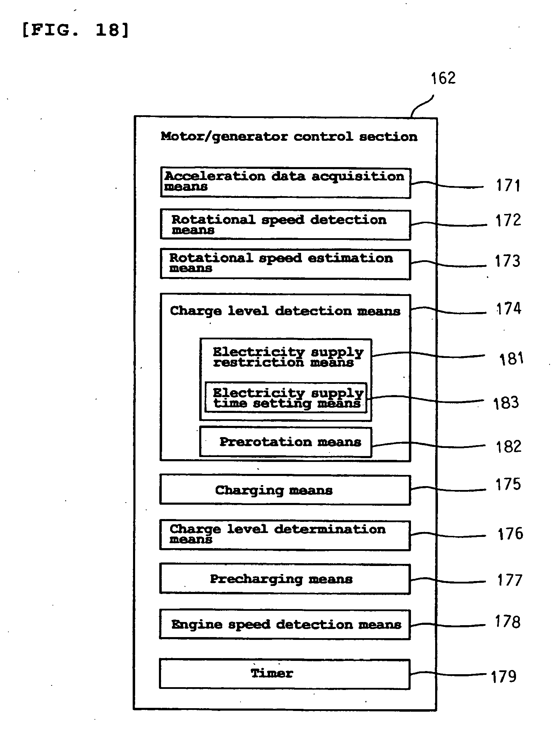

FIG. 15 is a side view of the hybrid motorcycle according to the present teaching. FIG. 16 is a horizontal cross sectional view of a power unit. FIG. 17 is a block diagram showing the configuration of a control system of the hybrid motorcycle according to the present teaching. FIG. 18 is a block diagram showing the configuration of a motor/generator control section.

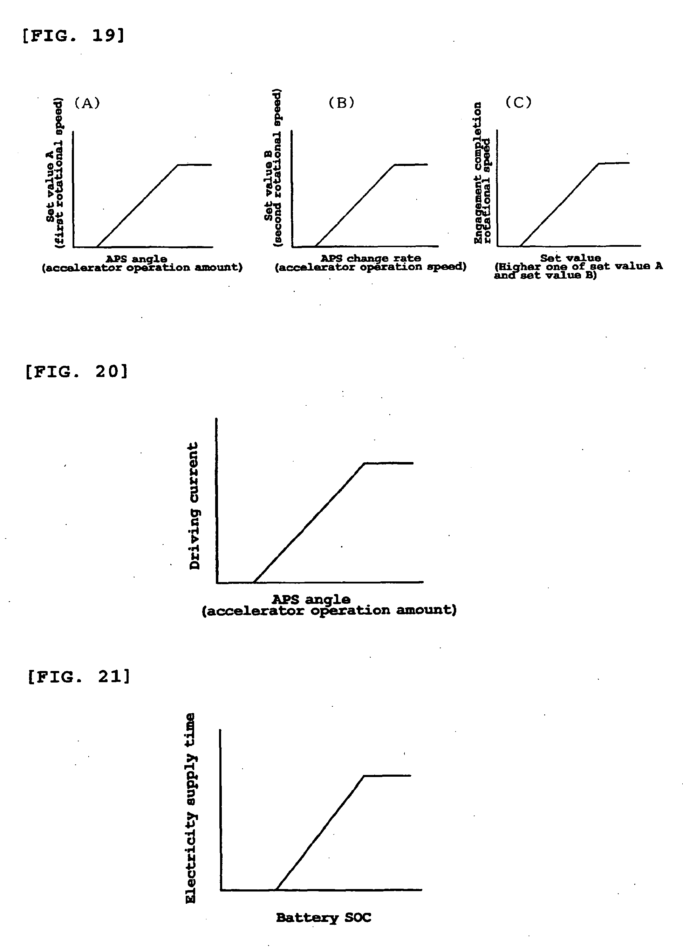

FIG. 19 shows graphs for explaining how to estimate the engagement completion rotational speed, in which FIG. 19(A) is a graph as a map for obtaining a first rotational speed based on the APS angle, FIG. 19(B) is a graph as a map for obtaining a second rotational speed based on the APS change rate, and FIG. 19(C) is a graph showing changes in actual engagement completion rotational speed based on the first rotational speed and the second rotational speed.

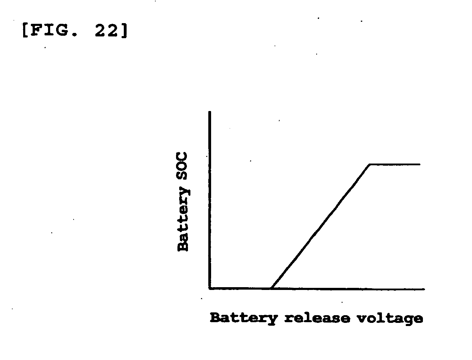

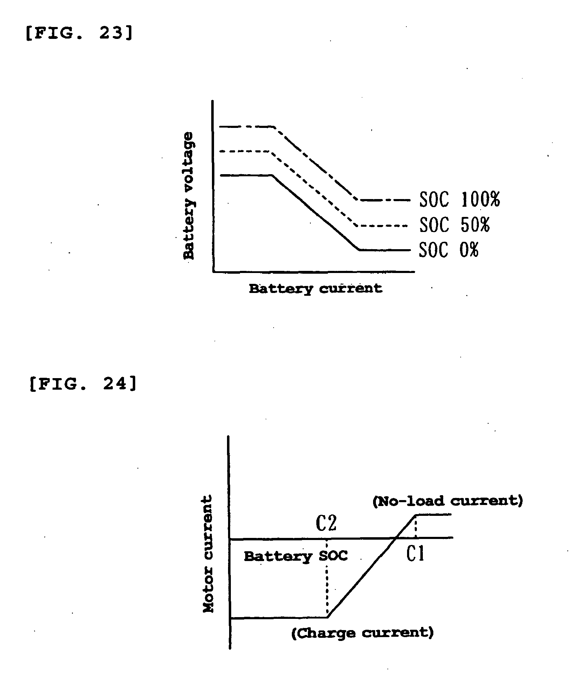

FIG. 20 is a graph showing the relation between the APS angle and the driving current for a motor. FIG. 21 is a graph showing the relation between the charge level of a battery and the electricity supply time to the motor. FIG. 22 is a graph as a map for obtaining the charge level of the battery based on the open circuit voltage of the battery. FIG. 23 is a graph as a map for obtaining the charge level of the battery based on the battery current and the battery voltage. FIG. 24 is a graph as a map for setting the charge current and the discharge current for a charge level of the battery.

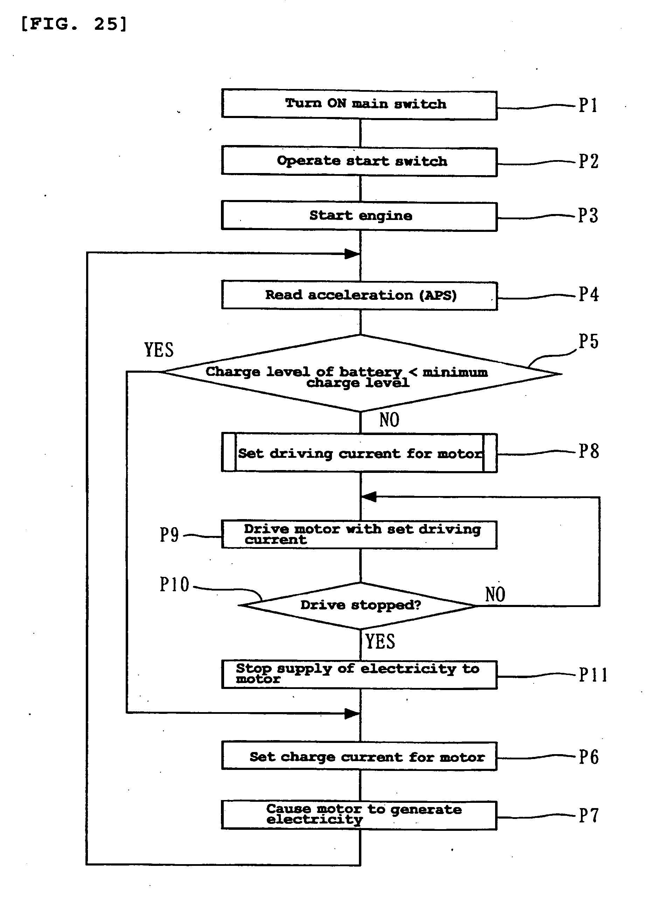

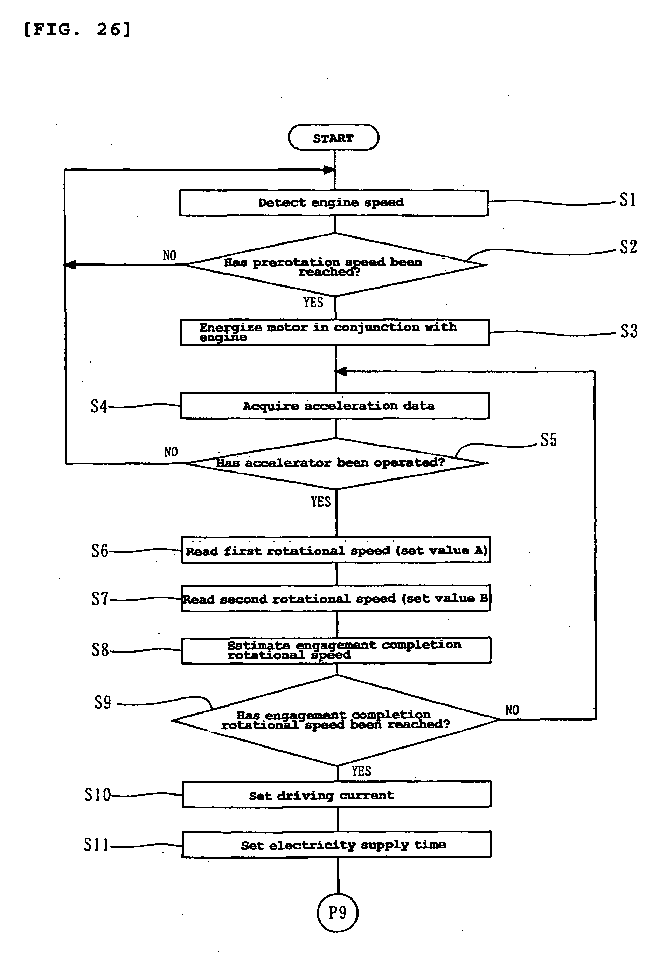

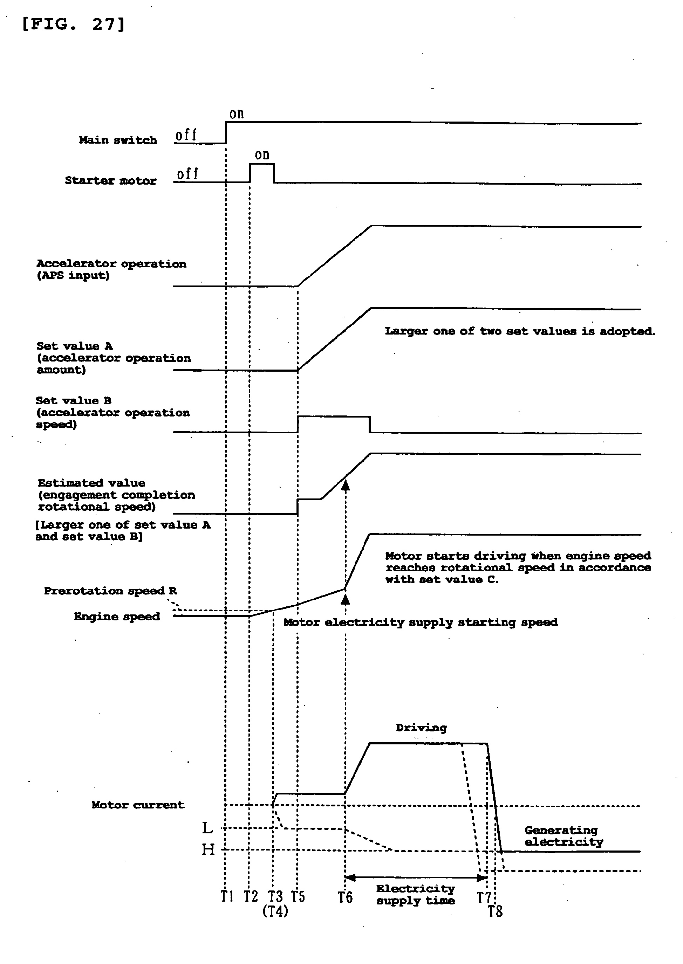

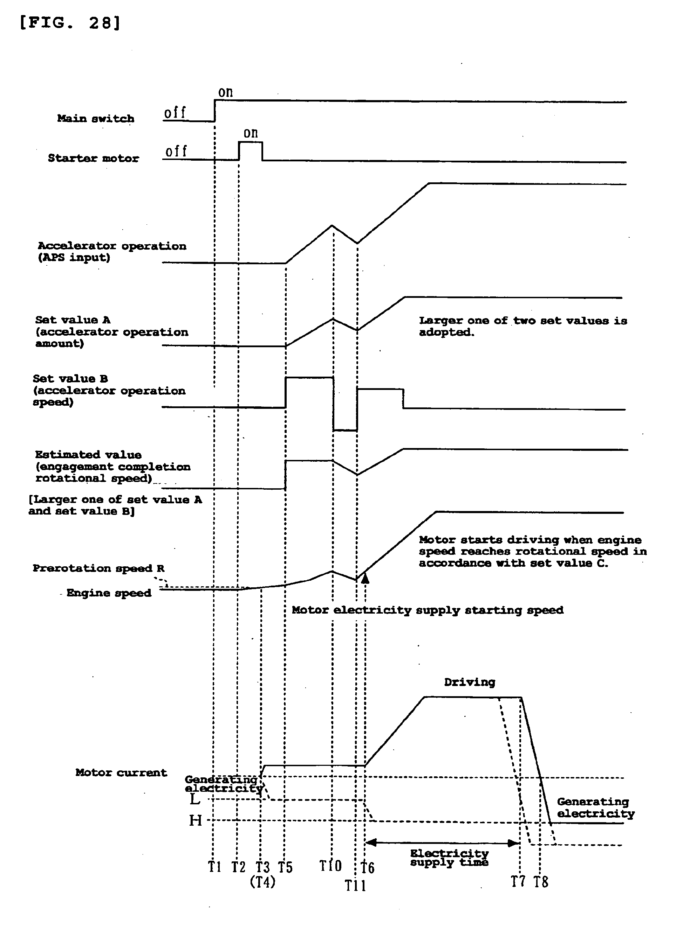

FIG. 25 is a flowchart for explaining the operation of the hybrid motorcycle according to the present teaching. FIG. 26 is a flowchart for explaining the operation of a control device after an engine start until the motor generates auxiliary power. FIGs. 27 and 28 are each a time chart for explaining the operation of the hybrid motorcycle according to the present teaching. FIG. 27 corresponds to the case where an accelerator is operated such that the accelerator operation amount increases generally in proportion to the time from start to end of the operation. FIG. 28 corresponds to the case where the accelerator is once reversed slightly at the middle of the starting operation and then the starting operation is performed again.

In the drawings, reference numeral 100 denotes a hybrid motorcycle according to this embodiment. Reference numeral 102 denotes a front wheel of the motorcycle 100, 103 a front fork, 104 steering handlebars, 105 a rear wheel as the driving wheel, 106 a power unit for driving the rear wheel 105, 107 a seat, and 108 a body cover.

The front wheel 102 can be steered to the left and right by rotationally moving the steering handlebars 104. An accelerator grip 109 for increasing and decreasing the driving force of the power unit 106 and a front wheel brake lever (not shown) are provided at an end of the steering handlebars 104 on the right side of the vehicle body. The accelerator grip 109 constitutes the accelerator operating element of the present teaching.

As shown in FIG. 16, the accelerator grip 109 is supported for free rotational movement on the steering handlebars 104, although not shown. The accelerator grip 109 is provided with an accelerator operation amount detector 111 (hereinafter simply referred to as "APS" (accelerator position sensor)) for detecting the operation amount (rotational angle relative to the handlebars) of the accelerator grip 109.

The rear wheel 105 is supported for free rotation at the rear end of the power unit 106 to be discussed later, in order to be rotated by the power from an engine 112 and the auxiliary power from a motor 113 provided in the power unit 106.

The power unit 106 is a unit swing type, and supported for free vertical swinging movement on a body frame by a link mechanism (not shown) coupled to the front end. As shown in FIG. 15, a cushion unit 114 is interposed between the rear end of the power unit 106 and the body frame (not shown).

As shown in FIG. 16, the power unit 106 is made up of an engine 112 and a motor 113 provided at its end on the front side of the vehicle (on the right side in FIG. 16), a belt-type continuously variable transmission 115 (hereinafter simply referred to as "CVT") extending longitudinally on the left side of the vehicle body, an automatic centrifugal clutch 116 provided at the rear end of the CVT 115, a gear-type speed reducer 118 provided between the automatic centrifugal clutch 116 and an axle 117 of the rear wheel 105, a control device 119 (see FIG. 17) for controlling the operation of the engine 112 and the motor 113, etc.

A main switch 121, a start switch 122, a battery 123, etc., are connected to the control device 119. The start switch 122 is intended to start the engine 112, and in this embodiment uses the motor 113 to start the engine 112. At the time of starting, the motor 113 substantially functions as a starter motor. Alternatively, a dedicated starter motor may be used to start the engine 112, as in the case with common conventional motorcycles.

The engine 112 is a 4-cycle engine including a crankcase 131 shown in FIG. 16, and a cylinder (not shown) provided in front of the crankcase 131 and extending upward. An intake system having a throttle valve 132 (see FIG. 17) and an exhaust system having a muffler 133 (see FIG. 15) are connected to the cylinder.

The throttle valve 132 is connected to the accelerator grip 109 via a wire (not shown), and opens and closes through operation of the accelerator grip 109. The throttle valve 132 is provided with a throttle valve opening sensor (not shown) for detecting the opening of the throttle valve 132. The throttle valve opening sensor is connected to an engine control section 134 of the control device 119 shown in FIG. 17 and to be discussed later, and sends to the engine control section 134 the opening of the throttle valve 132 as detected data.

The engine 112 is arranged in such that the fuel injector 135 (see FIG. 17) injects fuel into an intake passage. The fuel injection amount from the fuel injector 135 is set by the engine control section 134 according to the opening of the throttle valve 132 and the speed of the engine 112. The speed of the engine 112 is calculated utilizing the number of ignition pulses generated by an ignition system having an ignition plug (not shown). The ignition timing of the engine 112 is set by the engine control section 134 based on the rotational angle of the crankshaft 136.

The rotational angle of the crankshaft 136 is detected by an electromagnetic pickup 137 (see FIG. 16) attached to the crankcase 131. The electromagnetic pickup 137 is positioned to face a tooth 138a provided to a rotor 138 (see FIG. 16) of the motor 113 to be discussed later, and sends a detection signal to the engine control section 134 when it has detected the tooth 138a magnetically.

As shown in FIG. 16, the crankshaft 136 of the engine 112 is supported on the crankcase 131 by bearings 139, 140 for free rotation. The crankcase 131 is made up of a left half 141 and a right half 142. The left half 141 is formed integrally with a longitudinally extending portion 141 a extending longitudinally on the left side of the rear wheel 105, to which a transmission case cover 143 is attached.

The left half 141 of the crankcase 131 and the transmission case cover 143 constitute a transmission case 144 housing and also supporting the CVT 115, the automatic centrifugal clutch 116, the gear-type speed reducer 118, etc.

A motor housing 145 for the motor 113 to be discussed later is attached to the right half 142 of the crankcase 131.

As shown in FIG. 16, a driving pulley 146 of the CVT 115 is mounted to an end of the crankshaft 136 on the left side of the vehicle body. The driving pulley 146 is made up of a fixed sheave half 146a fixed to the crankshaft 136, a movable sheave half 146b supported on the crankshaft 136 so as to move freely axially thereof but not to rotate relative thereto, and a drive mechanism (not shown) for moving the movable sheave half 146b axially on the crankshaft 136.

The CVT 115 is made up of the above driving pulley 146, a driven pulley 147 positioned on the rear side of the vehicle body, and a V-belt 148 wrapped around both the pulleys 146, 147. As conventionally well known, the CVT 115 continuously varies the rotation of the crankshaft 136 for transmission to a rotary shaft 149 of the driven pulley 147. The driven pulley 147 is made up of a fixed sheave half 147a fixed to the rotary shaft 149, and a movable sheave half 147b supported on the rotary shaft 149 so as to be movable axially thereof and also be urged toward the fixed sheave half 147a by a compression coil spring (not shown).

The rotary shaft 149 is formed in the shape of a cylinder, and supported for free rotation through a bearing (not shown) on an intermediate shaft 150 passing through the hollow part of the rotary shaft 149. The intermediate shaft 150 is supported for free rotation on the transmission case 144 through bearings 151, 152. An input part 116a of the automatic centrifugal clutch 116 is connected to an end of the rotary shaft 149 on the left side of the vehicle body.

The automatic centrifugal clutch 116 is made up of the above input part 116a having a clutch shoe 116b, and a clutch outer 116c housing the input part 116a. The clutch outer 116c is fixed to an end of the intermediate shaft 150 on the left side of the vehicle body.

An end of the intermediate shaft 150 on the right side of the vehicle body is connected to the axle 117 of the rear wheel 105 via the gear-type speed reducer 118, which is a two-staged type. The axle 117 of the rear wheel 105 is supported for free rotation on the transmission case 144 through bearings 153, 154.

With the thus constructed power unit 106, rotation of the crankshaft 136 is transmitted from the driving pulley 146 via the V-belt 148 to the driven pulley 147 of the CVT 115, and then from the rotary shaft 149 to the input part 116a of the automatic centrifugal clutch 116. As the rotation of the crankshaft 136 increases, the rotation of the input part 116a increases. Then, a centrifugal force increases the diameter of the clutch shoe 116b, which causes the clutch shoe 116b to engage with the clutch outer 116c. This in turn causes the clutch outer 116c to rotate. This rotation is transmitted from the intermediate shaft 150 via the gear-type speed reducer 118 to the axle 117 (rear wheel 105).

As shown in FIG. 16, a rotor 138 of the motor 113 to be discussed later is mounted to an end of the crankshaft 136 on the right side of the vehicle body.

The motor 113 is intended to apply auxiliary power to the crankshaft 136, and has a function to generate electricity by being driven by the engine 112. The motor 113 includes the above rotor 138 and a stator 161 fixed to the motor housing 145, and as shown in FIG. 17, is connected to a motor/generator control section 162 of the control device 119.

The rotor 138 is made up of a boss 138b fixed to the crankshaft 136, a disk 138c extending radially from an end of the boss 138b on the left side of the vehicle body, a cylinder 138d housing the disk 138c, and a permanent magnet 163 secured to an end surface of the disk 138c on the right side of the vehicle body. The tooth 138a to be detected by the electromagnetic pickup 137 is formed on the outer periphery of the cylinder 138d. The motor 113 directly drives the crankshaft 136.

The stator 161 incorporates a coil 164, and is fixed to the motor housing 145 in such a manner as to be partially inserted into the cylinder 138d and face the permanent magnet 163. The stator 161 is provided on a circumference centered on the axis of the crankshaft 136.

The stator 161 of the motor 113 also incorporates an encoder 165 (see FIG. 17) for detecting the speed of the rotor 138 (speed of the crankshaft 136).

The motor/generator control section 162 is intended to control the timing for supplying the motor 113 with electricity and the magnitude of the electricity, and also switch the motor 113 to function as a generator. As shown in FIG. 18, the motor/generator control section 162 includes an acceleration data acquisition means 171, a rotational speed detection means 172, a rotational speed estimation means 173, a motor control means 174, a charge level detection means 175, a charging means 176, a charge level determination means 177, a precharging means 178 and a timer 179.

The acceleration data acquisition means 171 acquires the accelerator operation amount (operation angle of the accelerator grip 109) detected by the APS 111 and the accelerator operation speed (speed at the time when the accelerator grip 109 is operated) as acceleration data.

The rotational speed detection means 172 detects the speed of the engine 112. According to this embodiment, the rotational speed detection means 172 is arranged to obtain the speed of the crankshaft 136 using the encoder 165. Instead of the speed of the crankshaft 136, the rotational speed detection means 172 may detect the speed of the rotor 138 of the motor 113. Also, the rotational speed detection means 172 may detect the rotational speed of a rotary body directly connected to the crankshaft 136, the rotor 138 or the like for rotation in sync therewith, or that of a rotary body (not shown) connected to the crankshaft 136, the rotor 138 or the like via a transmission means (not shown) such as gear or chain for rotation in sync therewith. To detect the speed of the rotor 138, the electromagnetic pickup 137 may be used.

The rotational speed estimation means 173 estimates the speed of the engine 112 at which the motor 113 is caused to generate auxiliary power, in a manner to be described later. Here, estimation is made in such that the estimated rotational speed is the rotational speed at which the automatic centrifugal clutch is completely engaged (engagement completion rotational speed).

For example, in the case where the accelerator grip 109 is operated greatly and rapidly, the power from the engine 112 to be applied to the automatic centrifugal clutch 116 becomes relatively large, which makes the rotational speed at which the automatic centrifugal clutch 116 is completely engaged relatively high. Thus, the engagement completion rotational speed is estimated to be relatively high. In the case where the engagement completion rotational speed is not estimated and the motor 113 is supplied with electricity in conjunction with the accelerator operation, auxiliary power is generated by the driving of the motor 113 right at the start of the accelerator operation, and too large a torque is applied before the automatic centrifugal clutch 116 has been completely engaged. Thus, the clutch shoe 116b may slip to prevent the vehicle from starting running.

The rotational speed estimation means 173 estimates the engagement completion rotational speed based on a higher one of a provisional rotational speed estimated based on the accelerator operation amount (hereinafter referred to as "first rotational speed") and a provisional rotational speed estimated based on the accelerator operation speed (hereinafter referred to as "second rotational speed").

Now, a detailed description will be made of how to estimate the engagement completion rotational speed. The rotational speed estimation means 173 according to this embodiment estimates the final engagement completion rotational speed using the maps shown in FIGs. 19(A) to 19(C). FIG. 19(A) is a graph as a map for obtaining a set value A, which is equivalent to the first rotational speed in accordance with the accelerator operation amount. FIG. 19(B) is a graph as a map for obtaining a set value B, which is equivalent to the second rotational speed in accordance with the accelerator operation speed. FIG. 19(C) is a graph as a map for estimating the final engagement completion rotational speed based on the set value A and the set value B.

As shown in FIG. 19(A), the set value A is set in such that the rotational speed becomes higher as the accelerator operation amount becomes larger until the accelerator operation amount reaches a predetermined upper limit, and in such that the rotational speed maintains a constant maximum speed, even if the accelerator operation amount increases, after the accelerator operation amount has reached the upper limit.

As shown in FIG. 19(B), the set value B is set in such that the rotational speed becomes higher as the accelerator operation speed becomes higher until the accelerator operation speed reaches a predetermined upper limit, and in such that the rotational speed maintains a constant maximum speed, even if the accelerator operation speed increases, after the accelerator operation speed has reached the upper limit.

The rotational speed estimation means 173 reads a set value A in accordance with the accelerator operation amount acquired by the acceleration data acquisition means 171, from the map shown in FIG. 19(A). The rotational speed estimation means 173 also reads a set value B in accordance with the accelerator operation speed acquired by the acceleration data acquisition means 171, from the map shown in FIG. 19(B). The rotational speed estimation means 173 then compares the set value A and the set value B, applies the larger one of the set values A, B to the map shown in FIG. 19(C), and reads the final engagement completion rotational speed as a set value from the drawing.

The motor control means 174 includes an electricity supply restriction means 181 and a prerotation means 182 to be discussed later, and supplies the motor 113 with a magnitude of electricity in accordance with the accelerator operation amount after the accelerator grip 109 in an idling state is operated and the speed of the engine 112 has reached the engagement completion rotational speed.

Whether or not the accelerator grip 109 is in an idling state is detected using the accelerator operation amount acquired by the acceleration data acquisition means 171. That is, the accelerator grip 109 is determined to be in an idling state if the accelerator operation amount is 0.

Whether or not the accelerator grip 109 has been operated is detected by determining whether or not the accelerator operation amount has changed from 0.

In supplying the motor 113 with a magnitude of electricity in accordance with the accelerator operation amount, the motor control means 174 reads a magnitude of driving current in accordance with the accelerator operation amount, from the map shown in FIG. 20, and controls the voltage such that the magnitude of driving current flows through the motor 113. The motor control means 174 supplies the motor 113 with electricity only when the charge level of the battery 123 is above a minimum charge level to be discussed later.

The electricity supply restriction means 181 restricts the length of time for the motor control means 174 to supply the motor 113 with electricity, to a predetermined electricity supply time. The electricity supply time is set by an electricity supply time setting means 183 to be discussed later. That is, the electricity supply restriction means 181 continues the supply of electricity to the motor 113 for the electricity supply time, and discontinues the supply of electricity to the motor 113 after the electricity supply time has elapsed. The electricity supply time is counted by the timer 179.

The electricity supply time setting means 183 changes the electricity supply time according to the charge level of the battery 123 detected by the charge level detection means 175 to be discussed later. In changing the electricity supply time, the electricity supply time setting means 183 uses the map shown in FIG. 21. FIG. 21 is a graph showing the driving time for a charge level of the battery 123 (battery SOC). As shown in the graph, the electricity supply time is set to be shorter as the charge level of the battery 123 becomes lower. The electricity supply time setting means 183 reads an electricity supply time in accordance with the present charge level of the battery 123, from the map shown in FIG. 21, and sends the electricity supply time to the electricity supply restriction means 181. That is, the electricity supply restriction means 181 shortens the electricity supply time as the charge level detected by the electricity supply time setting means 183 becomes lower.

The prerotation means 182 is intended to prevent the motor 113 not generating auxiliary power from serving as a load on the engine 112, and arranged to start energization in order to rotate the motor 113 when the speed of the engine 112 has reached a predetermined prerotation speed. In this embodiment, the prerotation speed is set to be lower than the speed of the engine 112 in an idling state (idling speed).

That is, in the hybrid motorcycle 100 according to this embodiment, the prerotation means 182 rotates the motor 113 in conjunction with the rotation of the engine 112 after an engine start and when the engine speed has reached the prerotation speed lower than the idling speed. The speed of the engine 112 is detected by the rotational speed detection means 172.

The charge level detection means 175 obtains a charge level (SOC) of the battery 123 in accordance with the release voltage of the battery 123 using a map as the graph shown in FIG. 22, and then adds, to this charge level, the current amount while the battery 123 is charging and the current amount while the battery 123 is discharging to obtain the present charge level. The battery release voltage is detected by the charge level detection means 175 while electricity in the battery 123 is not consumed or while the battery 123 is not charged, for example when the engine is stopped. The battery 123 is charged by the charging means 176 to be discussed later. The current while charging and the current while the battery 123 is discharging are measured by a current detector 184 (see FIG. 17) provided in the circuit connecting the battery 123 and the motor/generator control section 162.

Instead of measuring and adding the charge current and the discharge current each time as discussed above, a map as shown in FIG. 23 may be used to detect the charge level of the battery 123 during engine operation. In the map shown in FIG. 23, the charge level (SOC) of the battery 123 is defined by the battery current and the battery voltage. The map shows the relation between the voltage between the terminals of the battery 123 and the current flowing through the battery 123 at each charge level from 0% to 100%. In the case of using this map to obtain the charge level of the battery 123, the charge level detection means 175 detects the present values of the current flowing through the battery 123 and the voltage between the terminals of the battery 123, and reads a charge level (SOC) in accordance with these current and voltage values from the map.

The charging means 176 causes the motor 113 to function as a generator and to generate electricity after the above electricity supply time has elapsed, and charges the battery 123 with the generated electricity. The charging means 176 also changes the amount of electricity to be generated according to the charge level detected by the charge level detection means 175. That is, the charging means 176 reduces the charge current when the charge level of the battery 123 is relatively high, and increases the charge current when the charge level of the battery 123 is relatively low.

The charge level determination means 177 compares the charge level of the battery 123 detected by the charge level detection means 175 and the predetermined minimum charge level if auxiliary power is not generated by the driving of the motor 113. The charge level determination means 177 also sends a control signal to the prerotation means 182 to discontinue the supply of electricity to the motor 113, and sends a control signal to the precharging means 178 to be discussed later to start charging, when the charge level of the battery 123 is lower than the minimum charge level. On receiving the control signal, the prerotation means 182 stops the supply of electricity to the motor 113.

When the control signal is sent from the charge level determination means 177, the precharging means 177 causes the motor 113 to function as a generator and to generate electricity if auxiliary power is not generated by the driving of the motor 113. The charge current while generating electricity is read from the map shown in FIG. 24 and set. The map shows the charge current and the discharge current of the battery 123 for a charge level (SOC) of the battery 123.

As can be understood from this map, the precharging means 178 according to this embodiment increases the charge current as the charge level of the battery 123 becomes lower when the charge level is between the minimum charge level C1 and a limit value C2 lower than that. Also, the precharging means 178 performs charging at a constant maximum charge current when the charge level is lower than the limit value C2. When the motor 113 is caused to function as a generator while the engine 112 in low-speed operation, the engine control section 134 of the hybrid motorcycle 100 increases the fuel injection amount from the injector 135 so as to stabilize the rotation of the engine 112.

At this time, for example when the accelerator grip 109 is in an idling position, the fuel injection amount is controlled such that the engine speed reaches the idling speed during normal operation. When the accelerator operation amount is increased from the idling state, the engine control section 134 increases the fuel injection amount according to the increase in accelerator operation amount. Thus, since the fuel injection amount is increased according to an increase in load due to electricity generation by the motor 113, the engine 112 can be prevented from stalling because of such an increase in load due to electricity generation.

Now, a description will be made of the operation of the motor/generator control section 162 constructed as described above using the flowcharts shown in FIGs. 25 and 26 and the time chart shown in FIG. 27.

The engine 112 is started by turning ON the main switch 121 and then turning ON the start switch 122 in steps P1 to P3 of the flowchart shown in FIG. 25.

The timing of turning ON the main switch 121 is indicated as time T1 in FIG. 27 and the timing of turning ON the start switch 122 is indicated as time T2 in FIG. 27.

After an engine start, the acceleration data acquisition means 171 acquires acceleration data (accelerator operation amount and accelerator operation speed) in step P4, and the charge level determination means 177 determines in step P5 whether or not the charge level of the battery 123 is lower than the minimum charge amount.

If the charge level of the battery 123 is equal to minimum charge level or lower, the precharging means 178 reads a charge current for the motor 113 from the map shown in FIG. 24 in step P6, and causes the motor 113 to function as a generator and to generate electricity so as to obtain the charge current in step P7. Then, the process returns to step P4 to repeat the above processes. The timing at which electricity generation is started in step P7 is indicated as time T3 in FIG. 27.

On the other hand, if it is determined in step P5 that the charge level of the battery 123 is higher than the minimum charge level, the process proceeds to step P8, where the driving current for the motor 113 is set. Here, the operation performed in step P8 is described with reference to the flowchart shown in FIG. 26.

First of all, the speed of the engine 112 is detected in step S1 of the flowchart shown in FIG. 26, and energization is started to rotate the motor 113 when the engine speed has reached the prerotation speed as shown in steps S2 to S3. The prerotation speed is indicated as symbol R in FIG. 27. Also, the timing at which the motor 113 rotates in conjunction with the rotation of the engine 112 is indicated as time T4 in FIG. 27.

Subsequently, acceleration data are acquired again in step S4, and it is determined in step S5 whether or not an accelerator operation has been performed. If an accelerator operation has not been performed, the process returns to step S1. If an accelerator operation has been performed, a set value A (first rotational speed) in accordance with the accelerator operation amount at that time is read from the map shown in FIG. 19(A) in step S6, and a set value B (second rotational speed) in accordance with the accelerator operation speed at that time is read from the map shown in FIG. 19(B) in step S7. The timing at which the accelerator operation has been performed is indicated as time T5 in FIG. 27.

Then, in step S8, based on the larger one of the set value A and the set value B (the one that brings about a higher rotational speed), the final engagement completion rotational speed is read as a set value from the map shown in FIG. 19(C).

After the engagement completion rotational speed is estimated in this way, it is determined in step S9 whether or not the speed of the engine 112 has reached the engagement completion rotational speed. If the speed of the engine 112 has not reached the engagement completion rotational speed, the process returns to step S4. After the speed of the engine 112 has reached the engagement completion rotational speed, the driving current for the motor 113 is read from the map shown in FIG. 20 in step S10, and the electricity supply time is read from the map shown in FIG. 21 in step S11. The electricity supply time becomes shorter as the charge level of the battery 123 becomes lower.

After preparations have been made to cause the motor 113 to generate auxiliary power, the driving current is passed to the motor 113 to generate auxiliary power by the driving of the motor 113 in step P9 of the flowchart shown in FIG. 25. The timing of generating auxiliary power is indicated as time T6 in FIG. 27. At this time, the timer 179 starts counting the time.

At this time, the speed of the engine 112 has increased to the engagement completion rotational speed since the start of the accelerator operation (T5), and the automatic centrifugal clutch 116 has completely been engaged. Thus, the resultant force of the power from the engine 112 and the auxiliary power from the motor 113 is transmitted from the automatic centrifugal clutch 116 via the gear-type speed reducer 118 and the axle 117 to the rear wheel 105.

As a result, the acceleration at which this vehicle starts running is large compared to common motorcycles that run only on the power from the engine 112. Meanwhile, if the charge level of the battery 123 is lower than the minimum charge level, the electricity generation amount is increased from an electricity generation amount for idling L to an electricity generation amount for running H after the speed of the engine 112 has reached the engagement completion rotational speed, as shown in FIG. 27.

After auxiliary power is generated by the driving of the motor 113 as discussed above, it is determined in step P10 whether or not the electricity supply time has elapsed from the start of the driving of the motor 113. If the electricity supply time has not elapsed, the process returns to step P9. If the electricity supply time has elapsed, the supply of electricity to the motor 113 is discontinued in step P11. The timing of stopping the supply of electricity is indicated as time T7 in FIG. 27.

After the supply of electricity to the motor 113 is discontinued, the motor 113 is caused to function as a generator and to generate electricity in steps P6, P7. The timing of starting the generation of electricity is indicated as time T8 in FIG. 27. The amount of electricity generated at this time is also increased and decreased according to the charge level of the battery 123.

Aside from when the vehicle starts running as discussed above, the motor 113 is also caused to generate auxiliary power for example when the accelerator grip 109 is returned to an idling position while the vehicle is running and then operated to increase the running speed from a coasting state. Thus, also at this time, the automatic centrifugal clutch 116 does not slip and high acceleration performance can be achieved by the auxiliary power by the driving of the motor 113.

In the operation example shown in FIG. 27, the operation amount of the accelerator grip 109 is continuously increased from the start of the operation until the vehicle starts running. In the case where the accelerator is operated irregularly, an operation similar to the above example where only the engagement completion rotational speed is different is performed. For example, in the case where the accelerator grip 109 is once reversed slightly at the middle of the starting operation and then the starting operation is performed again, the operation as shown in FIG. 28 is performed.

In FIG. 28, the timing of starting the reversing operation of the accelerator grip 109 at the middle of the starting operation is indicated as time T10, and the timing at which the accelerator grip 109 is completely reversed and the starting operation is started again is indicated as time T11.

As shown in FIG. 28, the estimated value, which represents the engagement completion rotational speed, is reduced by reversing the accelerator grip 109, and increased by operating the accelerator grip 109 again. Also in this case, the motor 113 is caused to generate auxiliary power when the speed of the engine 112 has reached the engagement completion rotational speed (T6) after the start of the accelerator operation (T5).

In the hybrid motorcycle 100 constructed as described above, the auxiliary power from the motor 113 is applied to the automatic centrifugal clutch 116 with the automatic centrifugal clutch 116 completely engaged. Thus, the resultant force of the power from the engine 112 and the auxiliary power from the motor 113 can be efficiently transmitted from the automatic centrifugal clutch 116 to the rear wheel 105 side without any loss of power in the automatic centrifugal clutch 116.

Therefore, according to this embodiment, a hybrid motorcycle 100 with excellent start and acceleration performance can be manufactured.

Also, in this embodiment, an existing APS 111 for use to control the rotation of the engine 112 is used to detect the operation amount and the operation speed of the accelerator grip 109. Thus, it is not necessary to provide a new member for detection purposes, such as sensor or switch, in order to manufacture the hybrid motorcycle 100, which contributes to cost reduction.

In the hybrid motorcycle 100 according to this embodiment, a sensor or a switch for detecting the completion of engagement of the automatic centrifugal clutch 116 is not exclusively used. Thus, according to the hybrid motorcycle 100, the operation to apply auxiliary power can be performed with high reliability compared to the case where a dedicated sensor or switch is used to detect the completion of engagement of the automatic centrifugal clutch.

In the hybrid motorcycle 100 according to this embodiment, the supply of electricity to the motor 113 is discontinued after the vehicle starts running or accelerates and when a predetermined electricity supply time has elapsed. Thus, the consumption of electricity in the battery 123 can be reduced compared to the case where the supply of electricity to the motor 113 is continued after the vehicle starts running or accelerates.

In the hybrid motorcycle 100 according to this embodiment, the electricity supply time becomes shorter as the charge level of the battery 123 becomes lower. Thus, the charge level of the battery 123 is not lowered excessively. Therefore, according to the hybrid motorcycle 100, it is possible to secure electricity for use to cause the motor 113 to generate auxiliary power next time.

In the hybrid motorcycle 100 according to this embodiment, the motor 113 generates electricity after the electricity supply time has elapsed, and the battery 123 is charged with the generated electricity In this way, according to the hybrid motorcycle 100, the battery 123 can be charged after electricity in the battery 123 has been consumed. Thus, it is possible to secure sufficient electricity to be supplied to the motor 113 next time.

The hybrid motorcycle 100 according to this embodiment is arranged to use a higher one of the first rotational speed obtained based on the accelerator operation amount and the second rotational speed obtained based on the accelerator operation speed. Thus, according to the hybrid motorcycle 100, the power from the motor 113 can be applied to the automatic centrifugal clutch 116 at an appropriate timing in accordance with the accelerator operation speed, even if the accelerator grip 109 is operated to fully open the throttle valve 132 in order for the vehicle to start running or accelerate. As a result, in the hybrid motorcycle 100, the power from the engine 112 and the auxiliary power from the motor 113 can be more reliably transmitted to the rear wheel 105.

The hybrid motorcycle 100 according to this embodiment is arranged to rotate the motor 113 in conjunction with the rotation of the engine 112 after an engine start and in an operating state where the power from the motor 113 is not applied to the crankshaft 136. Thus, according to the hybrid motorcycle 100, it is possible to prevent the motor 113 not generating auxiliary power from serving as a load on the engine 112, which stabilizes the rotation of the engine 112 in an idling state.

In the hybrid motorcycle 100 according to this embodiment, the motor 113 is rotated after the start of the engine 112 and before the speed of the engine 112 reaches an idling speed, which reduces a load on the engine 112. Thus, the engine 112 shifts to an idling state while rotating stably after an engine start, even if the motor 113 is connected to the crankshaft 136. As a result, according to the hybrid motorcycle 100, the series of operations, including starting the engine 112 and the vehicle starting running and accelerating, can be performed smoothly.

In the hybrid motorcycle 100 according to this embodiment, if the charge level of the battery 123 is low, the battery 123 can be charged when auxiliary power from the motor 113 is not necessary, for example when the vehicle is at a halt. Thus, according to the hybrid motorcycle 100, the battery 123 can be prevented from being over-discharged, and it is possible to secure electricity for use to cause the motor 113 to generate auxiliary power next time.

In the above embodiment, the rotor 138 of the motor 113 is mounted on the crankshaft 136. However, the motor 113 may be formed separately from the engine 112. In such a case, the rotary shaft of the motor 113 and the crankshaft 136 may be connected directly or via a transmission means that can maintain the ratio between the speeds of both the shafts to a constant value.

In the above embodiment, both the accelerator operation amount and the accelerator operation speed are used to set the engagement completion rotational speed. However, only the accelerator operation amount may be used to set the engagement completion rotational speed. Also, in the above embodiment, the driving current supplied to the motor 113 in order to cause the motor 113 to generate auxiliary power is increased and decreased in proportion to the accelerator operation amount. However, the driving current may be increased and decreased in consideration of the accelerator operation speed as well.

In the above embodiment, the present teaching is applied to a scooter. However, the present teaching is not limited thereto, and may be applied to other types of motorcycle.

The description above discloses, according to a ninth aspect, in order to solve the above problems, a further embodiment of a hybrid motorcycle having an automatic centrifugal clutch interposed in a power transmission system between an engine and a driving wheel, and a motor for auxiliary power connected to a crankshaft of the engine, the motor having a power generation function and also being supplied with electricity from a battery to rotate, the hybrid motorcycle including: an acceleration data acquisition means for acquiring as acceleration data at least an accelerator operation amount of an accelerator operating element, of accelerator operation amount and accelerator operation speed thereof; a rotational speed detection means for detecting a rotational speed of the crankshaft or a rotary body for rotation in sync with the crankshaft; a rotational speed estimation means for estimating an engagement completion rotational speed, which is a rotational speed at which the automatic centrifugal clutch is completely engaged, according to the acceleration data acquired by the acceleration data acquisition means; and a motor control means for supplying the motor with a magnitude of electricity in accordance with the acceleration data when the rotational speed detected by the rotational speed detection means has reached the engagement completion rotational speed estimated by the rotational speed estimation means.

Further, according to a tenth aspect, there is disclosed an embodiment of the hybrid motorcycle according to the ninth aspect, further including: an electricity supply restriction means for continuing supply of electricity to the motor for a predetermined electricity supply time and discontinuing the supply of electricity to the motor after the electricity supply time has elapsed.

Further, according to an eleventh aspect, there is disclosed an embodiment of the hybrid motorcycle according to the tenth aspect, further including: a charge level detection means for detecting a charge level of the battery, in which the electricity supply restriction means shortens the electricity supply time as the charge level detected by the charge level detection means becomes lower.

Further, according to a twelfth aspect, there is disclosed an embodiment of the hybrid motorcycle according to the tenth or eleventh aspect, further including: a charging means for causing the motor to generate electricity after the electricity supply time has elapsed and charging the battery with the generated electricity.

Further, according to a thirteenth aspect, there is disclosed an embodiment of the hybrid motorcycle according to any one of the ninth to twelfth aspects, in which the acceleration data acquisition means acquires the accelerator operation amount and the accelerator operation speed as the acceleration data, and the rotational speed estimation means estimates the engagement completion rotational speed based on a higher one of a first rotational speed and a second rotational speed, the first rotational speed being obtained based on the accelerator operation amount acquired by the acceleration data acquisition means, and the second rotational speed being obtained based on the accelerator operation speed acquired by the acceleration data acquisition means.

Further, according to a fourteenth aspect, there is disclosed an embodiment of the hybrid motorcycle according to any one of the ninth to thirteenth aspects, in which the motor control means includes a prerotation means for rotating the motor in conjunction with rotation of the engine after an engine start and in an operating state in which power from the motor is not applied to the crankshaft.

Further, according to a fifteenth aspect, there is disclosed an embodiment of the hybrid motorcycle according to the fourteenth aspect, in which a rotation start timing, at which the prerotation means rotates the motor in conjunction with rotation of the engine, is set to a timing after an engine start and when an engine speed is lower than an idling speed.

Further, according to a sixteenth aspect, there is disclosed an embodiment of the hybrid motorcycle according to the fourteenth or fifteenth aspect, further including: a charge level determination means for determining whether or not the charge level of the battery is lower than a predetermined minimum charge level; and a precharging means for causing the motor to generate electricity and charging the battery with the generated electricity after an engine start and in an operating state in which power from the motor is not applied to the crankshaft, if the charge level determination means determines that the charge level of the battery is lower than the minimum charge level.

### Effect of these Aspects:

The rotational speed of the rotary body when the automatic centrifugal clutch is completely engaged (engagement completion rotational speed) changes according to the accelerator operation amount (magnitude of the output torque from the engine). That is, as the accelerator operation amount becomes larger, the output torque from the engine becomes larger and hence the engagement completion rotational speed becomes higher.

According to the embodiment of the ninth aspect, the engagement completion rotational speed is estimated by the rotational speed estimation means according to the acceleration data (operation amount of the accelerator operating element, accelerator operation speed). The motor is supplied with electricity to generate power when the rotational speed of the rotary body is increased with the accelerator operation and has reached the engagement completion rotational speed.

Therefore, according to the embodiment of the ninth aspect, the auxiliary power from the motor can be applied to the automatic centrifugal clutch with the clutch completely engaged. Thus, the power from the engine and the auxiliary power from the motor can be efficiently transmitted via the automatic centrifugal clutch to the driving wheel. As a result, the present teaching can provide a hybrid motorcycle with excellent start and acceleration performance.

An existing sensor for use to control the rotation of the engine can be used to detect the operation amount and the operation speed of the accelerator operating element. Thus, it is not necessary to provide a new member for detection purposes, such as sensor or switch, in order to implement the present teaching. In this way, the present teaching can be implemented while reducing the cost.

The hybrid motorcycle 100, according to the embodiment of the ninth aspect, does not include a sensor or a switch exclusively for detecting the completion of engagement of the automatic centrifugal clutch. Thus, according to the hybrid motorcycle, the operation to apply auxiliary power can be performed with high reliability compared to the case where a dedicated sensor or switch is used to detect the completion of engagement of the clutch.

According to the embodiment of the tenth aspect, the supply of electricity to the motor is discontinued after the vehicle starts running or accelerates. Thus, the consumption of electricity in the battery can be reduced compared to the case where the supply of electricity to the motor is continued after the vehicle starts running or accelerates.

According to the embodiment of the eleventh aspect, the charge level of the battery is not lowered excessively. Thus, it is possible to secure electricity for use to cause the motor to generate auxiliary power next time.

According to the embodiment of the twelfth aspect, the battery can be charged after electricity in the battery has been consumed. Thus, it is possible to secure sufficient electricity to be supplied to the motor 113 next time.

According to the embodiment of the thirteenth aspect, the rotational speed estimation means can estimate the engagement completion rotational speed to be higher as the accelerator operation speed is higher, even if the accelerator operation amount is constant. Thus, the power from the motor can be applied to the automatic centrifugal clutch at an appropriate timing in accordance with the accelerator operation speed, even in the case of a motorcycle which is often caused to start running or accelerate with the accelerator fully open, such as motorcycle incorporating a small-displacement engine.

Therefore, according to the embodiment of the thirteenth aspect, the power from the engine and the auxiliary power from the motor can be more reliably transmitted to the rear wheel.

According to the embodiment of the fourteenth aspect, it is possible to prevent the motor, which is not driving to generate auxiliary power, from serving as a load on the engine, which can stabilize the rotation of the engine in an idling state.

According to the embodiment of the fifteenth aspect, the motor is rotated after an engine start and before the engine speed reaches an idling speed, which reduces a load on the engine. Thus, the engine shifts to an idling state while rotating stably after an engine start, even if the motor is connected to the crankshaft. Therefore, the present teaching can provide a hybrid motorcycle in which the series of operations, including starting the engine and the vehicle starting running and accelerating, can be performed smoothly.

According to the embodiment of the sixteenth aspect, if the charge level of the battery is low, the battery can be charged when auxiliary power from the motor is not necessary, for example when the vehicle is at a halt. Thus, according to the present teaching, the battery can be prevented from being over-discharged, and it is possible to secure electricity for use to cause the motor to generate auxiliary power next time.

The description above discloses, in order to provide a hybrid motorcycle with excellent start and acceleration performance in spite of including an automatic centrifugal clutch, an embodiment of an automatic centrifugal clutch 116 which is interposed in a power transmission system between an engine 112 and a driving wheel; a motor 113, which has a function to generate electricity and also is supplied with electricity from a battery 123 to generate auxiliary power, is connected to a crankshaft 136 of the engine 112; an acceleration data acquisition means is provided for acquiring the accelerator operation amount and the accelerator operation speed; a rotational speed detection means is provided for detecting the speed of the crankshaft 136; a rotational speed estimation means is provided for estimating the engagement completion rotational speed, which is a rotational speed at which the automatic centrifugal clutch 116 is completely engaged, according to the acceleration data acquired by the acceleration data acquisition means; and a motor control means is provided for supplying the motor 113 with a magnitude of electricity in accordance with the acceleration data when the rotational speed detected by the rotational speed detection means has reached the engagement completion rotational speed estimated by the rotational speed estimation means.

Thus, from the embodiment of the ninth aspect, there is disclosed a hybrid motorcycle having an automatic centrifugal clutch interposed in a power transmission system between an engine and a driving wheel, and a motor for auxiliary power connected to a crankshaft of the engine, the motor having a power generation function and also being supplied with electricity from a battery to rotate, the hybrid motorcycle comprising: an acceleration data acquisition means for acquiring as acceleration data at least an accelerator operation amount of an accelerator operating element, of accelerator operation amount and accelerator operation speed thereof; a rotational speed detection means for detecting a rotational speed of the crankshaft or a rotary body for rotation in sync with the crankshaft; a rotational speed estimation means for estimating an engagement completion rotational speed, which is a rotational speed at which the automatic centrifugal clutch is completely engaged, according to the acceleration data acquired by the acceleration data acquisition means; and a motor control means for supplying the motor with a magnitude of electricity in accordance with the acceleration data when the rotational speed detected by the rotational speed detection means has reached the engagement completion rotational speed estimated by the rotational speed estimation means.

Further, the embodiment of the tenth aspect provides a hybrid motorcycle further comprising: an electricity supply restriction means for continuing supply of electricity to the motor for a predetermined electricity supply time and discontinuing the supply of electricity to the motor after the electricity supply time has elapsed.

Further, the embodiment of the eleventh aspect provides a hybrid motorcycle further comprising: a charge level detection means for detecting a charge level of the battery, wherein the electricity supply restriction means shortens the electricity supply time as the charge level detected by the charge level detection means becomes lower.

Further, the embodiment of the twelfth aspect provides a hybrid motorcycle further comprising: a charging means for causing the motor to generate electricity after the electricity supply time has elapsed and charging the battery with the generated electricity.

Further, the embodiment of the thirteenth aspect provides a hybrid motorcycle, wherein the acceleration data acquisition means acquires the accelerator operation amount and the accelerator operation speed as the acceleration data, and the rotational speed estimation means estimates the engagement completion rotational speed based on a higher one of a first rotational speed and a second rotational speed, the first rotational speed being obtained based on the accelerator operation amount acquired by the acceleration data acquisition means, and the second rotational speed being obtained based on the accelerator operation speed acquired by the acceleration data acquisition means.

Further, the embodiment of the fourteenth aspect provides a hybrid motorcycle, wherein the motor control means comprises a prerotation means for rotating the motor in conjunction with rotation of the engine after an engine start and in an operating state in which power from the motor is not applied to the crankshaft.

Further, the embodiment of the fifteenth aspect provides a hybrid motorcycle, wherein a rotation start timing, at which the prerotation means rotates the motor in conjunction with rotation of the engine, is set to a timing after an engine start and when an engine speed is lower than an idling speed.

Further, the embodiment of the sixteenth aspect provides a hybrid motorcycle further comprising: a charge level determination means for determining whether or not the charge level of the battery is lower than a predetermined minimum charge level; and a precharging means for causing the motor to generate electricity and charging the battery with the generated electricity after an engine start and in an operating state in which power from the motor is not applied to the crankshaft, if the charge level determination means determines that the charge level of the battery is lower than the minimum charge level.

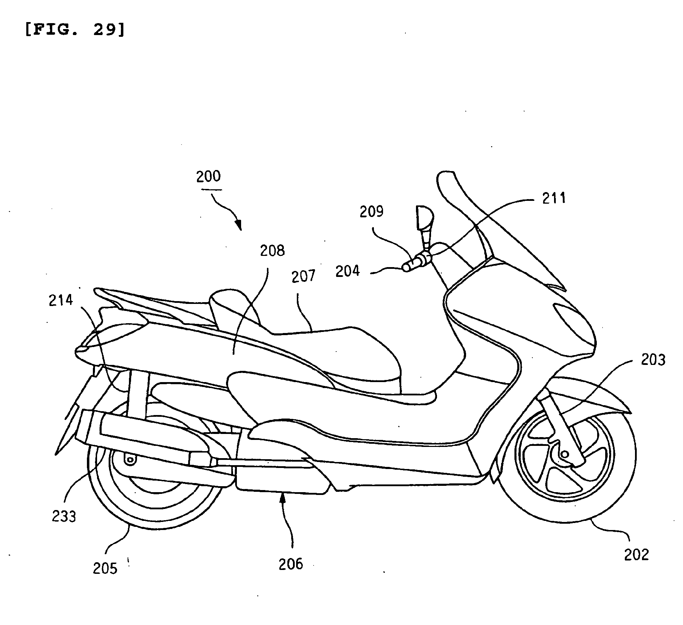

A description will hereinafter be made of a further embodiment of the hybrid motorcycle with reference to FIGs. 29 to 42.

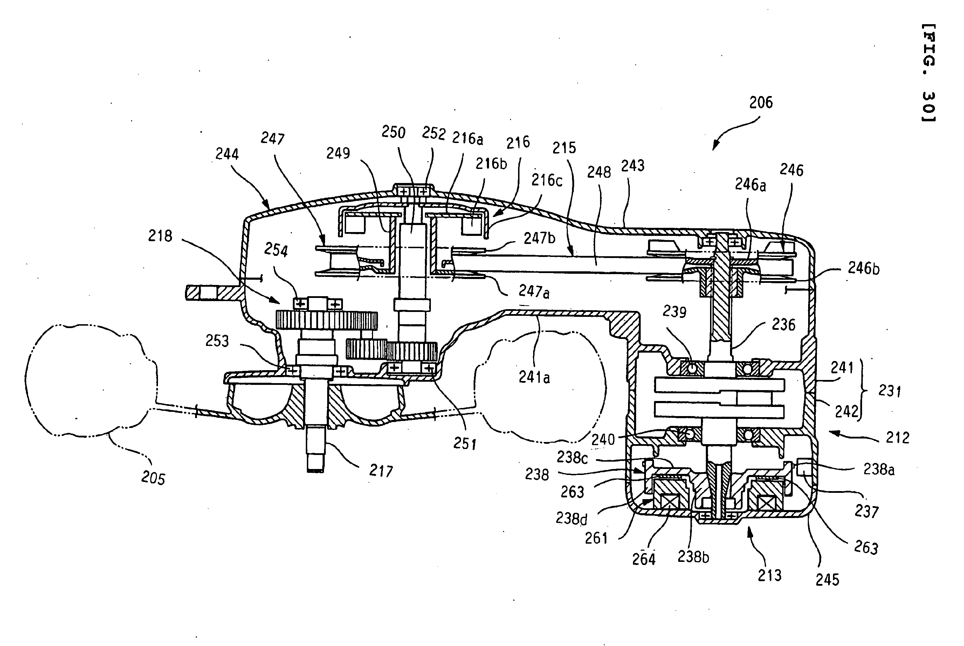

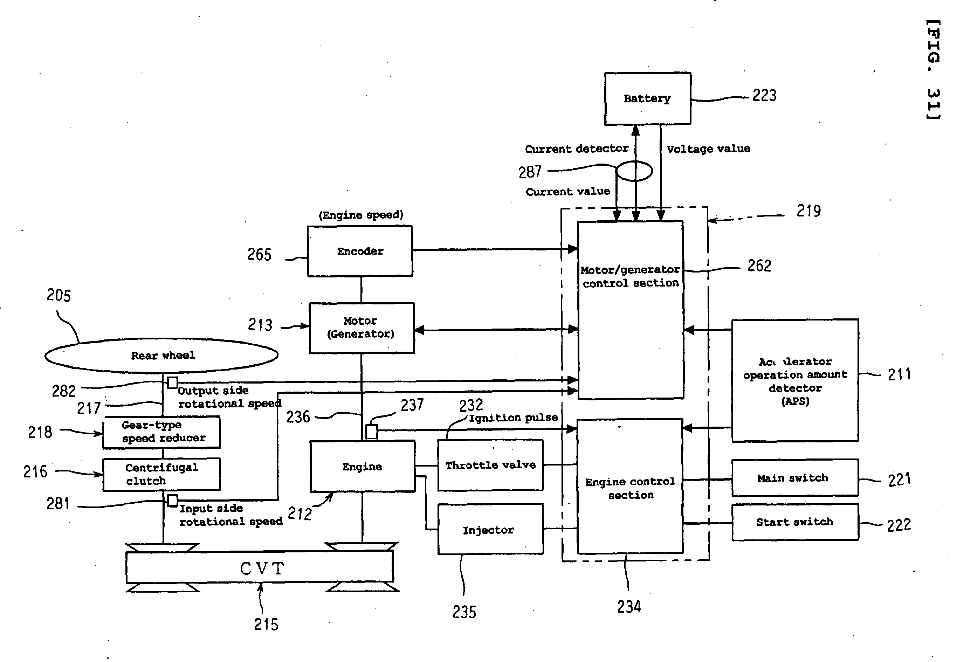

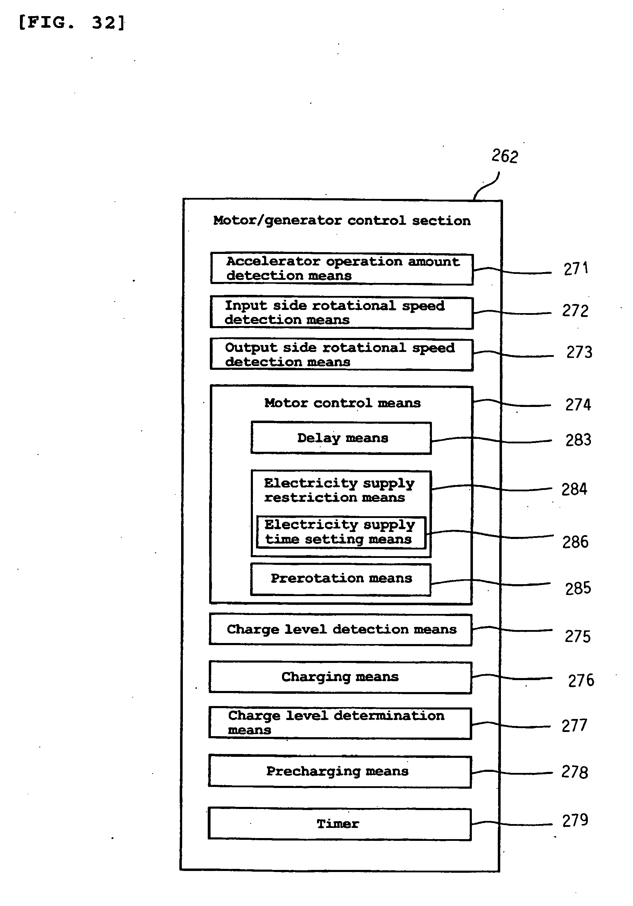

FIG. 29 is a side view of the hybrid motorcycle according to the present teaching. FIG. 30 is a horizontal cross sectional view of a power unit. FIG. 31 is a block diagram showing the configuration of a control system of the hybrid motorcycle according to the present teaching. FIG. 32 is a block diagram showing the configuration of a motor/generator control section.

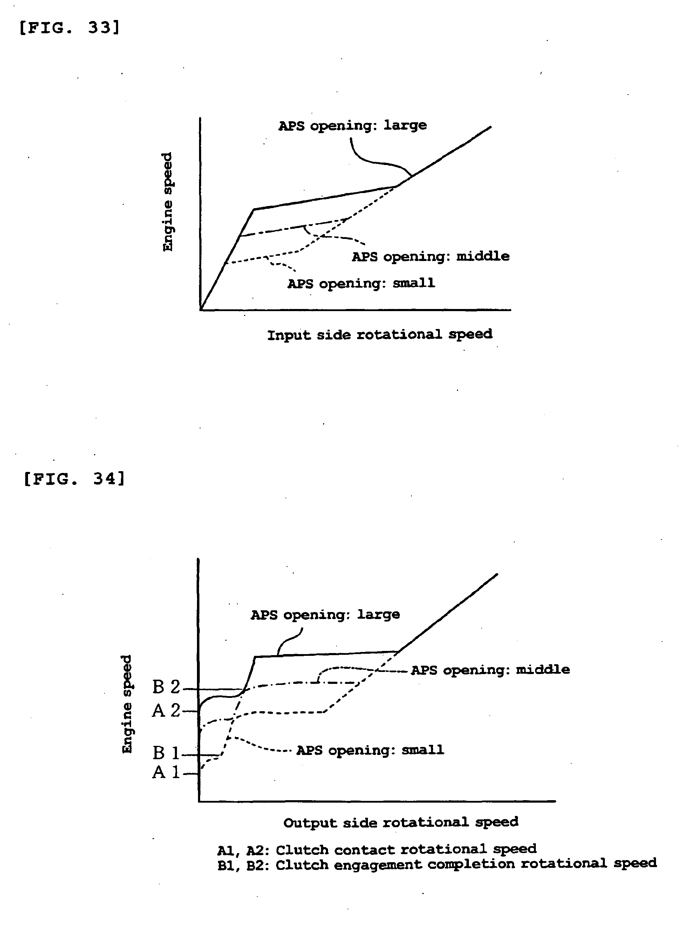

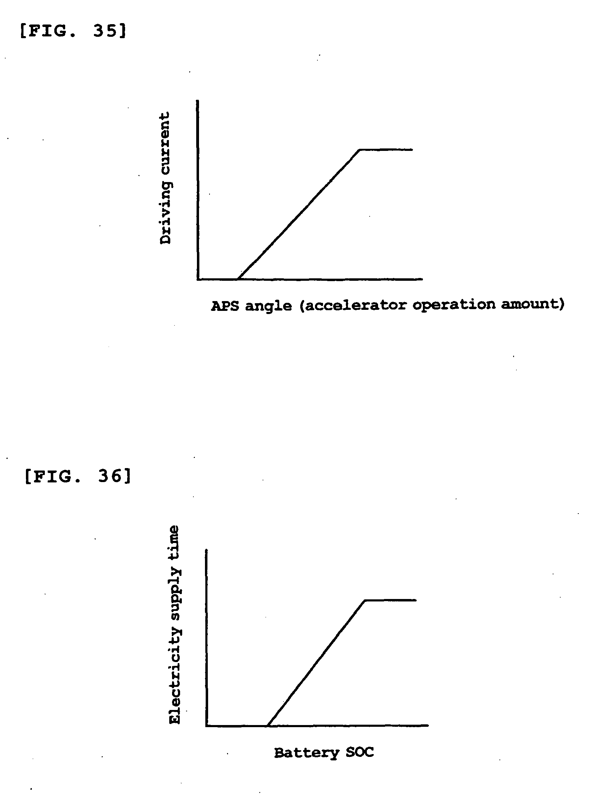

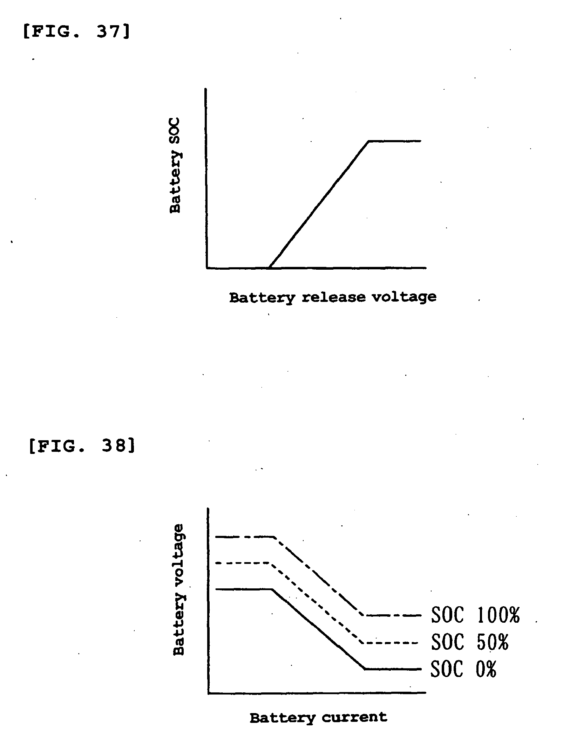

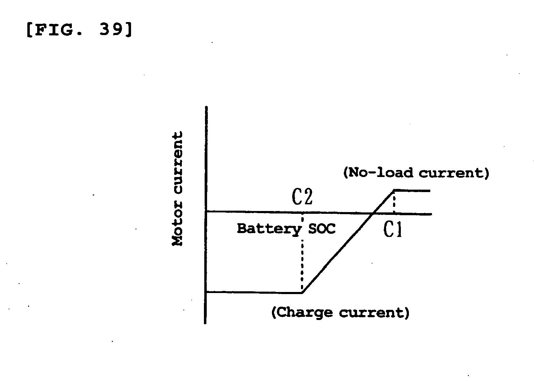

FIG. 33 is a graph showing the relation between the rotational speed of an engine and the input side rotational speed of an automatic centrifugal clutch. FIG. 34 is a graph showing the relation between the rotational speed of the engine and the output side rotational speed of the automatic centrifugal clutch. FIG. 35 is a graph showing the relation between the APS angle and the driving current for a motor. FIG. 36 is a graph showing the relation between the charge level of a battery and the electricity supply time to the motor. FIG. 37 is a graph as a map for obtaining the charge level of the battery based on the open circuit voltage of the battery. FIG. 38 is a graph as a map for obtaining the charge level of the battery based on the battery current and the battery voltage. FIG. 39 is a graph as a map for setting the charge current and the discharge current for a charge level of the battery.

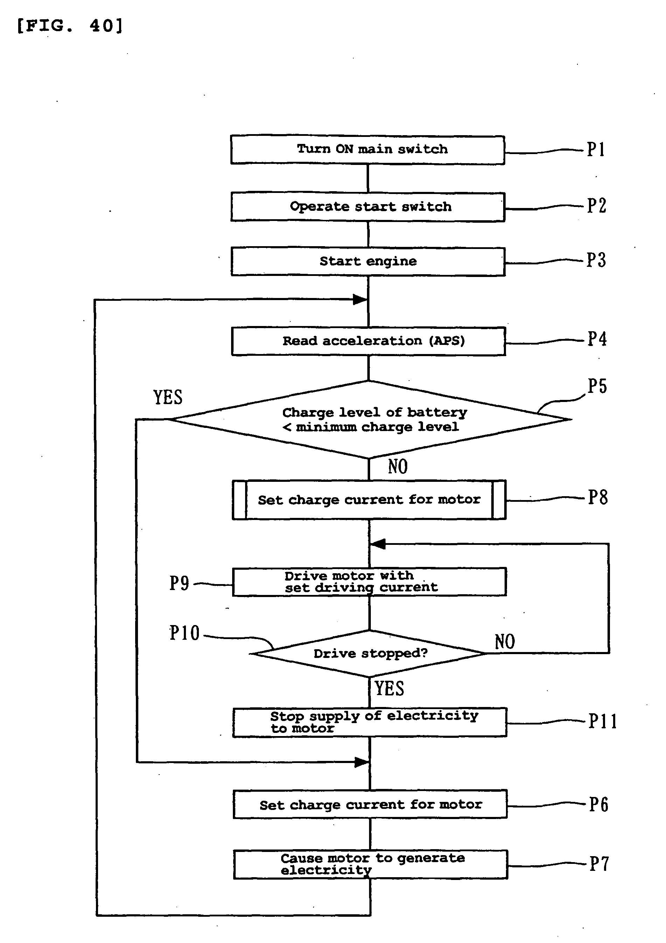

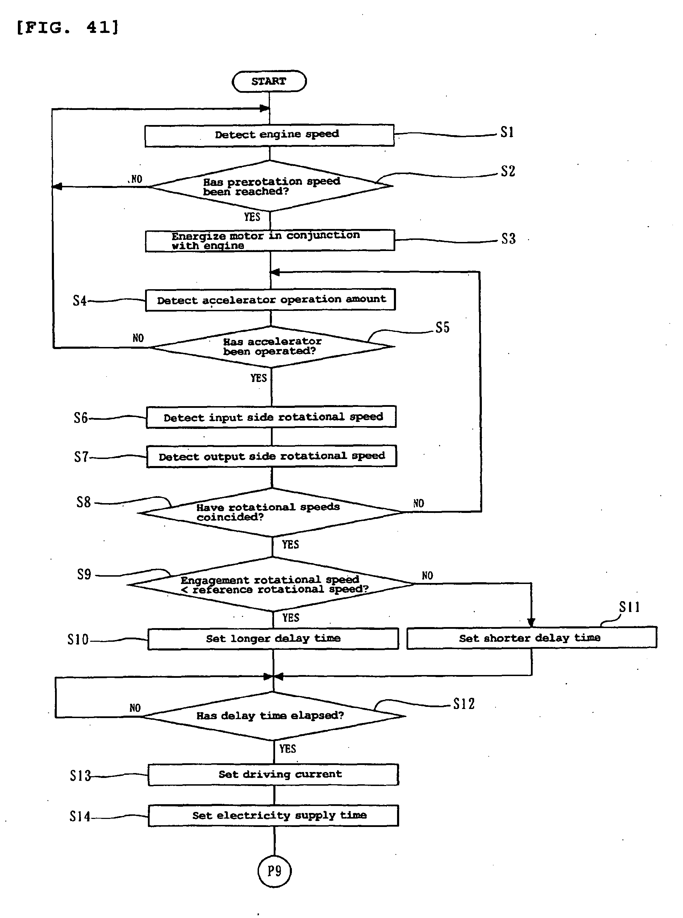

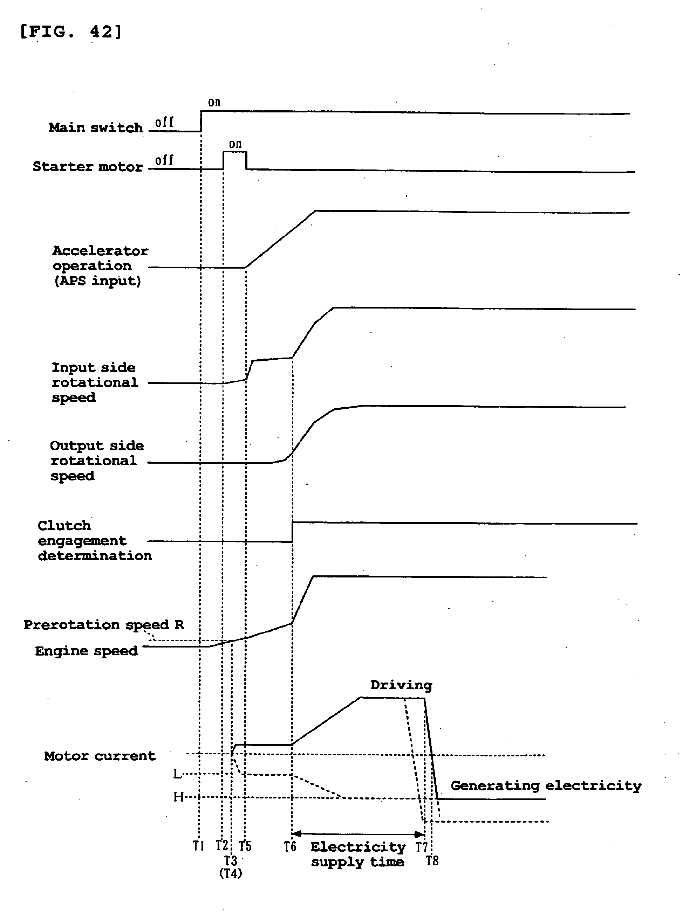

FIG. 40 is a flowchart for explaining the operation of the hybrid motorcycle according to the present teaching. FIG. 41 is a flowchart for explaining the operation of a control device after an engine start until the motor generates auxiliary power. FIG. 42 is a time chart for explaining the operation of the hybrid motorcycle according to the present teaching. FIG. 42 corresponds to the case where an accelerator is operated such that the accelerator operation amount increases generally in proportion to the time from start to end of the operation.

In the drawings, reference numeral 200 denotes a hybrid motorcycle according to this embodiment. Reference numeral 202 denotes a front wheel of the motorcycle 200, 203 a front fork, 204 steering handlebars, 205 a rear wheel as the driving wheel, 206 a power unit for driving the rear wheel 205, 207 a seat, and 208 a body cover.

The front wheel 202 can be steered to the left and right by rotationally moving the steering handlebars 204. An accelerator grip 209 for increasing and decreasing the driving force of the power unit 206 and a front wheel brake lever (not shown) are provided at an end of the steering handlebars 204 on the right side of the vehicle body. The accelerator grip 209 constitutes the accelerator operating element of the present teaching.

As shown in FIG. 30, the accelerator grip 209 is supported for free rotational movement on the steering handlebars 204, although not shown. The accelerator grip 209 is provided with an accelerator operation amount detector 211 (hereinafter simply referred to as "APS" (accelerator position sensor)) for detecting the operation amount (rotational angle relative to the handlebars) of the accelerator grip 209.

The rear wheel 205 is supported for free rotation at the rear end of the power unit 206 to be discussed later, in order to be rotated by the power from an engine 212 and the auxiliary power from a motor 213 provided in the power unit 206.

The power unit 206 is a unit swing type, and supported for free vertical swinging movement on a body frame by a link mechanism (not shown) coupled to the front end. As shown in FIG. 29, a cushion unit 214 is interposed between the rear end of the power unit 206 and the body frame (not shown).

As shown in FIG. 30, the power unit 206 is made up of an engine 212 and a motor 213 provided at its end on the front side of the vehicle (on the right side in FIG. 30), a belt-type continuously variable transmission 215 (hereinafter simply referred to as "CVT") extending longitudinally on the left side of the vehicle body, an automatic centrifugal clutch 216 provided at the rear end of the CVT 215, a gear-type speed reducer 218 provided between the automatic centrifugal clutch 216 and an axle 217 of the rear wheel 205, a control device 219 (see FIG. 31) for controlling the operation of the engine 212 and the motor 213, etc.

A main switch 221, a start switch 222, a battery 223, etc., are connected to the control device 219. The start switch 222 is intended to start the engine 212, and in this embodiment uses the motor 213 to start the engine 212. At the time of starting, the motor 213 substantially functions as a starter motor. Alternatively, a dedicated starter motor may be used to start the engine 212, as in the case with common conventional motorcycles.

The engine 212 is a 4-cycle engine including a crankcase 231 shown in FIG. 30, and a cylinder (not shown) provided in front of the crankcase 231 and extending upward. An intake system having a throttle valve 232 (see FIG. 31) and an exhaust system having a muffler 233 (see FIG. 29) are connected to the cylinder.

The throttle valve 232 is connected to the accelerator grip 209 via a wire (not shown), and opens and closes through operation of the accelerator grip 209. The throttle valve 232 is provided with a throttle valve opening sensor (not shown) for detecting the opening of the throttle valve 232. The throttle valve opening sensor is connected to an engine control section 234 of the control device 219 shown in FIG. 31 and to be discussed later, and sends to the engine control section 234 the opening of the throttle valve 232 as detected data.

The engine 212 is arranged in such that the fuel injector 235 (see FIG. 31) injects fuel into an intake passage. The fuel injection amount from the fuel injector 235 is set by the engine control section 234 according to the opening of the throttle valve 232 and the speed of the engine 212. The speed of the engine 212 is calculated utilizing the number of ignition pulses generated by an ignition system having an ignition plug (not shown). The ignition timing of the engine 212 is set by the engine control section 234 based on the rotational angle of the crankshaft 236.

The rotational angle of the crankshaft 236 is detected by an electromagnetic pickup 237 (see FIG. 30) attached to the crankcase 231. The electromagnetic pickup 237 is positioned to face a tooth 238a provided to a rotor 238 (see FIG. 30) of the motor 213 to be discussed later, and sends a detection signal to the engine control section 234 when it has detected the tooth 238a magnetically.

As shown in FIG. 30, the crankshaft 236 of the engine 212 is supported on the crankcase 231 by bearings 239, 240 for free rotation. The crankcase 231 is made up of a left half 241 and a right half 242. The left half 241 is formed integrally with a longitudinally extending portion 241 a extending longitudinally on the left side of the rear wheel 205, to which a transmission case cover 243 is attached.

The left half 241 of the crankcase 231 and the transmission case cover 243 constitute a transmission case 244 housing and also supporting the CVT 215, the automatic centrifugal clutch 216, the gear-type speed reducer 218, etc.

A motor housing 245 for the motor 213 to be discussed later is attached to the right half 242 of the crankcase 231.

As shown in FIG. 30, a driving pulley 246 of the CVT 215 is mounted to an end of the crankshaft 236 on the left side of the vehicle body. The driving pulley 246 is made up of a fixed sheave half 246a fixed to the crankshaft 236, a movable sheave half 246b supported on the crankshaft 236 so as to move freely axially thereof but not to rotate relative thereto, and a drive mechanism (not shown) for moving the movable sheave half 246b axially on the crankshaft 236.

The CVT 215 is made up of the above driving pulley 246, a driven pulley 247 positioned on the rear side of the vehicle body, and a V-belt 248 wrapped around both the pulleys 246, 247. As conventionally well known, the CVT 215 continuously varies the rotation of the crankshaft 236 for transmission to a rotary shaft 249 of the driven pulley 247. The driven pulley 247 is made up of a fixed sheave half 247a fixed to the rotary shaft 249, and a movable sheave half 247b supported on the rotary shaft 249 so as to be movable axially thereof and also be urged toward the fixed sheave half 247a by a compression coil spring (not shown).

The rotary shaft 249 is formed in the shape of a cylinder, and supported for free rotation through a bearing (not shown) on an intermediate shaft 250 passing through the hollow part of the rotary shaft 249. The intermediate shaft 250 is supported for free rotation on the transmission case 244 through bearings 251, 252. An input part 216a of the automatic centrifugal clutch 216 is connected to an end of the rotary shaft 249 on the left side of the vehicle body.

The automatic centrifugal clutch 216 is made up of the above input part 216a having a clutch shoe 216b, and a clutch outer 216c housing the input part 216a. The clutch outer 216c is fixed to an end of the intermediate shaft 250 on the left side of the vehicle body.

An end of the intermediate shaft 250 on the right side of the vehicle body is connected to the axle 217 of the rear wheel 205 via the gear-type speed reducer 218, which is a two-staged type. The axle 217 of the rear wheel 205 is supported for free rotation on the transmission case 244 through bearings 253, 254.

With the thus constructed power unit 206, rotation of the crankshaft 236 is transmitted from the driving pulley 246 via the V-belt 48 to the driven pulley 247 of the CVT 215, and then from the rotary shaft 249 to the input part 216a of the automatic centrifugal clutch 216. As the rotation of the crankshaft 236 increases, the rotation of the input part 216a increases. Then, a centrifugal force increases the diameter of the clutch shoe 216b, which causes the clutch shoe 216b to engage with the clutch outer 216c. This in turn causes the clutch outer 216c to rotate. This rotation is transmitted from the intermediate shaft 250 via the gear-type speed reducer 218 to the axle 217 (rear wheel 205).

As shown in FIG. 30, a rotor 238 of the motor 213 to be discussed later is mounted to an end of the crankshaft 236 on the right side of the vehicle body.

The motor 213 is intended to apply auxiliary power to the crankshaft 236, and has a function to generate electricity by being driven by the engine 212. The motor 213 includes the above rotor 238 and a stator 261 fixed to the motor housing 245, and as shown in FIG. 31, is connected to a motor/generator control section 262 of the control device 219.

The rotor 238 is made up of a boss 238b fixed to the crankshaft 236, a disk 238c extending radially from an end of the boss 238b on the left side of the vehicle body, a cylinder 238d housing the disk 238c, and a permanent magnet 263 secured to an end surface of the disk 238c on the right side of the vehicle body. The tooth 238a to be detected by the electromagnetic pickup 237 is formed on the outer periphery of the cylinder 238d. The motor 213 directly drives the crankshaft 236.

The stator 261 incorporates a coil 264, and is fixed to the motor housing 245 in such a manner as to be partially inserted into the cylinder 238d and face the permanent magnet 263. The stator 261 is provided on a circumference centered on the axis of the crankshaft 236.

The stator 261 of the motor 213 also incorporates an encoder 265 (see FIG. 31) for detecting the speed of the rotor 238 (speed of the crankshaft 236).

The motor/generator control section 262 is intended to control the timing for supplying the motor 213 with electricity and the magnitude of the electricity, and also switch the motor 213 to function as a generator. As shown in FIG. 32, the motor/generator control section 262 includes an accelerator operation amount detection means 271, an input side rotational speed detection means 272, an output side rotational speed detection means 273, a motor control means 274, a charge level detection means 275, a charging means 276, a charge level determination means 277, a precharging means 278 and a timer 279.

The accelerator operation amount detection means 271 detects the accelerator operation amount (operation angle of the accelerator grip 209) using output data from the APS 211.

The input side rotational speed detection means 272 is intended to obtain the rotational speed of the input part 216a of the automatic centrifugal clutch 216. The input part 216a constitutes the input side rotary body of the clutch of the present teaching. The relation between the rotational speed of the input part 216a (input side rotational speed) of the automatic centrifugal clutch 216 and the engine speed was measured in an experiment and is shown in FIG. 33. As shown, input side rotational speeds with different characteristics are given for different accelerator operation amounts detected by the APS 211, in the middle range of the engine speed.

The input side rotational speed detection means 272 according to this embodiment is arranged to obtain the rotational speed of the input part 216a of the automatic centrifugal clutch 216 using the graph shown in FIG. 33 as a map. To be specific, the input side rotational speed detection means 272 obtains the rotational speed of the input part 216a of the automatic centrifugal clutch 216 by applying the accelerator operation amount detected by the APS 211 and the speed of the engine 212 to the graph shown in FIG. 33. In order to detect the speed of the engine 212, the encoder 265 and the electromagnetic pickup 237 are used to detect the speed of the crankshaft 236.

Instead of using the graph shown in FIG. 33 as a map, the rotational speed of the input part 216a may be obtained by detection using a sensor 281 as shown in FIG. 31. The sensor 281 may be, for example, an electromagnetic pickup for detecting the rotational speed of the input part 216a of the automatic centrifugal clutch 216 or a rotary body for rotation in sync with the input part 216a. Examples of the rotary body for rotation in sync with the input part 216a include the driven pulley 247 and the rotary shaft 249 of the CVT 215.

The output side rotational speed detection means 273 is intended to obtain the rotational speed of the clutch outer 216c as the output side rotary body of the automatic centrifugal clutch 216. The relation between the rotational speed of the clutch outer 216c (output side rotational speed) of the automatic centrifugal clutch 216 and the engine speed was measured in an experiment and is shown in FIG. 34. As shown, output side rotational speeds with different characteristics are given for different accelerator operation amounts detected by the APS 211, up to the middle range of the engine speed. The automatic centrifugal clutch 216 starts contacting at rotational speeds A1 through A2, and is completely engaged at rotational speeds B1 through B2.

The output side rotational speed detection means 273 according to this embodiment is arranged to obtain the rotational speed of the clutch outer 216c using the graph shown in FIG. 34 as a map. To be specific, the output side rotational speed detection means 273 obtains the rotational speed of the clutch outer 216c by applying the accelerator operation amount detected by the APS 211 and the speed of the engine 212 to the graph shown in FIG. 34. In order to detect the speed of the engine 212, the encoder 265 and the electromagnetic pickup 237 are used to detect the speed of the crankshaft 236.

Instead of using the graph shown in FIG. 34 as a map, the output side rotational speed detection means 273 may obtain the rotational speed of the rotary body for rotation in sync with the clutch outer 216c by detection using a sensor 282 as shown in FIG. 31. Examples of the rotary body for rotation in sync with the clutch outer 216c include the intermediate shaft 250, the gears and shafts of the gear-type speed reducer 218, and the axle 217. The sensor 282 according to this embodiment may be an electromagnetic pickup for detecting the rotational speed of the axle 217, which sends the rotational speed as detected data to the motor control means to be discussed later.

The motor control means 274 includes a delay means 283, an electricity supply restriction means 284 and a prerotation means 285 to be discussed later, and supplies the motor 213 with a magnitude of electricity in accordance with the accelerator operation amount detected by the accelerator operation amount detection means 271, while the accelerator grip 209 is operated to start the hybrid motorcycle to run and after a delay time to be discussed later has elapsed from the moment when the input side rotational speed has agreed with the output side rotational speed.

Whether or not a start operation is performed with the accelerator grip 209 is determined based on the accelerator operation amount detected by the accelerator operation amount detection means 271. That is, the motor control means 271 determines that a start operation has been performed when the accelerator operation amount has increased from 0.

In the state in which the input side rotational speed is in agreement with the output side rotational speed, the automatic centrifugal clutch 216 has been completely engaged and is not so-called slipping. That is, the motor control means 274 supplies the motor 213 with electricity after the delay time to be discussed later has elapsed from the moment when the automatic centrifugal clutch 216 has been completely engaged.

The delay time is intended to prevent the auxiliary power from the motor 213 from being applied to the automatic centrifugal clutch 216 while a sufficient centrifugal force is not applied to the clutch shoe 216b of the automatic centrifugal clutch 216. The delay time is set by the delay means 283 to be discussed later based on the rotational speed.

The delay means 283 compares the rotational speed at which the input side rotational speed has agreed with the output side rotational speed (hereinafter simply referred to as "engagement rotational speed") with a rotational speed predetermined as a reference (hereinafter simply referred to as "reference rotational speed"), and sets a relatively long delay time if the engagement rotational speed is lower than the reference rotational speed. If the engagement rotational speed is not lower than the reference rotational speed, the delay means 283 sets a relatively short delay time. Instead of a comparison with the reference rotational speed as discussed above, the delay time may be set using a map in which the delay time is defined for each rotational speed.

A relatively small friction force acts on the clutch shoe 216b of the automatic centrifugal clutch 216 as the engagement rotational speed is relatively low. This is because a relatively small centrifugal force is applied to the clutch shoe 216b accordingly. Thus, in the case where the engagement rotational speed is relatively low, the clutch shoe 216b may slip relative to the clutch outer 216c when the auxiliary power from the motor 213 is applied, even if the automatic centrifugal clutch 216 has been completely engaged. However, by delaying driving the motor 213 by the delay time as discussed above, the rotational speed increases for the delay time, and the centrifugal force to be applied to the clutch shoe 216b and hence the friction force to act on the clutch shoe 216b increase accordingly. Thus, even at a low engagement rotational speed, the auxiliary power from the motor 213 can be reliably transmitted from the automatic centrifugal clutch 216 to the rear wheel 205.

In supplying the motor 213 with a magnitude of electricity in accordance with the accelerator operation amount, the motor control means 274 reads a magnitude of driving current in accordance with the accelerator operation amount, from the map shown in FIG. 35, and controls the voltage such that the magnitude of driving current flows through the motor 213. The motor control means 274 supplies the motor 213 with electricity only when the charge level of the battery 223 is above a minimum charge level to be discussed later.

The electricity supply restriction means 284 restricts the length of time for the motor control means 274 to supply the motor 213 with electricity, to a predetermined electricity supply time. The electricity supply time is set by an electricity supply time setting means 286 to be discussed later. That is, the electricity supply restriction means 284 continues the supply of electricity to the motor 213 for the electricity supply time, and discontinues the supply of electricity to the motor 213 after the electricity supply time has elapsed. The electricity supply time is counted by the timer 279.

The electricity supply time setting means 286 changes the electricity supply time according to the charge level of the battery 223 detected by the charge level detection means 275 to be discussed later. In changing the electricity supply time, the electricity supply time setting means 286 uses the map shown in FIG. 36. FIG. 36 is a graph showing the driving time for a charge level of the battery 223 (battery SOC). As shown in the graph, the electricity supply time is set to be shorter as the charge level of the battery 223 becomes lower. The electricity supply time setting means 286 reads an electricity supply time in accordance with the present charge level of the battery 223, from the map shown in FIG. 36, and sends the electricity supply time to the electricity supply restriction means 284. That is, the electricity supply restriction means 284 shortens the electricity supply time as the charge level detected by the electricity supply time setting means 286 becomes lower.

The prerotation means 285 is intended to prevent the motor 213 not generating auxiliary power from serving as a load on the engine 212, and arranged to start energization in order to rotate the motor 213 when the speed of the engine 212 has reached a predetermined prerotation speed. In this embodiment, the prerotation speed is set to be lower than the speed of the engine 212 in an idling state (idling speed).

That is, in the hybrid motorcycle 200 according to this embodiment, the prerotation means 285 rotates the motor 213 in conjunction with the rotation of the engine 212 after an engine start and when the engine speed has reached the prerotation speed lower than the idling speed. The speed of the engine 212 is detected by the input side rotational speed detection means 272.

The charge level detection means 275 obtains a charge level (SOC) of the battery 223 in accordance with the release voltage of the battery 223 using a map as the graph shown in FIG. 37, and then adds, to this charge level, the current amount while the battery 223 is charging and the current amount while the battery 223 is discharging to obtain the present charge level. The battery release voltage is detected by the charge level detection means 275 while electricity in the battery 223 is not consumed or while the battery 223 is not charged, for example when the engine is stopped. The battery 223 is charged by the charging means 276 to be discussed later. The current while charging and the current while the battery 223 is discharging are measured by a current detector 287 (see FIG. 31) provided in the circuit connecting the battery 223 and the motor/generator control section 262.

Instead of measuring and adding the charge current and the discharge current each time as discussed above, a map as shown in FIG. 38 may be used to detect the charge level of the battery 223 during engine operation. In the map shown in FIG. 38, the charge level (SOC) of the battery 223 is defined by the battery current and the battery voltage. The map shows the relation between the voltage between the terminals of the battery 223 and the current flowing through the battery 223 at each charge level from 0% to 100%. In the case of using this map to obtain the charge level of the battery 223, the charge level detection means 275 detects the present values of the current flowing through the battery 223 and the voltage between the terminals of the battery 223, and reads a charge level (SOC) in accordance with these current and voltage values from the map.

The charging means 276 causes the motor 213 to function as a generator and to generate electricity after the above electricity supply time has elapsed, and charges the battery 223 with the generated electricity. The charging means 276 also changes the amount of electricity to be generated according to the charge level detected by the charge level detection means 275. That is, the charging means 276 reduces the charge current when the charge level of the battery 223 is relatively high, and increases the charge current when the charge level of the battery 223 is relatively low.

The charge level determination means 277 compares the charge level of the battery 223 detected by the charge level detection means 275 and the predetermined minimum charge level if auxiliary power is not generated by the driving of the motor 213. The charge level determination means 277 also sends a control signal to the prerotation means 285 to discontinue the supply of electricity to the motor 213, and sends a control signal to the precharging means 278 to be discussed later to start charging, when the charge level of the battery 223 is lower than the minimum charge level. On receiving the control signal, the prerotation means 285 stops the supply of electricity to the motor 213.

When the control signal is sent from the charge level determination means 277, the precharging means 277 causes the motor 213 to function as a generator and to generate electricity if auxiliary power is not generated by the driving of the motor 213. The charge current while generating electricity is read from the map shown in FIG. 39 and set. The map shows the charge current and the discharge current of the battery 223 for a charge level (SOC) of the battery 223.

As can be understood from this map, the precharging means 278 according to this embodiment increases the charge current as the charge level of the battery 223 becomes lower when the charge level is between the minimum charge level C1 and a limit value C2 lower than that. Also, the precharging means 278 performs charging at a constant maximum charge current when the charge level is lower than the limit value C2. When the motor 213 is caused to function as a generator while the engine 212 in low-speed operation, the engine control section 234 of the hybrid motorcycle 100 increases the fuel injection amount from the injector 235 so as to stabilize the rotation of the engine 212.

At this time, for example when the accelerator grip 209 is in an idling position, the fuel injection amount is controlled such that the engine speed reaches the idling speed during normal operation. When the accelerator operation amount is increased from the idling state, the engine control section 234 increases the fuel injection amount according to the increase in accelerator operation amount. Thus, since the fuel injection amount is increased according to an increase in load due to electricity generation by the motor 213, the engine 212 can be prevented from stalling because of such an increase in load due to electricity generation.

Now, a description will be made of the operation of the motor/generator control section 262 constructed as described above using the flowcharts shown in FiGs. 40 and 41 and the time chart shown in FIG. 42.

The engine 212 is started by turning ON the main switch 221 and then turning ON the start switch 222 in steps P1 to P3 of the flowchart shown in FIG. 40.

The timing of turning ON the main switch 221 is indicated as time T1 in FIG. 42, and the timing of turning ON the start switch 222 is indicated as time T2 in FIG. 42.

After an engine start, the accelerator operation amount detection means 271 acquires the accelerator operation amount in step P4, and the charge level determination means 277 determines in step P5 whether or not the charge level of the battery 223 is lower than the minimum charge amount.

If the charge level of the battery 223 is equal to the minimum charge level or lower, the precharging means 278 reads a charge current for the motor 213 from the map shown in FIG. 39 in step P6, and causes the motor 213 to function as a generator and to generate electricity so as to obtain the charge current in step P7. Then, the process returns to step P4 to repeat the above processes. The timing at which electricity generation is started in step P7 is indicated as time T3 in FIG. 42.

On the other hand, if it is determined in step P5 that the charge level of the battery 223 is higher than the minimum charge level, the process proceeds to step P8, where the driving current for the motor 213 is set. Here, the operation performed in step P8 is described with reference to the flowchart shown in FIG. 41.

First of all, the speed of the engine 213 is detected in step S1 of the flowchart shown in FIG. 40, and energization is started to rotate the motor 213 when the engine speed has reached the prerotation speed as shown in steps S2 to S3. The prerotation speed is indicated as symbol R in FIG. 42. Also, the timing at which the motor 213 rotates in conjunction with the rotation of the engine 212 is indicated as time T4 in FIG. 42.

Subsequently, an accelerator operation amount is acquired again in step S4, and it is determined in step S5 whether or not an accelerator operation has been performed. If an accelerator operation has not been performed, the process returns to step S1. If an accelerator operation has been performed, an input side rotational speed is detected in step S6, and then an output side rotational speed is detected in step S7. The timing at which the accelerator operation has been performed is indicated as time T5 in FIG. 42.

Then, it is determined in step S8 whether or not the input side rotational speed has agreed with the output side rotational speed.

If it is determined that the input side rotational speed has not agreed with the output side rotational speed, the process returns to step S4. If it is determined that both rotational speeds have agreed with each other, it is determined in step S9 whether or not the engagement rotational speed is lower than the reference rotational speed. At this time, the timer 279 starts counting the time.

If it is determined that the engagement rotational speed is lower than the reference rotational speed, a relatively long delay time is set in step S10. If it is determined that the engagement rotational speed is not lower than the reference rotational speed, a relatively short delay time is set in step S11.

After the delay time is set in this way, the elapsed time counted by the timer 279 is read in step S12, and the process waits until the delay time elapses from the moment when the input side rotational speed has agreed with the output side rotational speed. After the delay time has elapsed, a driving current for the motor 213 is read from the map shown in FIG. 35 in step S13, and an electricity supply time is read from the map shown in FIG. 36 in step S14. The electricity supply time becomes shorter as the charge level of the battery 223 becomes lower. The timer 279 is reset after the delay time has elapsed.

After preparations have been made to cause the motor 213 to generate auxiliary power, the driving current is passed to the motor 213 to generate auxiliary power by the driving of the motor 213 in step P9 of the flowchart shown in FIG. 40. The timing of generating auxiliary power is indicated as time T6 in FIG. 42. At this time, the timer 279 newly starts counting the time.

At this time, the rotational speed of the automatic centrifugal clutch 216 has increased, compared to that when the input side rotational speed has agreed with the output side rotational speed, for the delay time having elapsed. Thus, a maximum or approximately maximum friction force acts on the clutch shoe 216b of the automatic centrifugal clutch 216. Therefore, the driving force, which is the resultant force of the power from the engine 212 and the auxiliary power from the motor 213, is transmitted from the automatic centrifugal clutch 216 via the gear-type speed reducer 218 and the axle 217 to the rear wheel 205, without being diminished in the automatic centrifugal clutch 216.

As a result, the acceleration at which this vehicle starts running is large compared to common motorcycles that run only on the power from the engine 212. Meanwhile, when the charge level of the battery 223 is lower than the minimum charge level, the electricity generation amount is increased from an electricity generation amount for idling L to an electricity generation amount for running H after the input side rotational speed has agreed with the output side rotational speed, as shown in FIG. 42.

After auxiliary power is generated by the driving of the motor 213 as discussed above, it is determined in step P10 whether or not the electricity supply time has elapsed from the start of the driving of the motor 213. If the electricity supply time has not elapsed, the process returns to step P9. If the electricity supply time has elapsed, the supply of electricity to the motor 213 is discontinued in step P11. The timing of stopping the supply of electricity is indicated as time T7 in FIG. 42.

After the supply of electricity to the motor 213 is discontinued, the motor 213 is caused to function as a generator and to generate electricity in steps P6, P7. The timing of starting the generation of electricity is indicated as time T8 in FIG. 42. The amount of electricity generated at this time is also increased and decreased according to the charge level of the battery 223.

Aside from when the vehicle starts running as discussed above, the motor 213 is also caused to generate auxiliary power for example when the accelerator grip 209 is returned to an idling position while the vehicle is running and then operated to increase the running speed from a coasting state. Thus, also at this time, the automatic centrifugal clutch 216 does not slip and high acceleration performance can be achieved by the auxiliary power by the driving of the motor 213.

In the hybrid motorcycle 200 constructed as described above, the auxiliary power from the motor 213 is applied to the automatic centrifugal clutch 216 with the automatic centrifugal clutch 216 completely engaged. Thus, the resultant force of the power from the engine 212 and the auxiliary power from the motor 213 can be efficiently transmitted from the automatic centrifugal clutch 216 to the rear wheel 205 side without any loss of power in the automatic centrifugal clutch 216.

Therefore, according to this embodiment, a hybrid motorcycle 200 with excellent start and acceleration performance can be manufactured.

In the hybrid motorcycle 200 according to this embodiment, the supply of electricity to the motor 213 is discontinued after the vehicle starts running or accelerates and when a predetermined electricity supply time has elapsed. Thus, the consumption of electricity in the battery 223 can be reduced compared to the case where the supply of electricity to the motor 213 is continued after the vehicle starts running or accelerates.

In the hybrid motorcycle 200 according to this embodiment, the electricity supply time becomes shorter as the charge level of the battery 223 becomes lower. Thus, the charge level of the battery 223 is not lowered excessively. Therefore, according to the hybrid motorcycle 200, it is possible to secure electricity for use to cause the motor 213 to generate auxiliary power next time.

In the hybrid motorcycle 200 according to this embodiment, the motor 213 generates electricity after the electricity supply time has elapsed, and the battery 223 is charged with the generated electricity In this way, according to the hybrid motorcycle 200, the battery 223 can be charged after electricity in the battery 223 has been consumed. Thus, it is possible to secure sufficient electricity to be supplied to the motor 213 next time.

The hybrid motorcycle 200 according to this embodiment is arranged to delay supplying the motor 213 with electricity by the delay time. Thus, according to the hybrid motorcycle 200, in the case where the automatic centrifugal clutch 216 has been completely engaged at a relatively low rotational speed, the auxiliary power generated by the driving of the motor 213 can be applied to the automatic centrifugal clutch 216 after the rotation of the clutch shoe 216b and hence the centrifugal force have increased for the delay time. As a result, in the case where the automatic centrifugal clutch 216 has been completely engaged at a relatively low speed, for example in the case of starting to run on a downward slope, the auxiliary power can be applied to the automatic centrifugal clutch 216 after the friction force of the clutch shoe 216b has sufficiently increased. Therefore, according to this embodiment, the power from the engine 212 and the auxiliary power from the motor 213 can be more reliably transmitted to the rear wheel 205.

The hybrid motorcycle 200 according to this embodiment is arranged to rotate the motor 213 in conjunction with the rotation of the engine 212 after an engine start and in an operating state where the power from the motor 213 is not applied to the crankshaft 236. Thus, according to the hybrid motorcycle 200, it is possible to prevent the motor 213 not generating auxiliary power from serving as a load on the engine 212, which stabilizes the rotation of the engine 212 in an idling state.

In the hybrid motorcycle 200 according to this embodiment, the motor 213 is rotated after the start of the engine 212 and before the speed of the engine 212 reaches an idling speed, which reduces a load on the engine 212. Thus, the engine 212 shifts to an idling state while rotating stably after an engine start, even if the motor 213 is connected to the crankshaft 236. As a result, according to the hybrid motorcycle 200, the series of operations, including starting the engine 212 and the vehicle starting running and accelerating, can be performed smoothly.

In the hybrid motorcycle 200 according to this embodiment, if the charge level of the battery 223 is low, the battery 223 can be charged when auxiliary power from the motor 213 is not necessary, for example when the vehicle is at a halt. Thus, according to the hybrid motorcycle 200, the battery 223 can be prevented from being over-discharged, and it is possible to secure electricity for use to cause the motor 213 to generate auxiliary power next time.

In the above embodiment, the rotor 238 of the motor 213 is mounted on the crankshaft 236. However, the motor 213 may be formed separately from the engine 212. In such a case, the rotary shaft of the motor 213 and the crankshaft 236 may be connected directly or via a transmission means that can maintain the ratio between the speeds of both the shafts to a constant value.

In the hybrid motorcycle 200 according to the above embodiment, the driving current supplied to the motor 213 in order to cause the motor 213 to generate auxiliary power is increased or decreased in proportion to the accelerator operation amount. However, the driving current may be increased or decreased in consideration of the accelerator operation speed as well.

In the above embodiment, the present teaching is applied to a scooter. However, the present teaching is not limited thereto, and may be applied to other types of motorcycle.

The scooter-type motorcycle 200 equipped with the automatic centrifugal clutch 216 is described in the above embodiment. However, the present teaching may also be applied to a hybrid motorcycle equipped with a manually operated clutch. In this case, a comparison is made between the input side rotational speed and the output side rotational speed to detect whether or not the manual clutch has been completely engaged, and after an engagement has been completed, the motor 213 is caused to generate auxiliary power.

The description above discloses, in order to solve the above problems, according to a seventeenth aspect, an embodiment which provides a hybrid motorcycle having a friction clutch interposed in a power transmission system between an engine and a driving wheel, and a motor for auxiliary power connected to a crankshaft of the engine, the motor having a power generation function and also being supplied with electricity from a battery to rotate, the hybrid motorcycle including: an accelerator operation amount detection means for detecting an accelerator operation amount of an accelerator operating element; an input side rotational speed detection means for detecting as input side rotational speed a rotational speed of an input side rotary body of the clutch or a rotary body for rotation in sync with the input side rotary body; an output side rotational speed detection means for detecting as output side rotational speed a rotational speed of an output side rotary body of the clutch or a rotary body for rotation in sync with the output side rotary body; and a motor control means for supplying the motor with a magnitude of electricity in accordance with the accelerator operation amount detected by the accelerator operation amount detection means while the accelerator operating element is operated to start the hybrid motorcycle to run and after the input side rotational speed detected by the input side rotational speed detection means has agreed with the output side rotational speed detected by the output side rotational speed detection means.

Further, according to an eighteenth aspect, there is disclosed an embodiment of the hybrid motorcycle according to the seventeenth aspect, further including: an electricity supply restriction means for continuing supply of electricity to the motor for a predetermined electricity supply time and discontinuing the supply of electricity to the motor after the electricity supply time has elapsed.

Further, according to a nineteenth aspect, there is disclosed an embodiment of the hybrid motorcycle according to the eighteenth aspect, further including: a charge level detection means for detecting a charge level of the battery, in which the electricity supply restriction means shortens the electricity supply time as the charge level detected by the charge level detection means becomes lower.

Further, according to a twentieth aspect, there is disclosed an embodiment of the hybrid motorcycle according to the eighteenth or nineteenth aspect, further including: a charging means for causing the motor to generate electricity after the electricity supply time has elapsed and charging the battery with the generated electricity.

Further, according to a twenty-first aspect, there is disclosed an embodiment of the hybrid motorcycle according to any one of the seventeenth to twentieth aspects, in which the clutch is an automatic centrifugal clutch, the motor control means includes a delay means for delaying supplying the motor with electricity from the moment when the input side rotational speed has agreed with the output side rotational speed, by a delay time in accordance with a rotational speed, and the delay time is set to be longer as an engagement rotational speed is lower, the engagement rotational speed being defined as a rotational speed at which the input side rotational speed has agreed with the output side rotational speed.

Further, according to a twenty-second aspect, there is disclosed an embodiment of the hybrid motorcycle according to any one of the seventeenth to twenty-first aspects, in which the motor control means includes a prerotation means for rotating the motor in conjunction with rotation of the engine after an engine start and in an operating state in which power from the motor is not applied to the crankshaft.

Further, according to a twenty-third aspect, there is disclosed an embodiment of the hybrid motorcycle according to the twenty-second aspect, in which a rotation start timing, at which the prerotation means rotates the motor in conjunction with rotation of the engine, is set to a timing after an engine start and when an engine speed is lower than an idling speed.

Further, according to a twenty-fourth aspect, there is disclosed an embodiment of the hybrid motorcycle according to the twenty-second or twenty-third aspect, further including: a charge level determination means for determining whether or not the charge level of the battery is lower than a predetermined minimum charge level; and a precharging means for causing the motor to generate electricity and charging the battery with the generated electricity after an engine start and in an operating state in which power from the motor is not applied to the crankshaft, if the charge level determination means determines that the charge level of the battery is lower than the minimum charge level.

### Effect of the Embodiments:

The state that the rotational speeds of the input side rotary body and the output side rotary body of the clutch have agreed with each other means that the clutch has been completely engaged. In the hybrid motorcycle according to the seventeenth aspect, the auxiliary power from the motor is applied to the clutch after the clutch has been completely engaged. Thus, the power from the engine and the auxiliary power from the motor can be efficiently transmitted via the clutch to the driving wheel. As a result, the present seventeenth aspect can provide a hybrid motorcycle with excellent start and acceleration performance.

According to the embodiment of the eighteenth aspect, the supply of electricity to the motor is discontinued after the vehicle starts running or accelerates. Thus, the consumption of electricity in the battery can be reduced compared to the case where the supply of electricity to the motor is continued after the vehicle starts running or accelerates.

According to the embodiment of the nineteenth aspect, the charge level of the battery is not lowered excessively. Thus, it is possible to secure electricity for use to cause the motor to generate auxiliary power next time.

According to the embodiment of the twentieth aspect, the battery can be charged after electricity in the battery has been consumed. Thus, it is possible to secure sufficient electricity to be supplied to the motor 213 next time.

According to the embodiment of the twenty-first aspect, in the case where the automatic centrifugal clutch has been completely engaged at a relatively low rotational speed, the auxiliary power generated by the driving of the motor can be applied to the automatic centrifugal clutch after the rotation of the clutch shoe and hence the centrifugal force have increased for the delay time. Thus, in the case where the automatic centrifugal clutch has been completely engaged at a relatively low speed, for example in the case of starting to run on a downward slope, the auxiliary power can be applied to the automatic centrifugal clutch after the friction force of the clutch shoe has sufficiently increased. Therefore, according to the present twenty-first aspect, the power from the engine and the auxiliary power from the motor can be more reliably transmitted to the rear wheel.

According to the embodiment of the twenty-second aspect, it is possible to prevent the motor, which is not driving to generate auxiliary power, from serving as a load on the engine, which can stabilize the rotation of the engine in an idling state.

According to the embodiment of the twenty-third aspect, the motor is rotated after an engine start and before the engine speed reaches an idling speed, which reduces a load on the engine. Thus, the engine shifts to an idling state while rotating stably after an engine start, even if the motor is connected to the crankshaft. Therefore, the present twenty-third aspect can provide a hybrid motorcycle in which the series of operations, including starting the engine and the vehicle starting running and accelerating, can be performed smoothly.

According to the embodiment to of the twenty-fourth aspect, if the charge level of the battery is low, the battery can be charged when auxiliary power from the motor is not necessary, for example when the vehicle is at a halt. Thus, according to the present twenty-fourth aspect, the battery can be prevented from being over-discharged, and it is possible to secure electricity for use to cause the motor to generate auxiliary power next time.

The description above discloses, in order to provide a hybrid motorcycle with excellent start and acceleration performance in spite of including an automatic centrifugal clutch, an embodiment including: an automatic centrifugal clutch 216 which is interposed in a power transmission system between an engine 212 and a driving wheel; a motor 213, which has a function to generate electricity and also is supplied with electricity from a battery 223 to generate auxiliary power, is connected to a crankshaft 236 of the engine 212; an accelerator operation amount detection means is provided for detecting the accelerator operation amount; an input side rotational speed detection means is provided for detecting as input side rotational speed the rotational speed of an input side rotary body of the clutch 216 or a rotary body for rotation in sync with the input side rotary body; an output side rotational speed detection means is provided for detecting as output side rotational speed the rotational speed of an output side rotary body of the clutch 216 or a rotary body for rotation in sync with the output side rotary body, and a motor control means is provided for supplying the motor 213 with a magnitude of electricity in accordance with the accelerator operation amount while the accelerator operating element is operated to start the hybrid motorcycle to run and after the input side rotational speed has agreed with the output side rotational speed.

Thus, the embodiment of the seventeenth aspect provides a hybrid motorcycle having a friction clutch interposed in a power transmission system between an engine and a driving wheel, and a motor for auxiliary power connected to a crankshaft of the engine, the motor having a power generation function and also being supplied with electricity from a battery to rotate, the hybrid motorcycle comprising: an accelerator operation amount detection means for detecting an accelerator operation amount of an accelerator operating element; an input side rotational speed detection means for detecting as input side rotational speed a rotational speed of an input side rotary body of the clutch or a rotary body for rotation in sync with the input side rotary body; an output side rotational speed detection means for detecting as output side rotational speed a rotational speed of an output side rotary body of the clutch or a rotary body for rotation in sync with the output side rotary body; and a motor control means for supplying the motor with a magnitude of electricity in accordance with the accelerator operation amount detected by the accelerator operation amount detection means while the accelerator operating element is operated to start the hybrid motorcycle to run and after the input side rotational speed detected by the input side rotational speed detection means has agreed with the output side rotational speed detected by the output side rotational speed detection means.

Further, the embodiment of the eighteenth aspect further comprising: an electricity supply restriction means for continuing supply of electricity to the motor for a predetermined electricity supply time and discontinuing the supply of electricity to the motor after the electricity supply time has elapsed.

Further, the embodiment of the nineteenth aspect further comprising: a charge level detection means for detecting a charge level of the battery, wherein the electricity supply restriction means shortens the electricity supply time as the charge level detected by the charge level detection means becomes lower.

Further, the embodiment of the twentieth aspect further comprising: a charging means for causing the motor to generate electricity after the electricity supply time has elapsed and charging the battery with the generated electricity.

Further, the embodiment of the twenty-first aspect provides a hybrid motorcycle, wherein the clutch is an automatic centrifugal clutch, the motor control means includes a delay means for delaying supplying the motor with electricity from the moment when the input side rotational speed has agreed with the output side rotational speed, by a delay time in accordance with a rotational speed, and the delay time is set to be longer as an engagement rotational speed is lower, the engagement rotational speed being defined as a rotational speed at which the input side rotational speed has agreed with the output side rotational speed.

Further, the embodiment of the twenty-second aspect provides a hybrid motorcycle, wherein the motor control means comprises a prerotation means for rotating the motor in conjunction with rotation of the engine after an engine start and in an operating state in which power from the motor is not applied to the crankshaft.

Further, the embodiment of the twenty-third aspect provides a hybrid motorcycle, wherein a rotation start timing, at which the prerotation means rotates the motor in conjunction with rotation of the engine, is set to a timing after an engine start and when an engine speed is lower than an idling speed.

Further, the embodiment of the twenty-fourth aspect provides a hybrid motorcycle further comprising: a charge level determination means for determining whether or not the charge level of the battery is lower than a predetermined minimum charge level; and a precharging means for causing the motor to generate electricity and charging the battery with the generated electricity after an engine start and in an operating state in which power from the motor is not applied to the crankshaft, if the charge level determination means determines that the charge level of the battery is lower than the minimum charge level.

## Claims

1. Straddle-type vehicle having hybrid drive system, in particular hybrid motorcycle, with internal combustion engine (12,112,212) for generating power to drive the vehicle, an electric motor (13,113,213) connected to a crankshaft (36) of the engine (12,112,212) and generating auxiliary power, with an automatic centrifugal clutch (16,116,216) interposed in a power transmission system between the engine (12,112,212) and a driving wheel, and with an acceleration data acquisition means (71,171,271) configured to acquire an accelerator operation amount,
wherein a motor control means (73,174,274) is configured to supply the motor (13,113,213) at a timing and with a magnitude of electricity in accordance with the detected accelerator operation amount such that the auxiliary power from the motor (13,113,213) is applied to the automatic centrifugal clutch (16,116,216) only with the clutch (16,116,216) completely engaged.

2. Straddle-type vehicle according to claim 1, wherein the electric motor (13,113,213) for generating auxiliary power connected to a crankshaft of the engine (12,112,212) has a power generation function and also is supplied with electricity from a battery to rotate.

3. Straddle-type vehicle according to claim 1 or 2, wherein the acceleration data acquisition means (71) is configured for acquiring as acceleration data at least the accelerator operation amount of an accelerator operating element, and wherein a delay time setting means (72) is provided for setting a delay time, by which start of operation of the motor (13) is delayed, according to the acceleration data acquired by the acceleration data acquisition means (71), and wherein the motor control means (73) is configured for supplying the motor (13) with a magnitude of electricity in accordance with the acceleration data after the delay time has elapsed from a moment when the accelerator operating element in an idling state was operated.

4. Straddle-type vehicle according to claim 3, wherein the acceleration data acquisition means (71) acquires the accelerator operation amount and an accelerator operation speed as the acceleration data, and the delay time setting means is configured to use a longer one of a first delay time and a second delay time, the first delay time being obtained based on the accelerator operation amount acquired by the acceleration data acquisition means (71), and the second delay time being obtained based on the accelerator operation speed acquired by the acceleration data acquisition means (71).

5. Straddle-type vehicle according to claim 1 or 2, wherein the acceleration data acquisition means (171) is configured for acquiring as acceleration data at least an accelerator operation amount of an accelerator operating element, and wherein a rotational speed detection means (172) is provided for detecting a rotational speed of the crankshaft or a rotary body for rotation in sync with the crankshaft, and wherein a rotational speed estimation means (173) is provided for estimating an engagement completion rotational speed, which is a rotational speed at which the automatic centrifugal clutch (116) is completely engaged, according to the acceleration data acquired by the acceleration data acquisition means (171), and wherein the motor control means (174) is configured for supplying the motor (113) with a magnitude of electricity in accordance with the acceleration data when the rotational speed detected by the rotational speed detection means has reached the engagement completion rotational speed estimated by the rotational speed estimation means (173).

6. Straddle-type vehicle according to claim 5, wherein the acceleration data acquisition means (171) is configured to acquire the accelerator operation amount and an accelerator operation speed as the acceleration data, and the rotational speed estimation means (173) is configured to estimate the engagement completion rotational speed based on a higher one of a first rotational speed and a second rotational speed, the first rotational speed being obtained based on the accelerator operation amount acquired by the-acceleration data acquisition means (171), and the second rotational speed being obtained based on the accelerator operation speed acquired by the acceleration data acquisition means (171).

7. Straddle-type vehicle according to claim 1 or 2, wherein the acceleraton operation amount detection means (271) is configured for detecting an accelerator operation amount of an accelerator operating element, and wherein an input side rotational speed detection means is provided for detecting as input side rotational speed a rotational speed of an input side rotary body of the clutch (216) or a rotary body for rotation in sync with the input side rotary body, and wherein an output side rotational speed detection means is provided for detecting as output side rotational speed a rotational speed of an output side rotary body of the clutch (216) or a rotary body for rotation in sync with the output side rotary body, and wherein the motor control means (274) is configured for supplying the motor (213) with a magnitude of electricity in accordance with the accelerator operation amount detected by the accelerator operation amount detection means while the accelerator operating element is operated to start the hybrid motorcycle to run and after the input side rotational speed detected by the input side rotational speed detection means has agreed with the output side rotational speed detected by the output side rotational speed detection means.

8. Straddle-type vehicle according to claim 7, wherein the motor control means (274) includes a delay means for delaying supplying the motor (213) with electricity from the moment when the input side rotational speed has agreed with the output side rotational speed, by a delay time in accordance with a rotational speed, and the delay time is set to be longer as an engagement rotational speed is lower, the engagement rotational speed being defined as a rotational speed at which the input side rotational speed has agreed with the output side rotational speed.

9. Straddle-type vehicle according to one of the claims 1 to 8, further comprising an electricity supply restriction means for continuing supply of electricity to the motor (213) for a predetermined electricity supply time and discontinuing the supply of electricity to the motor (213) after the electricity supply time has elapsed.

10. Straddle-type vehicle according to claim 9, further comprising a charge level detection means for detecting a charge level of the battery, wherein the electricity supply restriction means shortens the electricity supply time as the charge level detected by the charge level detection means becomes lower.

11. Straddle-type vehicle according to one of the claims 1 to 10, further comprising a charging means for causing the motor (13,113,213) to generate electricity after the electricity supply time has elapsed and charging the battery with the generated electricity.

12. Straddle-type vehicle according to one of the claims 1 to 11, wherein the motor control means (73,174,274) comprises a prerotation means for rotating the motor (13,113,213) in conjunction with rotation of the engine (12,112,212) after an engine start and in an operating state in which power from the motor (13,113,213) is not applied to the crankshaft.

13. Straddle-type vehicle according to claim 12, wherein a rotation start timing, at which the prerotation means rotates the motor (13,113,213) in conjunction with rotation of the engine (12,112,212), is set to a timing after an engine start and when an engine speed is lower than an idling speed.

14. Straddle-type vehicle according to claim 12 or 13, further comprising a charge level determination means for determining whether or not the charge level of the battery is lower than a predetermined minimum charge level, and a precharging means for causing the motor (13,113,213) to generate electricity and charging the battery with the generated electricity after an engine start and in an operating state in which power from the motor (13,113,213) is not applied to the crankshaft, if the charge level determination means determines that the charge level of the battery is lower than the minimum charge level.

15. Straddle-type vehicle according to one of the claims 1 to 14, wherein the automatic centrifugal clutch (16,116,216) is a friction clutch interposed in the power transmission system between the engine (12,112,212) and the driving wheel.

16. Method for operating a straddle-type vehicle having hybrid drive system, in particular hybrid motorcycle, with internal combustion engine (12,1.12,212) for generating power to drive the vehicle, an electric motor (13,113,213) connected to a crankshaft (36) of the engine (12,112,212) and generating auxiliary power, with an automatic centrifugal clutch (16,116,216) interposed in a power transmission system between the engine (12,112,212) and a driving wheel, wherein an acceleration data acquisition means (71,171,271) acquires an accelerator operation amount, and
wherein the motor (13,113,213) is supplied with electricity at a timing and with a magnitude of electricity in accordance with the detected accelerator operation amount such that the auxiliary power from the motor (13,113,213) is applied to the automatic centrifugal clutch (16,116,216) only with the clutch (16,116,216) completely engaged.

## Patentansprüche

1. Fahrzeug vom Spreizsitz- Typ mit Hybrid- Antriebssystem, insbesondere ein Hybrid- Motorrad, mit einer Brennkraftmaschine (12, 112, 212) zum Erzeugen einer Antriebsleistung, um das Fahrzeug anzutreiben, einem Elektromotor (13, 113, 213), verbunden mit der Kurbelwelle (36) der Brennkraftmaschine (12, 112, 212) und der eine Hilfsantriebsleistung erzeugt, mit einer automatischen Zentrifugalkupplung (16, 116, 216), eingesetzt in ein Antriebsübertragungssystem zwischen der Brennkraftmaschine (12, 112, 212) und einem Antriebsrad, und mit einer Beschleunigungsdaten- Erfassungseinrichtung (71, 171, 271), konfiguriert, einen Beschleunigungsvorgangsbetrag zu erfassen,
wobei eine Motorsteuerungseinrichtung (73, 174, 274) konfiguriert ist, den Motor (13, 113, 213) zu einem Zeitpunkt und mit einer Elektrizitätsgröße in Übereinstimmung mit dem erfassten Beschleunigungsvorgangsbetrag derart zu versorgen, dass die Hilfsantriebsleistung von dem Motor (13, 113, 213) auf die automatische Zentrifugalkupplung (16, 116, 216) nur dann aufgebracht wird, wenn die Kupplung (16, 116, 216) vollständig im Eingriff ist.

2. Fahrzeug vom Spreizsitz- Typ nach Anspruch 1, wobei der Elektromotor (13, 113, 213) zum Erzeugen der Hilfsantriebsleistung, verbunden mit der Kurbelwelle der Brennkraftmaschine (12, 112, 212), eine Antriebsleistungserzeugungsfunktion hat und mit Elektrizität von einer Batterie versorgt wird, um sich zu drehen.

3. Fahrzeug vom Spreizsitz- Typ nach Anspruch 1 oder 2, wobei die Beschleunigungsdaten- Erfassungseinrichtung (71) konfiguriert ist zum Erfassen als Beschleunigungsdaten zumindest den Betrag der Beschleuniger- Betätigung eines Beschleuniger- Betätigungselementes und wobei eine Verzögerungszeit- Festlegungseinrichtung (72) zum Festlegen einer Verzögerungszeit vorgesehen ist, durch die der Start des Betriebs des Motors (13) in Übereinstimmung mit den Beschleunigungsdaten, erfasst durch die Beschleunigungsdaten- Erfassungseinrichtung (71), verzögert wird, und wobei die Motorsteuerungseinrichtung (73) konfiguriert ist, den Motors (13) mit einer Elektrizitätsgröße in Übereinstimmung mit den Beschleunigungsdaten zu versorgen, nachdem die Verzögerungszeit von dem Moment vergangen ist, wenn das Beschleuniger- Betätigungselement in einem Leerlaufzustand betätigt wurde.

4. Fahrzeug vom Spreizsitz- Typ nach Anspruch 3, wobei die Beschleunigungsdaten- Erfassungseinrichtung (71) den Betrag der Beschleuniger- Betätigung und eine Beschleuniger- Betätigungsgeschwindigkeit als die Beschleunigungsdaten erfasst und die Verzögerungszeit- Festlegungseinrichtung konfiguriert ist, eine längere von einer ersten Verzögerungszeit oder einer zweiten Verzögerungszeit zu verwenden, wobei die erste Verzögerungszeit auf der Grundlage des Betrages der Beschleuniger- Betätigung durch die Beschleunigungsdaten- Erfassungseinrichtung (71) erhalten wird und die zweite Verzögerungszeit auf der Grundlage der Beschleuniger- Betätigungsgeschwindigkeit, erfasst durch die Beschleunigungsdaten- Erfassungseinrichtung (71), erhalten wird.

5. Fahrzeug vom Spreizsitz- Typ nach Anspruch 1 oder 2, wobei die Beschleunigungsdaten- Erfassungseinrichtung (171) konfiguriert ist, als Beschleunigungsdaten zumindest einen Betrag der Beschleuniger- Betätigung eines Beschleuniger-Betätigungselementes zu erfassen und wobei eine Drehzahlerfassungseinrichtung (172) vorgesehen ist, um eine Drehzahl der Kurbelwelle oder eines Drehkörpers in synchroner Rotation mit der Kurbelwelle zu erfassen, und wobei eine Drehzahl- Abschätzungseinrichtung (173) zum Abschätzen einer Eingriffsbeendigungsdrehzahl vorgesehen ist, die eine Drehzahl ist, bei der die automatische Zentrifugalkupplung (116) vollständig im Eingriff ist, entsprechend der Beschleunigungsdaten, erfasst durch die Beschleunigungsdaten- Erfassungseinrichtung (171), und wobei die Motorsteuerungseinrichtung (174) konfiguriert ist, um den Motor (113) mit einer Elektrizitätsgröße in Übereinstimmung mit den Beschleunigungsdaten zu versorgen, wenn die Drehzahl, erfasst durch die Drehzahlerfassungseinrichtung die Eingriffsbeendigungsdrehzahl , abgeschätzt durch die Drehzahl- Abschätzungseinrichtung (173), erreicht hat.

6. Fahrzeug vom Spreizsitz- Typ nach Anspruch 5, wobei die Beschleunigungsdaten- Erfassungseinrichtung (171) konfiguriert ist, den Betrag der Beschleuniger-Betätigung und eine Beschleuniger- Betätigungsgeschwindigkeit als die Beschleunigungsdaten zu erfassen, und die Drehzahl- Abschätzungseinrichtung (173) konfiguriert ist, die Eingriffsbeendigungsdrehzahl auf der Grundlage einer höheren von einer ersten Drehzahl oder einer zweiten Drehzahl abzuschätzen, wobei die erste Drehzahl auf der Grundlage des Betrages der Beschleuniger- Betätigung, erfasst durch die Beschleunigungsdaten- Erfassungseinrichtung (171), erhalten wird und die zweite Drehzahl auf der Grundlage der Beschleuniger- Betätigungsgeschwindigkeit, erfasst durch die Beschleunigungsdaten- Erfassungseinrichtung (171), erhalten wird.

7. Fahrzeug vom Spreizsitz- Typ nach Anspruch 1 oder 2, wobei die Beschleuniger-Betätigungsbetrag- Erfassungseinrichtung (271) konfiguriert ist, einen Betrag der Beschleuniger- Betätigung eines Beschleuniger- Betätigungselementes zu erfassen, und wobei eine eingangsseitige- Drehzahlerfassungseinrichtung vorgesehen ist, zum Erfassen als eingangsseitige Drehzahl eine Drehzahl eines eingangsseitigen Drehkörper der Kupplung (216) oder eines Drehkörpers für eine synchrone Rotation mit dem eingangsseitigen Drehkörper und wobei eine ausgangsseitige Drehzahlerfassungseinrichtung vorgesehen ist, um als ausgangsseitige Drehzahl eine Drehzahl eines ausgangsseitigen Drehkörpers der Kupplung (216) oder eines Drehkörpers in synchronen Rotation mit dem Ausgangsseitendrehkörper zu erfassen und wobei die Motorsteuerungseinrichtung (274) konfiguriert ist, den Motor (213) mit einem Betrag von Elektrizität in Übereinstimmung mit dem Betrag der Beschleuniger- Betätigung, erfasst durch die Beschleunigerbetrag- Erfassungseinrichtung, zu versorgen, während das Beschleuniger- Betätigungselement betätigt wird, das Hybrid- Motorrad zu starten, um zu fahren, nachdem die eingangsseitige Drehzahl, erfasst durch die eingangsseitige Drehzahl- Erfassungseinrichtung übereinstimmt, mit der ausgangsseitigen Drehzahl, erfasst durch die ausgangsseitige Drehzahl- Erfassungseinrichtung.

8. Fahrzeug vom Spreizsitz- Typ nach Anspruch 7, wobei die Motorsteuerungseinrichtung (274) eine Verzögerungseinrichtung enthält, um die Versorgung des Motors (213) mit Elektrizität von dem Moment durch eine Verzögerungszeit in Übereinstimmung mit einer Drehzahl zu verzögern, wenn die eingangsseitige Drehzahl mit der ausgangsseitigen Drehzahl übereinstimmt hat und die Verzögerungszeit festgelegt ist, länger zu sein, wenn eine Eingriffsdrehzahl niedriger ist, wobei die Eingriffsdrehzahl als eine Drehzahl definiert ist, bei der die eingangsseitige Drehzahl mit der ausgangsseitigen Drehzahl übereingestimmt hat.

9. Fahrzeug vom Spreizsitz- Typ nach einem der Ansprüche 1 bis 8, außerdem aufweisend eine Elektrizitätszuführungs- Begrenzungseinrichtung zur fortdauernden Elektrizitätszuführung zu dem Motor (213) für eine vorbestimmte Elektrizitätszuführungszeit und zum Unterbrechen der Elektrizitätszuführung zu dem Motor (213), nachdem die Elektrizitätszuführungszeit vergangen ist.

10. Fahrzeug vom Spreizsitz- Typ nach Anspruch 9, außerdem aufweisend eine Ladungsniveau- Erfassungseinrichtung zum Erfassen eines Ladungsniveaus der Batterie, wobei die Elektrizitätszuführungs- Begrenzungseinrichtung die Elektrizitätszuführungszeit verkürzt, wenn das Ladungsniveau, erfasst durch die Ladungsniveau- Erfassungseinrichtung, niedriger wird.

11. Fahrzeug vom Spreizsitz- Typ nach einem der Ansprüche 1 bis 10, außerdem aufweisend eine Ladungseinrichtung, um den Motor (13, 113, 213) zu veranlassen, Elektrizität zu erzeugen, nachdem die Elektrizitätszuführungszeit vergangen ist und die Batterie mit der erzeugten Elektrizität aufzuladen.

12. Fahrzeug vom Spreizsitz- Typ nach einem der Ansprüche 1 bis 11, wobei die Motorsteuerungseinrichtung (73, 174, 274) eine Vor- Rotationseinrichtung aufweist zum Rotieren des Motors (13, 113, 213) in Verbindung mit der Rotation der Brennkraftmaschine (12, 112, 212) nach einem Brennkraftmaschinenstart und in einem Betriebszustand, in dem Antriebsenergie von dem Motor (13, 113, 213) nicht auf die Kurbelwelle aufgebracht wird.

13. Fahrzeug vom Spreizsitz- Typ nach Anspruch 12, wobei ein Rotationsstartzeitpunkt, bei dem die Vor- Rotationseinrichtung den Motor (13, 113, 213) in Verbindung mit der Rotation der Brennkraftmaschine (12, 112, 212) rotiert, auf einen Zeitpunkt nach einem Brennkraftmaschinen- Start und wenn eine Motordrehzahl niedriger als eine Leerlaufdrehzahl ist, festgelegt ist.

14. Fahrzeug vom Spreizsitz- Typ nach Anspruch 12 oder 13, außerdem aufweisend eine Ladungsniveau- Bestimmungseinrichtung, um festzustellen, ob das Ladungsniveau der Batterie niedriger als das vorbestimmte Ladungsniveau ist, oder nicht, und eine Vor- Ladeeinrichtung, um den Motor (13, 113, 213) zu veranlassen, Elektrizität zu erzeugen und die Batterie mit der erzeugten Elektrizität nach einem Motorstart und in einem Betriebszustand aufzuladen, in dem die Antriebsenergie von dem Motor (13, 113, 213) nicht auf die Kurbelwelle aufgebracht wird, wenn die Ladungsniveau- Bestimmungseinrichtung feststellt, dass das Ladungsniveau der Batterie niedriger als das minimale Ladungsniveau ist.

15. Fahrzeug vom Spreizsitz- Typ nach einem der Ansprüche 1 bis 14, wobei die automatische Zentrifugal kupplung (16, 116, 216) eine Reibungskupplung ist, eingesetzt in das Leistungsübertragungssystem zwischen die Brennkraftmaschine (12, 112, 212) und das Antriebsrad.

16. Verfahren zum Betrieb eines Fahrzeuges vom Spreizsitz- Typ mit einem Hybrid-Antriebssystem, insbesondere ein Hybrid- Motorrad, mit einer Brennkraftmaschine (12, 112, 212) zum Erzeugen einer Antriebsleistung, um das Fahrzeug anzutreiben, wobei einen Elektromotor (13, 113, 213), verbunden mit einer Kurbelwelle (36) der Brennkraftmaschine (12, 112, 212) und zum Erzeugen einer Hilfsantriebsleistung, mit einer automatischen Zentrifugalkupplung (16, 116, 216), eingesetzt in ein Antriebsübertragungssystem zwischen der Brennkraftmaschine (12, 112, 212) und einem Antriebsrad, wobei eine Beschleunigungsdaten- Erfassungseinrichtung (71, 171, 271) einen Betrag einer Beschleuniger- Betätigung erfasst, und
wobei der Motor (13, 113, 213) mit Elektrizität zu einem Zeitpunkt und mit einer Elektrizitätsgröße in Übereinstimmung mit dem erfassten Betrag der Beschleuniger- Betätigung derart versorgt wird, dass die Hilfsantriebsleistung von dem Motor (13, 113, 213) auf die automatische Zentrifugalkupplung (16, 116, 216) nur dann aufgebracht wird, wenn die Kupplung (16, 116, 216) vollständig im- Eingriff ist.

## Revendications

1. Véhicule de type à monter à califourchon muni d'un système d'entraînement hybride, en particulier motocycle hybride, comportant un moteur à combustion interne (12, 112, 212) pour générer la puissance d'entraînement du véhicule, un moteur électrique (13, 113, 213) raccordé à un vilebrequin (36) du moteur (12, 112, 212) et générant une puissance auxiliaire, un embrayage centrifuge automatique (16, 116, 216) interposé dans un système de transmission de puissance entre le moteur (12, 112, 212) et une roue motrice, et un moyen d'acquisition de données d'accélération (71, 171, 271) configuré pour acquérir une quantité opérationnelle d'accélérateur,
dans lequel un moyen de commande de moteur (73, 174, 274) est adapté pour alimenter le moteur (13, 113, 213) en synchronisation avec et à une grandeur d'électricité conforme à la valeur opérationnelle d'accélérateur détectée de telle sorte que la puissance auxiliaire du moteur (13, 113, 213) est appliquée à l'embrayage centrifuge automatique (16, 116, 216) uniquement quand l'embrayage (16, 116, 216) est complètement engagé.

2. Véhicule de type à monter à califourchon selon la revendication 1, dans lequel le moteur électrique (13, 113, 213) pour générer une puissance auxiliaire raccordé à un vilebrequin du moteur (12, 112, 212) possède une fonction de production de puissance et est également alimenté en électricité par une batterie pour tourner.

3. Véhicule de type à monter à califourchon selon la revendication 1 ou 2, dans lequel le moyen d'acquisition de données d'accélération (71) est adapté pour acquérir comme données d'accélération au moins la valeur opérationnelle d'accélérateur d'un élément opérationnel de l'accélérateur, et dans lequel un moyen de réglage de temps de retard (72) est installé pour régler un temps de retard, par lequel la mise en service du moteur (13) est retardée, en fonction des données d'accélération acquises par le moyen d'acquisition de données d'accélération (71), et dans lequel le moyen de commande de moteur (73) est adapté pour alimenter le moteur (13) avec une grandeur d'électricité conforme aux données d'accélération après que le temps de retard s'est écoulé à partir du moment où l'élément opérationnel d'accélérateur au ralenti a été mis en fonctionnement.

4. Véhicule de type à monter à califourchon selon la revendication 3, dans lequel le moyen d'acquisition de données d'accélération (71) acquiert la valeur opérationnelle d'accélérateur et une vitesse opérationnelle de l'accélérateur comme données d'accélération, et le moyen de réglage du temps de retard est adapté pour utiliser un temps de retard plus long d'un premier et d'un second temps de retard, le premier temps de retard étant obtenu en se fondant sur la valeur opérationnelle d'accélérateur acquise par le moyen d'acquisition de données (71) et le second temps de retard étant obtenu en se fondant sur la vitesse opérationnelle d'accélérateur acquise par le moyen d'acquisition de données (71).

5. véhicule de type à monter à califourchon selon la revendication 1 ou 2, dans lequel le moyen d'acquisition de données d'accélération (171) est adapté pour acquérir comme données d'accélération au moins une valeur opérationnelle d'accélérateur d'un élément opérationnel d'accélérateur, et dans lequel un moyen de détection de vitesse de rotation (172) est installé pour détecter une vitesse de rotation du vilebrequin ou d'un corps rotatif pour tourner en synchronisation avec le vilebrequin, et dans lequel un moyen d'estimation de la vitesse de rotation (173) est installé pour estimer une vitesse de rotation d'achèvement d'engagement, qui est une vitesse de rotation à laquelle l'embrayage centrifuge automatique (116) est complètement engagé, en fonction des données d'accélération acquises par le moyen d'acquisition de données d'accélération (171), et dans lequel le moyen de commande du moteur (174) est adapté pour alimenter le moteur (113) avec une grandeur d'électricité conforme aux données d'accélération quand la vitesse de rotation détectée par le moyen de détection de la vitesse de rotation a atteint la vitesse de rotation d'achèvement d'engagement estimée par le moyen d'estimation de vitesse de rotation (173).

6. Véhicule de type à monter à califourchon selon la revendication 5, dans lequel le moyen d'acquisition de données d'accélération (171) est adapté pour acquérir la valeur opérationnelle d'accélérateur et une vitesse opérationnelle d'accélérateur en tant que données d'accélérateur, et le moyen d'estimation de la vitesse de rotation (173) est adapté pour estimer la vitesse de rotation d'achèvement d'engagement en se fondant sur une vitesse de rotation élevée parmi une première et une seconde vitesse de rotation, la première vitesse de rotation étant obtenue en se fondant sur la valeur opérationnelle d'accélérateur acquise par le moyen d'acquisition de données d'accélération (171), et la seconde vitesse de rotation étant obtenue en se fondant sur la vitesse opérationnelle d'accélérateur acquise par le moyen d'acquisition de données d'accélération (171).

7. Véhicule de type à monter à califourchon selon la revendication 1 ou 2, dans lequel le moyen de détection de la valeur opérationnelle d'accélérateur (271) est adapté pour détecter une valeur opérationnelle d'accélérateur d'un élément opérationnel d'accélérateur, et dans lequel un moyen de détection de la vitesse opérationnelle latérale d'entrée est installé pour détecter une vitesse de rotation latérale d'entrée d'un corps rotatif latéral d'entrée de l'embrayage (216) ou d'un corps rotatif pour une rotation synchronisée avec le corps rotatif latéral d'entrée, et dans lequel un moyen de détection de la vitesse de rotation latérale de sortie est installé pour détecter comme vitesse de rotation latérale de sortie une vitesse de rotation d'un corps rotatif latéral de sortie de l'embrayage (216) ou un corps rotatif pour une rotation synchronisée avec le corps rotatif latéral de sortie, et dans lequel le moyen de commande du moteur (274) est adapté pour alimenter le moteur (213) avec une grandeur d'électricité conforme à la valeur opérationnelle d'accélérateur détectée par le moyen de détection de la valeur opérationnelle d'accélérateur pendant que l'élément opérationnel d'accélérateur fonctionne pour démarrer l'exécution du motocycle hybride et après que la vitesse de rotation latérale d'entrée détectée par le moyen de détection de la vitesse de rotation d'entrée a accepté la vitesse de rotation latérale de sortie détectée par le moyen de détection de la vitesse de rotation latérale de sortie.

8. Véhicule de type à monter à califourchon selon la revendication 7, dans lequel le moyen de commande de moteur (274) comprend un moyen de retardement pour retarder l'alimentation du moteur (213) en électricité à partir du moment où la vitesse de rotation latérale d'entrée a accepté la vitesse de rotation latérale de sortie, d'un retard conforme à la vitesse de rotation, et le délai est réglé pour être plus long quand une vitesse de rotation d'engagement est plus basse, la vitesse de rotation d'engagement étant définie comme une vitesse de rotation à laquelle la vitesse de rotation d'entrée a accepté la vitesse de rotation latérale de sortie.

9. Véhicule de type à monter à califourchon selon l'une des revendications 1 à 8, comprenant en outre un moyen de restriction de l'alimentation électrique pour continuer l'alimentation électrique du moteur (213) pour un temps d'alimentation électrique prédéterminé et cesser l'alimentation électrique du moteur (213) après que le temps d'alimentation électrique s'est écoulé.

10. Véhicule de type à monter à califourchon selon la revendication 9, comprenant en outre un moyen de détection de niveau de charge pour détecter un niveau de charge de la batterie, dans lequel le moyen de restriction de l'alimentation électrique raccourcit le temps d'alimentation quand le niveau de charge détecté par le moyen de détection du niveau de charge se réduit.

11. Véhicule de type à monter à califourchon selon l'une des revendications 1 à 10, comprenant en outre un moyen de recharge pour faire générer de l'électricité au moteur (13, 113, 213) après que le temps d'alimentation électrique s'est écoulé et charger la batterie avec l'électricité générée.

12. Véhicule de type à monter à califourchon selon l'une des revendications 1 à 11, dans lequel le moyen de commande de moteur (73, 174, 274) comprend un moyen de pré-rotation pour faire tourner le moteur (13, 113, 213) en conjonction avec la rotation du moteur (12, 112, 212) après un démarrage du moteur dans un état de fonctionnement dans lequel la puissance du moteur (13, 113, 213) n'est pas appliquée au vilebrequin.

13. Véhicule de type à monter à califourchon selon la revendication 12, dans lequel le moment du démarrage de rotation, auquel le moyen de pré-rotation fait tourner le moteur (13, 113, 213) en conjonction avec la rotation du moteur (12, 112, 212), est réglé sur un moment après un démarrage du moteur et quand une vitesse de moteur est plus basse qu'une vitesse au ralenti.

14. Véhicule de type à monter à califourchon selon la revendication 12 ou 13, comprenant en outre un moyen de détermination de niveau de charge pour déterminer si le niveau de charge de la batterie est ou n'est pas plus bas qu'un niveau de charge minimum prédéterminé, et un moyen de préchargement pour faire générer au moteur (13, 113, 213) de l'électricité et charger la batterie avec l'électricité générée après un démarrage du moteur et dans un état de fonctionnement dans lequel la puissance du moteur (13, 113, 213) n'est pas appliquée au vilebrequin si le moyen de détermination du niveau de charge détermine que le niveau de charge de la batterie est plus bas que le niveau de charge minimum.

15. Véhicule de type à monter à califourchon selon l'une des revendications 1 à 14, dans lequel l'embrayage centrifuge automatique (16, 116, 216) est un embrayage à friction interposé dans le système de transmission de puissance entre le moteur (12, 112, 212) et la roue motrice.

16. Procédé de fonctionnement d'un véhicule de type à monter à califourchon muni d'un système d'entraînement hybride, en particulier un motocycle hybride, comportant un moteur à combustion interne (12, 112, 212) pour générer de la puissance pour entraîner le véhicule, un moteur électrique (13, 113, 213) raccordé à un vilebrequin (36) du moteur (12, 112, 212) et générant une puissance auxiliaire, un embrayage centrifuge automatique (16, 116, 216) interposé dans un système de transmission de puissance entre le moteur (12, 112, 212) et une roue motrice, dans lequel un moyen d'acquisition de données d'accélération (71, 171, 271) acquiert une valeur opérationnelle d'accélérateur, et
dans lequel le moteur (13, 113, 213) est alimenté en électricité à un moment et avec une grandeur d'électricité conformes à la valeur opérationnelle d'accélérateur détectée de telle sorte que la puissance auxiliaire du moteur (13, 113, 213) est appliquée à l'embrayage centrifuge automatique (16, 116, 216) uniquement quand l'embrayage (16, 116, 216) est complètement engagé.
